# EUROPÄISCHE PATENTSCHRIFT

(11) **EP 4 073 407 B1**
(45) Veröffentlichungstag und Bekanntmachung des Hinweises auf die Patenterteilung: **14.06.2023**
(21) Anmeldenummer: 21708559.6
(22) Anmeldetag: 16.02.2021
(51) Int. Cl.: F16K 15/18, F16K 15/06

(54) **VORRICHTUNG ZUM HALTEN EINES SCHAFTS EINES HYDRAULIKZYLINDERS IN STELLUNG UND VERFAHREN ZUM ENTSPERREN UND ABSPERREN EINES SEKUNDÄR-RÜCKSCHLAGVENTILS DER VORRICHTUNG**
DEVICE FOR HOLDING A STEM OF A HYDRAULIC CYLINDER IN POSITION, AND METHOD FOR UNBLOCKING AND BLOCKING A SECONDARY CHECK VALVE OF THE DEVICE
DISPOSITIF DE MAINTIEN D'UNE TIGE D'UN VÉRIN HYDRAULIQUE EN POSITION, ET PROCÉDÉ DE DÉBLOCAGE ET DE BLOCAGE D'UN CLAPET DE NON-RETOUR SECONDAIRE DU DISPOSITIF

(30) Priorität: 07.04.2020 DE 102020109615
(43) Veröffentlichungstag der Anmeldung: 19.10.2022
(73) Patentinhaber: Neumeister Hydraulik GmbH, 74196 Neuenstadt (DE)
(72) Erfinder: WEIS, Michael, 74081 Heilbronn (DE)
(74) Vertreter: Truckenmüller, Frank
(86) Internationale Anmeldenummer: PCT/DE2021/100153
(87) Internationale Veröffentlichungsnummer: WO 2021/204319

(56) Entgegenhaltungen:
- DE-A1-102009 017 031
- DE-T2- 69 727 307
- US-A1- 2019 032 680

## Beschreibung

Die Erfindung betrifft eine Vorrichtung zum Halten eines mit einem Kolben versehenen Schafts eines zumindest einfach wirkenden Hydraulikzylinders in einer gewünschten Stellung relativ zu dem Zylinder, der mehrere, vorzugsweise zwei, Arbeitskammern für ein Antriebsfluid, die durch den Kolben voneinander abgetrennt sind, wobei der Schaft zusammen mit dem Kolben längs des Hydraulikzylinders bewegbar ist, umfassend einen Hydraulikblock, der eine Schleusenkammer umschließt, die eine erste Öffnung aufweist, die mit einem Primär-Rückschlagventil versehen ist und in hydraulischer Verbindung mit einer Arbeitskammer der Arbeitskammern steht, sowie, vorzugsweise gegenüberliegend, eine zweite Öffnung aufweist, die mit einem Sekundär-Rückschlagventil versehen ist und in hydraulischer Verbindung mit einem Hydraulikeinlass zur Versorgung der Arbeitskammer mit dem Antriebsfluid steht, und wobei das Primär-Rückschlagventil und das Sekundär-Rückschlagventil in Reihe geschaltet bzw. hintereinander angeordnet sind, und wobei das Sekundär-Rückschlagventil einen, vorzugsweise zentralen, insbesondere sich in Richtung seiner Sekundär-Steuerschaft-Längsachse erstreckenden, Sekundär-Steuerschaft aufweist, der in einer Axialrichtung, vorzugsweise auch in Richtung seiner Sekundär-Steuerschaft-Längsachse, relativ zu dem Hydraulikblock bewegbar, vorzugsweise verschiebbar, ist und der mit einem Sekundär-Ventilkörper versehen ist, der mittels eines Entsperrmittels, vorzugsweise eines Steuerschafts eines Steuerkolbens, von seiner Sekundär-Ventilkörper-Schließstellung, in welcher er beaufschlagt durch eine Federkraft einer Sekundär-Feder an einem, vorzugsweise kreisförmigen, Sekundär-Ventilsitz des Hydraulikblocks anliegt, gegen die Federkraft der Sekundär-Feder in der Axialrichtung relativ zu dem Hydraulikblock in eine Sekundär-Ventilkörper-Öffnungsstellung bewegbar, vorzugsweise verschiebbar, ist, in welcher ein Durchfluss des Antriebsfluids durch das Sekundär-Rückschlagventil möglich ist, und wobei der Sekundär-Ventilkörper mit einer federelastisch komprimierbaren, vorzugsweise ringförmigen, insbesondere kreisförmigen, beispielsweise torusförmigen, Dichtung, vorzugsweise aus einem Elastomer, versehen ist, die in der Sekundär-Ventilkörper-Schließstellung des Sekundär-Ventilkörpers an einer, vorzugsweise kreisförmigen, Anlagefläche des Sekundär-Ventilsitzes des Hydraulikblocks dicht anliegt, so dass das Sekundär-Rückschlagventil gegen einen Durchfluss des Antriebsfluids abgesperrt ist, und wobei der Sekundär-Steuerschaft sich in der Sekundär-Ventilkörper-Schließstellung des Sekundär-Ventilkörpers, also bei geschlossenem Sekundär-Rückschlagventil, in einer Sekundär-Steuerschaft-Schließstellung befindet und sich in der Sekundär-Ventilkörper-Öffnungsstellung des Sekundär-Ventilkörpers, also bei geöffneten Sekundär-Rückschlagventil, in einer Sekundär-Steuerschaft-Öffnungsstellung befindet, und wobei das Primär-Rückschlagventil einen Primär-Ventilkörper aufweist, der von seiner Primär-Ventilkörper-Schließstellung, in welcher er beaufschlagt durch eine Federkraft einer Primär-Feder an einem, vorzugsweise kreisförmigen, Primär-Ventilsitz des Hydraulikblocks anliegt, direkt oder indirekt bzw. unmittelbar oder mittelbar mittels des Sekundär-Steuerschafts des Sekundär-Rückschlagventils gegen die Federkraft der Primär-Feder relativ zu dem Hydraulikblock in eine Primär-Ventilkörper-Öffnungsstellung bewegbar ist, in welcher ein Durchfluss des Antriebsfluids durch das Primär-Rückschlagventil möglich ist, und wobei in der Primär-Ventilkörper-Öffnungsstellung des Primär-Ventilkörpers und in der Sekundär-Ventilkörper-Öffnungsstellung des Sekundär-Ventilkörpers ein Durchgangsweg für das Antriebsfluid eröffnet ist, so dass das Antriebsfluid von dem Hydraulikeinlass über die Schleusenkammer zu der Arbeitskammer strömen kann, und umgekehrt, und wobei ein dem Primär-Ventilkörper zugewandtes freies Sekundär-Steuerschaft-Ende des Sekundär-Steuerschafts in der Sekundär-Ventilkörper-Schließstellung des Sekundär-Ventilkörpers und in der Primär-Ventilkörper-Schließstellung des Primär-Ventilkörpers in einem axialen Abstand zu dem Primär-Ventilkörper angeordnet ist.

Zum Absichern von hydraulisch angehobenen Lasten sind aus der Praxis beispielsweise hydraulisch entsperrbare Rückschlagventile, Kugelhähne und 2/2-Wege Sitzventile bekannt geworden. Sie dienen dazu, das Hydraulikfluid-Volumen wenn möglich leckagefrei abzusperren, damit aus dem jeweiligen Druckraum des Zylinders kein Hydraulikfluid unbeabsichtigt entweichen kann. Gemeinsam haben alle Ventile und einfach vorhandenen Einrichtungen, dass Sie bei Verschmutzung, Schwingungen (Vibrationen), Druck- und Temperaturschwankungen oder Abnutzung versagen können und somit ihre Funktion nicht richtig oder gar nicht erfüllen. Aus der Praxis sind auch Ventile in einer sogenannten redundanten Ausführung mit 2 Sperreinrichtungen in Reihe bekannt geworden, um die Funktionssicherheit zu verbessern bzw. auch Ventile mit einer ElastomerAbdichtung, um eine Leckagefreiheit zu erreichen.

Aus der WO 2017/191380 A1 bzw. aus der parallelen US 2019/0032680 A1 ist eine Vorrichtung zum Halten eines mit einem Kolben versehen Schafts eines doppeltwirkenden Hydraulikzylinders bekannt geworden. Diese Vorrichtung umfasst ein Doppel-Rückschlagventil, das aus zwei Rückschlagventilanordnungen gebildet ist, von denen jede Rückschlagventilanordnung aus zwei in Reihe angeordneten Rückschlagventilen aufgebaut ist, nämlich jeweils aus einem Primärventil und einem Sekundärventil. Jedes dieser Rückschlagventile ist in einer konventionellen Ausführung als Kugelsitzventil mit einer Ventilkörper-Kugel aus Metall und mit einem zugeordneten Ventilsitz aus Metall gestaltet, mittels denen in der jeweiligen Schließstellung eine metallische Abdichtung des Durchström-Kanals erreichbar ist. Solche konventionellen metallischen Abdichtungen sind immer anfällig auf Beschädigungen insbesondere des Ventilsitzes, was insbesondere über der Einsatzzeit zu einer Undichtigkeit führen kann. Auch bei nicht optimaler Oberfläche und/oder Form insbesondere des Ventilsitzes kann es zu Undichtigkeiten kommen.

Aus der WO 98/20260 A und der daraus resultierenden EP 0 935 715 B1 und deren deutschen Übersetzung DE 697 27 307 T2 sowie aus der oben genannten US 2019/0032680 A1 ist eine Vorrichtung der eingangs bzw. im Oberbegriff des Anspruches 1 genannten Art bekannt geworden. Diese Vorrichtung umfasst zwei Rückschlagventile in Reihe, nämlich ein als konventionelles Kugelsitzventil gestaltetes Primär-Rückschlagventil und ein Sekundär-Rückschlagventil (Sicherheitsventil) mit einer gegenüber dem Primär-Rückschlagventil verzögerten Schließfunktion und mit einer Elastomerabdichtung. Aus den vorstehend genannten Gründen kann es bei einem solchen Primär-Rückschlagventil zu einer Undichtigkeit kommen. Dies führt dann zur Ausbildung eines komprimierten Ölvolumens in dem Raum zwischen dem Primär-Rückschlagventil und dem Sekundär-Rückschlagventil. Beim Aufsteuern des Sekundär-Rückschlagventils, um die Last abzusenken, kann es zur Ausbildung einer Dekompressionsströmung des komprimierten Ölvolumens kommen und infolgedessen zu einem Verschleiß und/oder zu einer Verlagerung der elastomeren Dichtung, was zu einem Funktionsverlust des Sekundärventiles führen kann.

Es ist eine Aufgabe der Erfindung eine Vorrichtung der eingangsgenannten Art, ein Verfahren zum Entsperren eines Sekundär-Rückschlagventils der Vorrichtung und ein Verfahren zum Absperren eines Sekundär-Rückschlagventils der Vorrichtung zur Verfügung zu stellen, mit dem bzw. denen eine größere Funktionssicherheit über einen längere Einsatzzeitraum und mithin eine größere Sicherheit zum Halten des insbesondere unter Last stehenden Schafts des Hydraulikzylinders in einer gewünschten Stellung erzielbar ist.

Diese Aufgabe wird durch die unabhängigen Ansprüche gelöst. Insbesondere wird die Aufgabe durch eine Vorrichtung mit den eingangs genannten Merkmalen dadurch gelöst, dass das Sekundär-Rückschlagventil eine erste Drossel umfasst, die, in einer ersten Fließrichtung des Antriebsfluids von dem Hydraulikeinlass durch die Schleusenkammer in die erste Arbeitskammer betrachtet, vor der Dichtung ausgebildet ist und die mit einem ersten Drosselkörper des Sekundär-Steuerschafts und mit einem ersten Drossel-Gegenkörper des Hydraulikblocks ausgebildet ist, und dass der Sekundär-Steuerschaft und der Hydraulikblock, derart aufeinander abgestimmt gestaltet sind, dass der erste Drosselkörper sich in der Sekundär-Steuerschaft-Öffnungsstellung in einer ersten Drosselkörper-Öffnungsstellung befindet, in welcher zwischen dem ersten Drosselkörper und dem ersten Drossel-Gegenkörper ein, vorzugsweise ringförmiger, insbesondere kreisförmiger, erster Drossel-Öffnungsspalt ausgebildet ist, und dass der erste Drosselkörper in der Sekundär-Steuerschaft-Schließstellung des Sekundär-Steuerschafts dem ersten Drossel-Gegenkörper des Hydraulikblocks unmittelbar gegenüber liegt und sich in einer ersten Drosselkörper-Schließstellung befindet, in welcher zwischen dem ersten Drosselkörper und dem ersten Drossel-Gegenkörper ein, vorzugsweise ringförmiger, insbesondere kreisförmiger, erster Drossel-Schließspalt ausgebildet ist, der sehr viel kleiner ist als der erste Drossel-Öffnungsspalt, so dass im Wesentlichen kein bzw. nur sehr wenig Antriebsfluid, pro Zeiteinheit, den ersten Drossel-Schließspalt passieren kann, und dass der Sekundär-Steuerschaft von seiner Sekundär-Steuerschaft-Schließstellung in der Axialrichtung in eine Sekundär-Steuerschaft-Zwischenstellung überführbar ist, und umgekehrt, in welcher der erste Drosselkörper sich in einer zweiten Drosselkörper-Schließstellung befindet, in welcher nach wie vor zwischen dem ersten Drosselkörper und dem ersten Drossel-Gegenkörper der, vorzugsweise ringförmige, insbesondere kreisförmige, erste Drossel-Schließspalt oder ein, vorzugsweise ringförmiger, insbesondere kreisförmiger zweiter Drossel-Schließspalt ausgebildet ist, der ebenfalls sehr viel kleiner ist als der erste Drossel-Öffnungsspalt, so dass nach wie vor im Wesentlichen kein oder nur sehr wenig Antriebsfluid, pro Zeiteinheit, den ersten Drossel-Schließspalt oder den zweiten Drossel-Schließspalt passieren kann, und in welcher der Sekundär-Ventilkörper mit seiner Dichtung von der Anlagefläche des Sekundär-Ventilsitzes unter Ausbildung eines ersten Durchströmspalts abgehoben ist, und dass der Sekundär-Steuerschaft von seiner Sekundär-Steuerschaft-Zwischenstellung in der Axialrichtung in seine Sekundär-Steuerschaft-Öffnungsstellung bewegbar ist, und umgekehrt, in welcher der erste Drosselkörper sich in der ersten Drosselkörper-Öffnungsstellung befindet, in welcher zwischen dem ersten Drosselkörper und dem ersten Drossel-Gegenkörper der erste Drossel-Öffnungsspalt ausgebildet ist und in welcher der Sekundär-Ventilkörper mit seiner Dichtung von der Anlagefläche des Sekundär-Ventilsitzes unter Ausbildung eines zweiten Durchströmspalts abgehoben bleibt
und/oder
dass das Sekundär-Rückschlagventil eine zweite Drossel umfasst, die, in einer ersten Fließrichtung des Antriebsfluids von dem Hydraulikeinlass durch die Schleusenkammer in die Arbeitskammer betrachtet, nach der Dichtung ausgebildet ist und die mit einem zweiten Drosselkörper des Sekundär-Steuerschafts und mit einem zweiten Drossel-Gegenkörper des Hydraulikblocks ausgebildet ist, und dass der Sekundär-Steuerschaft und der Hydraulikblock, derart aufeinander abgestimmt gestaltet sind, dass der zweite Drosselkörper sich in der Sekundär-Steuerschaft-Öffnungsstellung in einer zweiten Drosselkörper-Öffnungsstellung befindet, in welcher zwischen dem zweiten Drosselkörper und dem zweiten Drossel-Gegenkörper ein, vorzugsweise ringförmiger, insbesondere kreisförmiger, zweiter Drossel-Öffnungsspalt ausgebildet ist, und dass der zweite Drosselkörper in der Sekundär-Steuerschaft-Schließstellung des Sekundär-Steuerschafts dem zweiten Drossel-Gegenkörper des Hydraulikblocks unmittelbar gegenüber liegt und sich in einer dritten Drosselkörper-Schließstellung befindet, in welcher zwischen dem zweiten Drosselkörper und dem zweiten Drossel-Gegenkörper ein, vorzugsweise ringförmiger, insbesondere kreisförmiger, dritter Drossel-Schließspalt ausgebildet ist, der sehr viel kleiner ist als der zweite Drossel-Öffnungsspalt, so dass im Wesentlichen kein Antriebsfluid oder nur sehr wenig Antriebsfluid, pro Zeiteinheit, den dritten Drossel-Schließspalt passieren kann, und dass der Sekundär-Steuerschaft von seiner Sekundär-Steuerschaft-Schließstellung in der Axialrichtung in eine Sekundär-Steuerschaft-Zwischenstellung überführbar ist, und umgekehrt, in welcher der zweite Drosselkörper sich in einer vierten Drosselkörper-Schließstellung befindet, in welcher nach wie vor zwischen dem zweiten Drosselkörper und dem zweiten Drossel-Gegenkörper der, vorzugsweise ringförmige, insbesondere kreisförmige, dritte Drossel-Schließspalt oder ein, vorzugsweise ringförmiger, insbesondere kreisförmiger, vierter Drossel-Schließspalt ausgebildet ist, der ebenfalls sehr viel kleiner ist als der zweite Drossel-Öffnungsspalt, so dass nach wie vor im Wesentlichen kein oder nur sehr wenig Antriebsfluid, pro Zeiteinheit, den dritten Drossel-Schließspalt oder den vierten Drossel-Schließspalt passieren kann, und in welcher der Sekundär-Ventilkörper mit seiner Dichtung von der Anlagefläche des Sekundär-Ventilsitzes unter Ausbildung eines oder des ersten Durchströmspalts abgehoben ist, und dass der Sekundär-Steuerschaft von seiner Sekundär-Steuerschaft-Zwischenstellung in der Axialrichtung in seine Sekundär-Steuerschaft-Öffnungsstellung bewegbar ist, und umgekehrt, in welcher der zweite Drosselkörper sich in der zweiten Drosselkörper-Öffnungsstellung befindet, in welcher zwischen dem zweiten Drosselkörper und dem zweiten Drossel-Gegenkörper der zweite Drossel-Öffnungsspalt ausgebildet ist und in welcher der Sekundär-Ventilkörper mit seiner Dichtung von der Anlagefläche des Sekundär-Ventilsitzes unter Ausbildung eines oder des zweiten Durchströmspalts abgehoben bleibt.

Dadurch, dass eine erste Drossel, in einer ersten Fließrichtung des Antriebsfluids von dem Hydraulikeinlass durch die Schleusenkammer in die erste Arbeitskammer betrachtet, vor der Dichtung, mit einem ersten Drosselkörper des Sekundär-Steuerschafts und mit einem ersten Drossel-Gegenkörper des Hydraulikblocks ausgebildet ist, und dass der erste Drosselkörper in der Sekundär-Steuerschaft-Öffnungsstellung sich in einer ersten Drosselkörper-Öffnungsstellung befindet, in welcher zwischen dem ersten Drosselkörper und dem ersten Drossel-Gegenkörper ein, vorzugsweise ringförmiger, insbesondere kreisförmiger, erster Drossel-Öffnungsspalt ausgebildet ist, und dass sich der erste Drosselkörper in der Sekundär-Steuerschaft-Schließstellung des Sekundär-Steuerschafts in einer ersten Drosselkörper-Schließstellung befindet, in welcher zwischen dem ersten Drosselkörper und dem ersten Drossel-Gegenkörper ein, vorzugsweise ringförmiger, insbesondere kreisförmiger, erster Drossel-Schließspalt ausgebildet ist, der sehr viel kleiner ist als der erste Drossel-Öffnungsspalt, so dass im Wesentlichen kein bzw. nur sehr wenig Antriebsfluid, pro Zeiteinheit, den ersten Drossel-Schließspalt passieren kann, und dass der Sekundär-Steuerschaft von seiner Sekundär-Steuerschaft-Schließstellung in der Axialrichtung in eine Sekundär-Steuerschaft-Zwischenstellung überführbar ist, und umgekehrt, in welcher der erste Drosselkörper sich in einer zweiten Drosselkörper-Schließstellung befindet, in welcher nach wie vor zwischen dem ersten Drosselkörper und dem ersten Drossel-Gegenkörper der, vorzugsweise ringförmige, insbesondere kreisförmige, erste Drossel-Schließspalt oder ein, vorzugsweise ringförmiger, insbesondere kreisförmiger zweiter Drossel-Schließspalt ausgebildet ist, der ebenfalls sehr viel kleiner ist als der erste Drossel-Öffnungsspalt, so dass nach wie vor im Wesentlichen kein oder nur sehr wenig Antriebsfluid, pro Zeiteinheit, den ersten Drossel-Schließspalt oder den zweiten Drossel-Schließspalt passieren kann, und in welcher der Sekundär-Ventilkörper mit seiner Dichtung von der Anlagefläche des Sekundär-Ventilsitzes unter Ausbildung eines ersten Durchströmspalts abgehoben ist, und dass der Sekundär-Steuerschaft von seiner Sekundär-Steuerschaft-Zwischenstellung in der Axialrichtung in seine Sekundär-Steuerschaft-Öffnungsstellung bewegbar ist, und umgekehrt, in welcher der erste Drosselkörper sich in der ersten Drosselkörper-Öffnungsstellung befindet, in welcher zwischen dem ersten Drosselkörper und dem ersten Drossel-Gegenkörper der erste Drossel-Öffnungsspalt ausgebildet ist und in welcher der Sekundär-Ventilkörper mit seiner Dichtung von der Anlagefläche des Sekundär-Ventilsitzes unter Ausbildung eines zweiten Durchströmspalts abgehoben bleibt, kann, beim Öffnen des Sekundär-Rückschlagventils, ein etwaig in der Sekundär-Steuerschaft-Schließstellung des Sekundär-Steuerschafts, in der ersten Fließrichtung des Antriebsfluids von dem Hydraulikeinlass durch die Schleusenkammer in die erste Arbeitskammer betrachtet, hinter der an der Anlagefläche des Sekundär-Ventilsitzes dicht anliegenden Dichtung in der zweiten Öffnung vorhandenes komprimiertes Antriebsfluid, unter Ausbildung einer Dekompressionsströmung in einer zweiten Fließrichtung entgegen der ersten Fließrichtung durch den zwischen der Dichtung und der Anlagefläche des Sekundär-Ventilsitzes ausgebildeten zweiten Durchströmspalt ohne eine Beschädigung (Verschleiß) und/oder Verlagerung der Dichtung abflie-ßen. Ferner kann beim Schließen des Sekundär-Rückschlagventils erreicht werden, dass zuerst der erste Drossel-Öffnungsspalt geschlossen wird, also nur noch der erste Drossel-Schließspalt ausgebildet ist, bevor die Dichtung in Eingriff kommt, also an der Anlagefläche des Sekundär-Ventilsitzes des Hydraulikblocks anliegt, so dass eine Beschädigung (Verschleiß) und/oder Verlagerung der Dichtung, insbesondere durch eine dynamische Druckströmung, verhindert werden kann.

Dadurch, dass eine zweite Drossel, in der ersten Fließrichtung des Antriebsfluids von dem Hydraulikeinlass durch die Schleusenkammer in die erste Arbeitskammer betrachtet, nach der Dichtung, mit einem zweiten Drosselkörper des Sekundär-Steuerschafts und mit einem zweiten Drossel-Gegenkörper des Hydraulikblocks ausgebildet ist, und dass der zweite Drosselkörper in der Sekundär-Steuerschaft-Öffnungsstellung sich in einer zweiten Drosselkörper-Öffnungsstellung befindet, in welcher zwischen dem zweiten Drosselkörper und dem zweiten Drossel-Gegenkörper ein, vorzugsweise ringförmiger, insbesondere kreisförmiger, zweiter Drossel-Öffnungsspalt ausgebildet ist, und dass sich der zweite Drosselkörper in der Sekundär-Steuerschaft-Schließstellung des Sekundär-Steuerschafts in einer dritten Drosselkörper-Schließstellung befindet, in welcher zwischen dem zweiten Drosselkörper und dem zweiten Drossel-Gegenkörper ein, vorzugsweise ringförmiger, insbesondere kreisförmiger, dritter Drossel-Schließspalt ausgebildet ist, der sehr viel kleiner ist als der zweite Drossel-Öffnungsspalt, so dass im Wesentlichen kein Antriebsfluid oder nur sehr wenig Antriebsfluid, pro Zeiteinheit, den dritten Drossel-Schließspalt passieren kann, und dass der Sekundär-Steuerschaft von seiner Sekundär-Steuerschaft-Schließstellung in der Axialrichtung in eine Sekundär-Steuerschaft-Zwischenstellung überführbar ist, und umgekehrt, in welcher der zweite Drosselkörper sich in einer vierten Drosselkörper-Schließstellung befindet, in welcher nach wie vor zwischen dem zweiten Drosselkörper und dem zweiten Drossel-Gegenkörper der, vorzugsweise ringförmige, insbesondere kreisförmige, dritte Drossel-Schließspalt oder ein, vorzugsweise ringförmiger, insbesondere kreisförmiger, vierter Drossel-Schließspalt ausgebildet ist, der ebenfalls sehr viel kleiner ist als der zweite Drossel-Öffnungsspalt, so dass nach wie vor im Wesentlichen kein oder nur sehr wenig Antriebsfluid, pro Zeiteinheit, den dritten Drossel-Schließspalt oder den vierten Drossel-Schließspalt passieren kann, und in welcher der Sekundär-Ventilkörper mit seiner Dichtung von der Anlagefläche des Sekundär-Ventilsitzes unter Ausbildung eines oder des ersten Durchströmspalts abgehoben ist, und dass der Sekundär-Steuerschaft von seiner Sekundär-Steuerschaft-Zwischenstellung in der Axialrichtung in seine Sekundär-Steuerschaft-Öffnungsstellung bewegbar ist, und umgekehrt, in welcher der zweite Drosselkörper sich in der zweiten Drosselkörper-Öffnungsstellung befindet, in welcher zwischen dem zweiten Drosselkörper und dem zweiten Drossel-Gegenkörper der zweite Drossel-Öffnungsspalt ausgebildet ist und in welcher der Sekundär-Ventilkörper mit seiner Dichtung von der Anlagefläche des Sekundär-Ventilsitzes unter Ausbildung eines oder des zweiten Durchströmspalts abgehoben bleibt, kann, beim Öffnen des Sekundär-Rückschlagventils, ein etwaig in der Sekundär-Steuerschaft-Schließstellung des Sekundär-Steuerschafts, in der ersten Fließrichtung des Antriebsfluids von dem Hydraulikeinlass durch die Schleusenkammer in die erste Arbeitskammer betrachtet, hinter dem zweiten Drosselkörper in der zweiten Öffnung vorhandenes komprimiertes Antriebsfluid, unter Ausbildung einer Dekompressionsströmung in einer oder der zweiten Fließrichtung entgegen der ersten Fließrichtung durch den zwischen dem zweiten Drosselkörper und dem zweiten Drossel-Gegenkörper des Hydraulikblocks ausgebildeten zweiten Drossel-Öffnungsspalt und durch den zwischen der Dichtung und der Anlagefläche des Sekundär-Ventilsitzes ausgebildeten zweiten Durchströmspalt ohne eine Beschädigung (Verschleiß) und/oder Verlagerung der Dichtung abfließen. Ferner kann beim Schließen des Sekundär-Rückschlagventils erreicht werden, dass zuerst der zweite Drossel-Öffnungsspalt geschlossen wird, also der dritte Drossel-Schließspalt oder der vierte Drossel-Schließspalt ausgebildet ist, bevor die Dichtung in Eingriff kommt, also an der Anlagefläche des Sekundär-Ventilsitzes des Hydraulikblocks anliegt, so dass eine Beschädigung (Verschleiß) und/oder Verlagerung der Dichtung, insbesondere durch eine dynamische Druckströmung, verhindert werden kann.

Gemäß einer besonders bevorzugten Ausführungsvariante kann vorgesehen sein, dass der erste Drossel-Schließspalt und/oder der dritte Drossel-Schließspalt jeweils maximal 0,1 mm oder maximal 0,05 mm oder maximal 0,03 mm betragen. Dadurch kann in besonderem Maße sichergestellt werden, dass im Wesentlichen kein oder nur sehr wenig Antriebsfluid, pro Zeiteinheit, den ersten Drossel-Schließspalt und/oder den dritten Drossel-Schließspalt passieren kann, so dass besonders wirksam vermieden bzw. verhindert werden kann, dass eine etwaige Dekompressionsströmung und/oder dynamische Druckströmung zu einer Beschädigung (Verschleiß) und/oder Verlagerung der Dichtung führen könnte, wodurch die Funktionssicherheit in besonderem Maße verbessert werden kann.

Sofern der zweite Drossel-Schließspalt und/oder der vierte Drossel-Schließspalt ausgebildet ist, kann dieser bzw. können diese gemäß einer vorteilhaften Weiterbildung ebenfalls jeweils maximal 0,1 mm oder maximal 0,05 mm oder maximal 0,03 mm betragen. Dies führt zu einer weiteren Verbesserung im Sinne der vorstehenden Vorteile.

Gemäß einer vorteilhaften Ausgestaltung kann vorgesehen sein, dass der erste Drosselkörper eine zylindrische erste Drosselfläche aufweist und dass der erste Drossel-Gegenkörper eine zylindrische erste Drossel-Gegenfläche aufweist, die sich in der Axialrichtung erstrecken und die in der Sekundär-Steuerschaft-Schließstellung des Sekundär-Steuerschafts und/oder in der Sekundär-Steuerschaft-Zwischenstellung des Sekundär-Steuerschafts unmittelbar, vorzugsweise radial und/oder unter Ausbildung einer Spielpassung, gegenüber liegen und/oder dass der zweite Drosselkörper eine zylindrische zweite Drosselfläche aufweist und dass der zweite Drossel-Gegenkörper eine zylindrische zweite Drossel-Gegenfläche aufweist, die sich in der Axialrichtung erstrecken und die in der Sekundär-Steuerschaft-Schließstellung des Sekundär-Steuerschafts unmittelbar, vorzugsweise radial und/oder unter Ausbildung einer Spielpassung, gegenüber liegen. Dadurch lassen sich eine bessere Drossel-Wirkung und bessere Führungsverhältnisse erreichen, so dass die Funktionssicherheit weiter verbesserbar ist. Gemäß einer vorteilhaften Weiterbildung kann vorgesehen sein, dass die erste Drosselfläche des ersten Drosselkörpers sich parallel zu einer bzw. der Sekundär-Steuerschaft-Längsachse des Sekundär-Steuerschafts und sich zumindest in der Sekundär-Steuerschaft-Schließstellung parallel zu der ersten Drossel-Gegenfläche des Hydraulikblocks erstreckt und/oder dass die zweite Drosselfläche des zweiten Drosselkörpers sich parallel zu einer oder der Sekundär-Steuerschaft-Längsachse des Sekundär-Steuerschafts und sich zumindest in der Sekundär-Steuerschaft-Schließstellung parallel zu der zweiten Drossel-Gegenfläche des Hydraulikblocks erstreckt und/oder dass die erste Drosselfläche des ersten Drosselkörpers und die zweite Drosselfläche des zweiten Drosselkörpers sich parallel zueinander strecken und dass die erste Drossel-Gegenfläche des ersten Drossel-Gegenkörpers und die zweite Drossel-Gegenfläche des zweiten Drossel-Gegenkörpers sich parallel zueinander erstrecken. Dadurch lässt sich eine weitere Verbesserung im Sinne der vorstehenden Vorteile erreichen.

Gemäß einer bevorzugten Ausgestaltung kann vorgesehen sein, dass der Sekundär-Ventilkörper einen starren Sekundär-Ventilkörperteil, vorzugsweise aus Metall, aufweist, der eine konische, konkave, ballige oder teilkugelförmige, sich in der ersten Fließrichtung, vorzugsweise radial, nach außen erweiternde Sekundär-Ventilkörper-Anlagefläche aufweist, vorzugsweise die, in der ersten Fließrichtung betrachtet, nach der Dichtung angeordnet ist, mit welcher der starre Sekundär-Ventilkörperteil des Sekundär-Ventilkörpers in der Sekundär-Ventilkörper-Schließstellung an einer, vorzugsweise ringförmigen, insbesondere kreisförmigen, starren, vorzugsweise aus Metall bestehenden, Sekundär-Schulter des Hydraulikblocks anliegt. Dadurch kann die Abdichtung in der Sekundär-Ventilkörper-Schließstellung und die Funktionssicherheit der Vorrichtung weiter verbessert werden.

Die Dichtungs- und Führungsverhältnisse können weiter verbessert werden, wenn die Sekundär-Ventilkörper-Anlagefläche des Sekundär-Ventilkörperteils, in der ersten Fließrichtung betrachtet, vor dem zweiten Drosselkörper und/oder zwischen der Dichtung und dem zweiten Drosselkörper und/oder zwischen dem ersten Drosselkörper und dem zweiten Drosselkörper angeordnet ist. Dadurch kann die Funktionssicherheit der Vorrichtung weiter verbessert werden.

Die Funktionssicherheit der Vorrichtung kann in ganz besonderem Maße weiter verbessert werden, wenn es sich bei der Dichtung um einen Dichtring handelt, der in einer, vorzugsweise radial, nachaußen offenen, vorzugsweise ringförmigen, insbesondere kreisförmigen, Nut des Sekundär-Steuerschafts aufgenommen ist.

Gemäß einer ersten Ausführungsform kann es sich bei dem Dichtring um einen O-Ring handeln. Der Dichtring kann also einen Kreisquerschnitt aufweisen. Ein solcher O-Ring ist besonders einfach und kostengünstig in großen Stückzahlen, insbesondere durch Spritzgießen, herstellbar.

Gemäß einer vorteilhaften Ausgestaltung kann vorgesehen sein, dass der O-Ring an einem konkaven oder konkav, vorzugsweise mit einem Kreisbogen, gerundeten Nutgrund der Nut des Sekundär-Steuerschafts, vorzugsweise unter Vorspannung, anliegt. Dadurch kann eine größere Sicherheit gegen ein Bewegen bzw. Herausspülen des O-Rings aus der Nut beim Öffnen des Ventils infolge einer an dem O-Ring angreifenden Strömung des Arbeitsfluids erreicht werden.

Gemäß einer ganz besonders bevorzugten Ausführungsvariante kann vorgesehen sein, dass der Dichtring eine zylindrische oder kreiszylindrische Dichtring-Innenfläche aufweist, über die er an einem zylindrischen oder kreiszylindrischen Nutgrund der Nut, vorzugsweise unter Vorspannung, anliegt. Dabei kann gemäß einer bevorzugten Ausgestaltung vorgesehen sein, dass der Dichtring, in der Axialrichtung betrachtet, eine maximale Dichtring-Breite aufweist, und dass die zylindrische Dichtring-Innenfläche sich, in der Axialrichtung betrachtet, über eine Axiallänge erstreckt, die wenigstens einem Drittel der maximalen Dichtring-Breite entspricht oder die wenigstens der Hälfte der maximalen Dichtring-Breite entspricht oder die wenigstens zwei Drittel der maximalen Dichtring-Breite entspricht oder die der maximalen Dichtring-Breite entspricht. Durch diese Maßnahmen, insbesondere wenn der Dichtring über seine gesamte Dichtring-Breite bzw. über die gesamte Axiallänge seiner zylindrischen Dichtring-Innenfläche an dem zylindrischen Nutgrund der Nut bzw. an dem Innendurchmesser der Nut anliegt, kann verhindert werden, dass ein Fluiddruck bzw. Fluidstrom unter den Dichtring gelangt. Dadurch kann zuverlässig und dauerhaft verhindert werden, dass der Dichtring durch das Arbeitsfluid aus der Nut herausgespült wird, und zwar selbst bei erhöhten Drucken von beispielsweise 350 bar und bei erhöhten Temperaturen von beispielsweise 60 Grad oder mehr.

Gemäß einer Weiterbildung kann vorgesehen sein, dass der Dichtring auf seiner der Sekundär-Ventilkörper-Anlagefläche zugewandten ersten Dichtringseite eine planebene erste Dichtring-Anlagefläche aufweist, vorzugsweise die senkrecht zu der Dichtring-Innenfläche ausgebildet ist, mit welcher der Dichtring an einer der ersten Dichtring-Anlagefläche gegenüberliegenden, vorzugsweise sich senkrecht zu einer oder der Sekundär-Steuerschaft-Axialachse des Sekundär-Steuerschafts erstreckenden, planebenen, ersten Seitenfläche der Nut abstützbar ist oder abgestützt ist. Alternativ oder zusätzlich kann vorgesehen sein, dass der Dichtring auf seiner dem ersten Drosselkörper zugewandten zweiten Dichtringseite und/oder auf seiner von dem zweiten Drosselkörper abgewandten zweiten Dichtringseite eine planebene, zweite Dichtring-Anlagefläche aufweist, vorzugsweise die senkrecht zu der Dichtring-Innenfläche ausgebildet ist, mit welcher der Dichtring an einer der zweiten Dichtring-Anlagefläche gegenüberliegenden, vorzugsweise sich senkrecht zu einer oder der Sekundär-Steuerschaft-Axialachse des Sekundär-Steuerschafts erstreckenden, planebenen, zweiten Seitenfläche der Nut abstützbar ist oder abgestützt ist. Dadurch kann eine weitere Verbesserung im Sinne der vorstehenden Vorteile erreicht werden.

Gemäß einer Weiterbildung kann vorgesehen sein, dass die Nut, in der Axialrichtung betrachtet, insbesondere zwischen der ersten Dichtring-Anlagefläche und der zweiten Dichtring-Anlagefläche, eine Nutbreite aufweist und dass der Dichtring mit einem Dichtringteil in der Nut aufgenommen ist, der, in der Axialrichtung betrachtet, eine maximale Dichtringteil-Breite aufweist, die kleiner ist als die Nutbreite der den Dichtringteil aufnehmenden Nut. Dadurch kann sichergestellt werden, dass der Druck des Arbeitsfluids besonders vorteilhaft an dem Dichtring in der Axialrichtung angreifen kann, wodurch sich eine weitere Verbesserung der Dichtwirkung erzielen lässt.

Gemäß einer bevorzugten Ausgestaltung kann vorgesehen sein, dass der Dichtring einen dem Sekundär-Ventilsitz zugeordneten Dichtringteil aufweist, der sich von der Dichtring-Innenfläche, vorzugsweise radial, nach außen erstreckt und der sich, in der Axialrichtung betrachtet, zu dem Sekundär-Ventilkörper hin konisch verjüngt und/oder der sich, in der Axialrichtung betrachtet, von dem Sekundär-Ventilkörper weg konisch verjüngt. Dadurch kann eine elastische Deformation bzw. ein elastisches Zusammenpressen des Dichtrings bei seiner Anlage an der Anlagefläche des Ventilsitzes vergrößert bzw. verbessert werden, so dass dort eine bessere Abdichtung erreichbar ist. Ein solcher Dichtring lässt sich besonders kostengünstig durch Zerspanen, insbesondere durch Drehen, herstellen. Dies kann insbesondere dann Kostenvorteile bedeuten, wenn der Dichtring in vergleichsweise geringen Stückzahlen herzustellen ist.

Gemäß einer Weiterbildung kann vorgesehen sein, dass der Dichtring oder der Dichtringteil in einem, vorzugsweise eine oder die Sekundär-Steuerschaft-Axialachse des Sekundär-Steuerschafts enthaltenden Axialquerschnitt betrachtet, einen trapezförmigen Querschnitt aufweist. Dadurch kann eine weitere Verbesserung im Sinne der vorstehenden Vorteile erreicht werden.

Alternativ oder zusätzlich kann vorgesehen sein, dass der Dichtring oder der Dichtringteil symmetrisch zu einer Dichtring-Mittelebene ausgebildet ist, die sich senkrecht zu der Sekundär-Steuerschaft-Axialachse des Sekundär-Steuerschafts erstreckt. Dadurch ist eine verwechslungssichere Montage des Dichtrings bei noch immer ausreichend großen elastischen Rückstellkräften bei seiner Anlage an der Anlagefläche des Sekundär-Ventilsitzes möglich.

Gemäß einer vorteilhaften Weiterbildung kann vorgesehen sein, dass die Dichtung sich im unbelasteten Zustand, vorzugsweise radial, über die erste Drosselfläche des ersten Drosselkörpers hinaus erstreckt. Dadurch lässt sich eine weitere Verbesserung im Sinne der vorstehenden Vorteile erreichen.

Besonders vorteilhafte Abdichtungsverhältnisse über eine lange Einsatzzeit lassen sich dadurch erreichen, wenn die der Dichtung zugeordnete Anlagefläche des Sekundär-Ventilsitzes sich, in der ersten Fließrichtung betrachtet, vorzugsweise radial, nach außen erweiternd und/oder wenn die der Dichtung zugeordnete Anlagefläche des Sekundär-Ventilsitzes konisch, konvex, ballig oder teilkugelförmig ausgebildet ist.

Gemäß einer besonders bevorzugten Ausführungsvariante kann vorgesehen sein, dass der Sekundär-Steuerschaft einen, vorzugsweise zentralen, Sekundär-Führungsschaft aufweist, der sich, in Richtung seiner Sekundär-Führungsschaft-Axialachse bzw. -Längsachse betrachtet, zwischen dem ersten Drosselkörper oder dem zweiten Drosselkörper einerseits und dem freien Sekundär-Steuerschaft-Ende des Sekundär-Steuerschafts andererseits, in Richtung seiner Sekundär-Führungsschaft-Axialachse bzw. -Längsachse erstreckt und der in einer Sekundär-Führungsschaft-Aufnahme des Hydraulikblocks mit geringem Spiel in Richtung seiner Sekundär-Führungsschaft-Längsachse (in der Axialrichtung) bewegbar geführt ist. Dadurch kann eine noch bessere Führung des Sekundär-Steuerschafts des Sekundär-Rückschlagventils in Verbindung mit einer weiter verbesserten Funktionssicherheit der Vorrichtung über eine längere Einsatzzeit erreichen.

Gemäß einer besonders bevorzugten Ausgestaltung kann vorgesehen sein, dass das Primär-Rückschlagventil einen sich in Richtung seiner Primär-Führungsschaft-Axialachse bzw. -Längsachse erstreckenden Primär-Führungsschaft aufweist, der mit dem Primär-Ventilkörper versehen ist und der in einer Primär-Führungsschaft-Aufnahme des Hydraulikblocks mit geringem Spiel in Richtung seiner Primär-Führungsschaft-Axialachse (in der Axialrichtung) bewegbar geführt ist. Dadurch können verbesserte Abdichtverhältnisse in Verbindung mit einer weiter verbesserten Funktionssicherheit der Vorrichtung über eine längere Einsatzzeit erreicht werden.

Gemäß einer vorteilhaften Ausgestaltung kann vorgesehen sein, dass der Primär-Ventilkörper einen, vorzugsweise starren, Primär-Ventilkörperteil, vorzugsweise aus Metall, aufweist, der eine konische, konkave, ballige oder teilkugelförmige, sich, in der ersten Fließrichtung betrachtet, vorzugsweise radial, nach au-ßen erweiternde Primär-Ventilkörper-Anlagefläche aufweist, mit welcher der starre Primär-Ventilkörperteil des Primär-Ventilkörpers in der Primär-Ventilkörper-Schließstellung an einer, vorzugsweise ringförmigen, insbesondere kreisförmigen, vorzugsweise starren, Primär-Schulter des Hydraulikblocks anliegt. Dadurch kann die Abdichtung in der Primär-Ventilkörper-Schließstellung und die Funktionssicherheit der Vorrichtung weiter verbessert werden.

Die Erfindung betrifft auch ein Verfahren zum Entsperren bzw. Öffnen des Sekundär-Rückschlagventils der erfindungsgemäßen Vorrichtung, wobei ausgehend von der Sekundär-Ventilkörper-Schließstellung, in der sich der Sekundär-Steuerschaft in seiner Sekundär-Steuerschaft-Schließstellung befindet und in der sich der erste Drosselkörper des Sekundär-Steuerschafts in seiner ersten Drosselkörper-Schließstellung befindet und in welcher der Sekundär-Ventilkörper mit seiner Dichtung an der Anlagefläche des Sekundär-Ventilsitzes des Hydraulikblocks dicht anliegt, so dass das Sekundär-Rückschlagventil gegen einen Durchfluss des Antriebsfluids abgesperrt ist, der Sekundär-Steuerschaft in der Axialrichtung in einer Sekundär-Steuerschaft-Öffnungsrichtung in seine Sekundär-Steuerschaft-Zwischenstellung überführt wird, in welcher der erste Drosselkörper sich in seiner zweiten Drosselkörper-Schließstellung befindet, in welcher nach wie vor zwischen dem ersten Drosselkörper und dem ersten Drossel-Gegenkörper der erste Drossel-Schließspalt oder der zweite Drossel-Schließspalt ausgebildet ist, so dass nach wie vor im Wesentlichen kein oder nur sehr wenig Antriebsfluid, pro Zeiteinheit, den ersten Drosselspalt oder den zweiten Drosselspalt passieren kann, und in welcher der Sekundär-Ventilkörper mit seiner Dichtung von der Anlagefläche des Sekundär-Ventilsitzes des Hydraulikblocks unter Ausbildung eines ersten Durchströmspalts abgehoben ist, worauf der Sekundär-Steuerschaft weiter in der Sekundär-Steuerschaft-Öffnungsrichtung in seine Sekundär-Steuerschaft-Öffnungsstellung überführt wird, in welcher der erste Drosselkörper sich in seiner ersten Drosselkörper-Öffnungsstellung befindet, in welcher zwischen dem ersten Drosselkörper und dem ersten Drossel-Gegenkörper der erste Drossel-Öffnungsspalt ausgebildet ist und in welcher der Sekundär-Ventilkörper mit seiner Dichtung von der Anlagefläche des Sekundär-Ventilsitzes des Hydraulikblocks unter Ausbildung eines zweiten Durchströmspalts abgehoben bleibt
und/oder
wobei ausgehend von der Sekundär-Ventilkörper-Schließstellung, in der sich der Sekundär-Steuerschaft in seiner Sekundär-Steuerschaft-Schließstellung befindet und in der sich der zweite Drosselkörper des Sekundär-Steuerschafts in seiner dritten Drosselkörper-Schließstellung befindet und in welcher der Sekundär-Ventilkörper mit seiner Dichtung an der Anlagefläche des Sekundär-Ventilsitzes des Hydraulikblocks dicht anliegt, so dass das Sekundär-Rückschlagventil gegen einen Durchfluss des Antriebsfluids abgesperrt ist, der Sekundär-Steuerschaft in der Axialrichtung in einer oder der Sekundär-Steuerschaft-Öffnungsrichtung in die Sekundär-Steuerschaft-Zwischenstellung überführt wird, in welcher der zweite Drosselkörper sich in seiner vierten Drosselkörper-Schließstellung befindet, in welcher nach wie vor zwischen dem zweiten Drosselkörper und dem zweiten Drossel-Gegenkörper der dritte Drossel-Schließspalt oder der vierte Drossel-Schließspalt ausgebildet ist, so dass nach wie vor im Wesentlichen kein oder nur sehr wenig Antriebsfluid, pro Zeiteinheit, den dritten Drosselspalt oder den vierten Drosselspalt passieren kann, und in welcher der Sekundär-Ventilkörper mit seiner Dichtung von der Anlagefläche des Sekundär-Ventilsitzes des Hydraulikblocks unter Ausbildung eines oder des ersten Durchströmspalts abgehoben ist, worauf der Sekundär-Steuerschaft weiter in der Sekundär- Steuerschaft-Öffnungsrichtung in seine Sekundär-Steuerschaft-Öffnungsstellung überführt wird, in welcher der zweite Drosselkörper sich in seiner zweiten Drosselkörper-Öffnungsstellung befindet, in welcher zwischen dem zweiten Drosselkörper und dem zweiten Drossel-Gegenkörper der zweite Drossel-Öffnungsspalt ausgebildet ist und in welcher der Sekundär-Ventilkörper mit seiner Dichtung von der Anlagefläche des Sekundär-Ventilsitzes des Hydraulikblocks unter Ausbildung eines oder des zweiten Durchströmspalts abgehoben bleibt.

Dabei kann gemäß einer vorteilhaften Verfahrensvariante vorgesehen sein, dass beim Überführen des Sekundär-Steuerschafts von seiner Sekundär-Steuerschaft-Zwischenstellung in der Sekundär-Steuerschaft-Öffnungsrichtung in seine Sekundär-Steuerschaft-Öffnungsstellung zunächst nur die zweite Drossel bzw. nur der zweite Drossel-Schließspalt aber noch nicht die erste Drossel bzw. der erste Drossel-Schließspalt geöffnet wird, wofür zunächst der zweite Drosselkörper von seiner zweiten Drosselkörper-Schließstellung in der Sekundär-Steuerschaft-Öffnungsrichtung in seine zweite Drosselkörper-Öffnungsstellung oder in eine dritte Drosselkörper-Öffnungsstellung überführt wird, in welcher zwischen dem zweiten Drosselkörper und dem zweiten Drossel-Gegenkörper der zweite Drossel-Öffnungsspalt oder ein dritter Drossel-Öffnungsspalt ausgebildet ist, der, vorzugsweise sehr viel, größer ist als der dritte Drossel-Schließspalt oder der vierte Drossel-Schließspalt, und erst anschließend die erste Drossel bzw. der erste Drossel-Schließspalt geöffnet wird, wofür der erste Drosselkörper in der Sekundär-Steuerschaft-Öffnungsrichtung weiter in seine erste Drosselkörper-Öffnungsstellung überführt wird, in welcher zwischen dem ersten Drosselkörper und dem ersten Drossel-Gegenkörper der erste Drossel-Öffnungsspalt ausgebildet ist. Dadurch lässt sich eine noch größere Funktionssicherheit der Vorrichtung über einen längeren Zeitraum erreichen.

Die Erfindung betrifft auch ein Verfahren zum Absperren bzw. Schließen des Sekundär-Rückschlagventils der erfindungsgemäßen Vorrichtung, wobei der Sekundär-Steuerschaft von seiner Sekundär-Steuerschaft-Öffnungsstellung, in welcher der erste Drosselkörper sich in der ersten Drosselkörper-Öffnungsstellung befindet, in welcher zwischen dem ersten Drosselkörper und dem ersten Drossel-Gegenkörper der erste Drossel-Öffnungsspalt ausgebildet ist und in welcher der Sekundär-Ventilkörper mit seiner Dichtung von der Anlagefläche des Sekundär-Ventilsitzes unter Ausbildung des zweiten Durchströmspalts abgehoben ist, in der Axialrichtung in einer Sekundär-Steuerschaft-Schließrichtung in seine Sekundär-Steuerschaft-Zwischenstellung überführt wird, in welcher der erste Drosselkörper sich in der zweiten Drosselkörper-Schließstellung befindet, in welcher zwischen dem ersten Drosselkörper und dem ersten Drossel-Gegenkörper der erste Drossel-Schließspalt oder der zweite Drossel-Schließspalt ausgebildet ist, so dass im Wesentlichen kein oder nur sehr wenig Antriebsfluid, pro Zeiteinheit, den ersten Drossel-Schließspalt oder den zweiten Drossel-Schließspalt passieren kann, und in welcher der Sekundär-Ventilkörper mit seiner Dichtung von der Anlagefläche des Sekundär-Ventilsitzes des Hydraulikblocks unter Ausbildung des ersten Durchströmspalts abgehoben bleibt, worauf der Sekundär-Steuerschaft weiter in der Sekundär-Steuerschaft-Schließrichtung in seine Sekundär-Steuerschaft-Schließstellung überführt wird, in welcher der erste Drosselkörper des Sekundär-Steuerschafts sich in seiner ersten Drosselkörper-Schließstellung befindet, in der zwischen dem ersten Drosselkörper und dem ersten Drossel-Gegenkörper nach wie vor der erste Drossel-Schließspalt ausgebildet ist, so dass kein oder im Wesentlichen nur sehr wenig Antriebsfluid, pro Zeiteinheit, den ersten Drossel-Schließspalt passieren kann, und in welcher der Sekundär-Ventilkörper mit seiner Dichtung an der Anlagefläche des Sekundär-Ventilsitzes des Hydraulikblocks dicht anliegt, so dass das Sekundär-Rückschlagventil gegen einen Durchfluss des Antriebsfluids abgesperrt ist,
und/oder
dass der Sekundär-Steuerschaft von seiner Sekundär-Steuerschaft-Öffnungsstellung, in welcher der zweite Drosselkörper sich in der zweiten Drosselkörper-Öffnungsstellung befindet, in welcher zwischen dem zweiten Drosselkörper und dem zweiten Drossel-Gegenkörper der zweite Drossel-Öffnungsspalt ausgebildet ist und in welcher der Sekundär-Ventilkörper mit seiner Dichtung von der Anlagefläche des Sekundär-Ventilsitzes unter Ausbildung des zweiten Durchströmspalts abgehoben ist, in der Axialrichtung in einer oder der Sekundär-Steuerschaft-Schließrichtung in seine Sekundär-Steuerschaft-Zwischenstellung überführt wird, in welcher der zweite Drosselkörper sich in der vierte Drosselkörper-Schließstellung befindet, in welcher zwischen dem zweiten Drosselkörper und dem zweiten Drossel-Gegenkörper der dritte Drossel-Schließspalt oder der vierte Drossel-Schließspalt ausgebildet ist, so dass kein oder im Wesentlichen nur sehr wenig Antriebsfluid, pro Zeiteinheit, den dritten Drossel-Schließspalt oder den vierten Drossel-Schließspalt passieren kann, und in welcher der Sekundär-Ventilkörper mit seiner Dichtung von der Anlagefläche des Sekundär-Ventilsitzes des Hydraulikblocks unter Ausbildung des ersten Durchströmspalts abgehoben bleibt, worauf der Sekundär-Steuerschaft weiter in der Sekundär-Steuerschaft-Schließrichtung in seine Sekundär-Steuerschaft-Schließstellung überführt wird, in welcher der zweite Drosselkörper des Sekundär-Steuerschafts sich in seiner zweiten Drosselkörper-Schließstellung befindet, in der zwischen dem zweiten Drosselkörper und dem zweiten Drossel-Gegenkörper (nach wie vor) der dritte Drossel-Schließspalt ausgebildet ist, so dass kein oder im Wesentlichen nur sehr wenig Antriebsfluid, pro Zeiteinheit, den dritten Drossel-Schließspalt passieren kann, und in welcher der Sekundär-Ventilkörper mit seiner Dichtung an der Anlagefläche des Sekundär-Ventilsitzes des Hydraulikblocks dicht anliegt, so dass das Sekundär-Rückschlagventil gegen einen Durchfluss des Antriebs-fluids abgesperrt ist.

Dabei kann gemäß einer vorteilhaften Verfahrensvariante vorgesehen sein, dass beim Überführen des Sekundär-Steuerschafts von seiner Sekundär-Steuerschaft-Öffnungstellung in der Sekundär-Steuerschaft-Schließrichtung in seine Sekundär-Steuerschaft-Zwischenstellung zunächst die erste Drossel bzw. der erste Drossel-Schließspalt aber noch nicht die zweite Drossel bzw. der zweite Drossel-Schließspalt geschlossen wird, wofür zunächst (nur) der erste Drosselkörper von seiner ersten Drosselkörper-Öffnungsstellung in der Sekundär-Steuerschaft-Schließrichtung in seine zweite Drosselkörper-Schließstellung (oder in eine fünfte Drosselkörper-Schließstellung) überführt wird, in welcher zwischen dem ersten Drosselkörper und dem ersten Drossel-Gegenkörper der erste Drossel-Schließspalt oder der zweite Drossel-Schließspalt ausgebildet ist, und erst anschließend die zweite Drossel bzw. der zweite Drossel-Schließspalt geschlossen wird, wofür der zweite Drosselkörper weiter in der Sekundär-Steuerschaft-Schließrichtung in seine vierte Drosselkörper-Schließstellung überführt wird, in welcher zwischen dem zweiten Drosselkörper und dem zweiten Drossel-Gegenkörper der dritte Drossel-Schließspalt oder der vierte Drossel-Schließspalt ausgebildet ist. Dadurch lässt sich eine noch größere Funktionssicherheit der Vorrichtung über einen längeren Zeitraum erreichen.

Es versteht sich, dass die vorstehenden Merkmale und Maßnahmen im Rahmen der Ausführbarkeit der Erfindung beliebig kombinierbar sind. Weitere Vorteile, Merkmale und Gesichtspunkte der Erfindung ergeben sich aus den Ansprüchen und aus dem nachfolgenden Beschreibungsteil, in dem bevorzugte Ausführungsbeispiele der Erfindung anhand der Zeichnungen näher beschreiben wird:
Es zeigen:
- Figur 1: eine perspektivische Darstellung der Vorrichtung;
- Figur 2: eine schematische Darstellung der Vorrichtung;
- Figur 3: einen Längsschnitt eines Hydraulikblocks der Vorrichtung, mit einem Doppel-Rückschlagventil, das aus zwei Rückschlagventilanordnungen besteht, von denen jede Rückschlagventilanordnung ein Primär-Rückschlagventil und ein Sekundär-Rückschlagventil umfasst, wobei jedes Rückschlagventil geschlossen ist;
- Figur 4: einen vergrößerten Ausschnitt eines Längsschnitts im Bereich des in Figur 3 links gezeigten Doppel-Rückschlagventils, wobei jedoch im Unterschied dazu der Sekundär-Steuerschaft des Sekundär-Rückschlagventils in einer Sekundär-Steuerschaft-Öffnungsrichtung in eine Übergangsstellung verschoben ist;
- Figur 5: einen stark vergrößerten Ausschnitt des Längsschnitts gemäß Figur 4 im Bereich des Sekundär-Rückschlagventils;
- Figur 6: den Längsschnitt gemäß Figur 4, wobei im Unterschied dazu nun der Sekundär-Steuerschaft weiter in seiner Sekundär-Steuerschaft-Öffnungsrichtung in eine erste Sekundär-Steuerschaft-Zwischenstellung verschoben ist;
- Figur 7: einen stark vergrößerten Ausschnitt des Längsschnitts gemäß Figur 6 im Bereich des Sekundär-Rückschlagventils, wobei im Unterschied dazu nun der Sekundär-Steuerschaft weiter in seiner Sekundär-Steuerschaft-Öffnungsrichtung in eine zweite Sekundär-Steuerschaft-Zwischenstellung verschoben ist;
- Figur 8: den Längsschnitt gemäß Figur 6, wobei im Unterschied dazu nun der Sekundär-Steuerschaft in seiner Sekundär-Steuerschaft-Öffnungsrichtung weiter in eine Sekundär-Steuerschaft-Öffnungsstellung verschoben ist;
- Figur 9: den Längsschnitt gemäß Figur 8, wobei im Unterscheid dazu nun der Sekundär-Steuerschaft mittels des Steuerkolbens weiter in seiner Sekundär-Steuerschaft-Öffnungsrichtung verschoben ist, wodurch zugleich der Primär-Ventilkörper des Primär-Rückschlagventils in eine Primär-Ventilkörper-Öffnungsstellung verschoben ist,
- Figur 10: eine dreidimensionale Ansicht eines zweiten Ausführungsbeispiels eines Dichtrings;
- Figur 11.1: einen Querschnitt des Dichtrings gemäß Figur 10;
- Figur 11.2: eine zweidimensionale Darstellung des Dichtrings gemäß Figur 10 in einer Seitenansicht von links;
- Figur 12: einen Ausschnitt des in Figur 3 gezeigten Längsschnitts des Hydraulikblocks, wobei anstelle des O-Rings hier der Dichtring gemäß Figur 10 eingesetzt ist;
- Figur 13: einen stark vergrößerten Ausschnitt des Längsschnitts gemäß Figur 7, wobei anstelle des O-Rings hier der Dichtring gemäß Figur 10 eingesetzt ist.

Die Vorrichtung 10 zum Halten eines mit einem Kolben 11 versehenen Schafts 12 eines Hydraulikzylinders 13 in Stellung stellt sich in Form einer Trennanordnung 14 dar. Die Trennanordnung 14 ist zwischen einem ersten Versorgungszweig 15.1 und einem zweiten Versorgungszweig 15.2 für ein Antriebsfluid einer ersten Arbeitskammer 17 bzw. einer zweiten Arbeitskammer 18 angeordnet. Bei dem Antriebsfluid kann es sich bevorzugt um Hydrauliköl handeln. Die zweite Arbeitskammer 18 ist von der ersten Arbeitskammer 17 durch den Kolben 11 abgetrennt. Der Schaft 12 ist zusammen mit dem Kolben 11 längs des Hydraulikzylinders 13 verschiebbar. Die Trennanordnung 14 umfasst einen Hydraulikblock 19 mit einem Doppel-Rückschlagventil 20, das aus zwei Rückschlagventilanordnungen 21; 21.1, 21.2 besteht. Jede Rückschlagventilanordnung 21; 21.1, 21.2 umfasst ein Primär-Rückschlagventil 22; 22.1, 22.2 und ein auch als Sicherheits-Rückschlagventil bezeichenbares Sekundär-Rückschlagventil 23; 23.1, 23.2. Jede Rückschlagventilanordnung 21; 21.1, 21.2 kann auch als ein Rückschlagventil bezeichnet werden, das ein Primär-Rückschlagventil 22; 22.1, 22.1 und ein Sekundär-Rückschlagventil 23; 23.1, 23.2 umfasst. In dem gezeigten Ausführungsbeispiel dient die Vorrichtung 10 zum Halten des mit dem Kolben 11 versehenen Schafts 12 eines doppeltwirkenden Hydraulikzylinders in Stellung, der also sowohl auf Zug als auch Druck in entgegengesetzte Lastrichtungen mit einer Last beaufschlagbar ist.

Der Hydraulikblock 19 schließt zwei Schleusenkammern 24; 24.1, 24.2 ein. In der ersten Schleusenkammer 24; 24.1 ist eine erste Rückschlagventilanordnung 21.1 der beiden Rückschlageventilanordnungen 21.1, 21.2 ausgebildet. In der zweiten Schleusenkammer 24.2 ist eine zweite Rückschlagventilanordnung 21.2 der beiden Rückschlageventilanordnungen 21.1, 21.2 ausgebildet.

Die erste Schleusenkammer 24.1 umfasst eine erste Öffnung 25.1, die mit dem ersten Primär-Rückschlagventil 22.1 der ersten Rückschlagventilanordnung 21.1 versehen ist und in hydraulischer Verbindung mit der ersten Arbeitskammer 17 steht. Die erste Schleusenkammer 24.2 umfasst auch eine zweite Öffnung 25.2, die mit dem ersten Sekundär-Rückschlagventil 23.1 der ersten Rückschlagventilanordnung 21.1 versehen ist. Die zweite Öffnung 25.2 steht in einer absperrbaren hydraulischen Verbindung mit der ersten Öffnung 25.1. Die zweite Öffnung 25.2 steht in einer absperrbaren hydraulischen Verbindung mit einem ersten Hydraulikeinlass 26; 26.1 zur Versorgung der ersten Arbeitskammer 17 mit dem Antriebsfluid.

Die zweite Schleusenkammer 24.2 umfasst eine dritte Öffnung 25.3, die mit dem zweiten Primär-Rückschlagventil 22.2 der zweiten Rückschlagventilanordnung 21.2 versehen ist und in hydraulischer Verbindung mit der zweiten Arbeitskammer 18 steht. Die zweite Schleusenkammer 24.2 umfasst auch eine vierte Öffnung 25.4, die mit dem zweiten Sekundär-Rückschlagventil 23.2 der zweiten Rückschlagventilanordnung 21.2 versehen ist. Die vierte Öffnung 25.4 steht in einer absperrbaren hydraulischen Verbindung mit der dritten Öffnung 25.3. Die vierte Öffnung 25.4 steht in einer absperrbaren hydraulischen Verbindung mit einem zweiten Hydraulikeinlass 26.2 zur Versorgung der zweiten Arbeitskammer 18 mit dem Antriebsfluid.

Das erste Primär-Rückschlagventil 21.1 und das erste Sekundär-Rückschlagventil 23.1 sind in Reihe geschaltet angeordnet bzw. in einer bestimmten Fließrichtung hintereinander in einem ersten Hydraulik-Versorgungskreis der ersten Arbeitskammer 17 angeordnet. Das zweite Primär-Rückschlagventil 21.2 und das zweite Sekundär-Rückschlagventil 23.2 sind seriell, also in Reihe bzw. in der Fließrichtung hintereinander in einem zweiten Hydraulik-Versorgungskreis der zweiten Arbeitskammer 18 angeordnet.

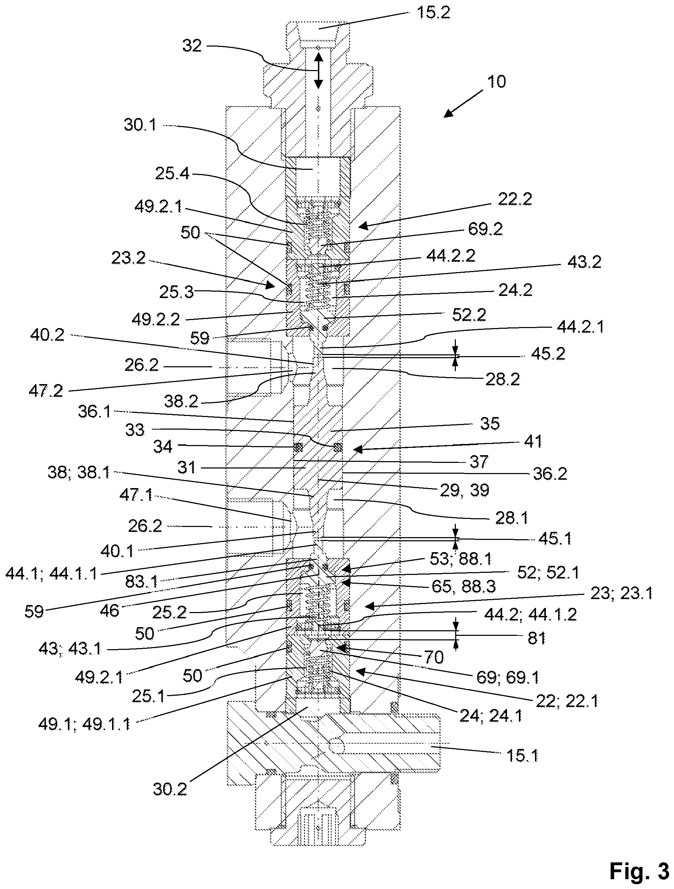

Die beiden Schleusenkammern 24; 24.1, 24.2 sind durch eine Verbindungskammer 28 hydraulisch verbunden. Die Verbindungskammer erstreckt sich in Richtung ihrer Verbindungskammer-Längsachse 29. Diese fällt mit den Schleusenkammer-Längsachsen 30.1, 30.2 der beiden Schleusenkammern 24.1, 24.2 zusammen. In der Verbindungskammer 28 ist ein Steuerkolben 31 aufgenommen, der längs der Verbindungskammer 28 mit einem geringen radialen Spiel in einer Axialrichtung 32 verschiebbar gelagert ist. Der Steuerkolben 31 dient als ein Entsperrmittel zum wahlweisen Entsperren bzw. Öffnen entweder unmittelbar des ersten Sekundär-Rückschlagventils 23.1 und mittelbar des ersten Primär-Rückschlagventils 22.1 der ersten Rückschlagventilanordnung 21.1 (in Figur 3 links gezeigt) oder unmittelbar des zweiten Sekundär-Rückschlagventils 23.2 und mittelbar des Primär-Rückschlagventils 22.2 der zweiten 21.2 Rückschlagventilanordnung (in Figur 3 rechts gezeigt). Der Steuerkolben 31 weist in seiner Längsmitte eine umlaufende, radial nach außen offene, kreisringförmige Nut 33 auf, in der eine elastomere Steuerkolben-Dichtung 34 aufgenommen ist. Der Steuerkolben weist einen Steuerkolben-Führungsteil 35 auf, der beiderseits der Steuerkolben-Dichtung 34 kreiszylindrische Führungsflächen 36.1, 36.2 aufweist. Diese liegen einer kreiszylindrischen Gegen-Führungsfläche 37 der Verbindungskammer 28 mit einem geringen radialen Spiel unmittelbar gegenüber. Die Verbindungskammer 28 ist durch den Steuerkolben 31 in eine erste Verbindungsraum-Kammer 28.1 und in eine zweite Verbindungsraum-Kammer 28.2 abgetrennt. Der Steuerkolben 31 weist einen ersten Steuerkolben-Steuerschaft 38; 38.1 und einen zweiten Steuerkolben-Steuerschaft 38.2 auf, die sich in der Richtung der Steuerkolben-Längsachse 39 bzw. in der Axialrichtung 32 in entgegengesetzte Richtungen voneinander weg erstrecken. Der dem ersten Sekundär-Rückschlagventil 23.1 der ersten Rückschlagventilanordnung 21.1 zugeordnete erste Steuerkolben-Steuerschaft 38.1 weist ein erstes freies Steuerkolben-Steuerschaft-Ende 40.1 auf und der dem zweiten Sekundär-Rückschlagventil 23.2 der zweiten Rückschlagventilanordnung 21.2 zugeordnete zweite Steuerkolben-Steuerschaft 38.2 weist ein zweites freies Steuerkolben-Steuerschaft-Ende 40.2 auf. In der in Figur 3 gezeigten Neutralstellung 41 des Steuerkolbens 31 liegt das erste freie Steuerkolben-Steuerschaft-Ende 40.1 des ersten Steuerkolben-Steuerschafts 38.1 einem ersten freien ersten Sekundär-Steuerschaft-Ende 44.1; 44.1.1 eines ersten Sekundär-Steuerschafts 43; 43.1 des ersten Sekundär-Rückschlagventils 23; 23.1 der ersten Rückschlagventilanordnung 21; 21.1 in einem ersten axialen Abstand 45; 45.1 gegenüber und liegt das zweite freie Steuerkolben-Steuerschaft-Ende 40.2 des zweiten Steuerkolben-Steuerschafts 38.2 des Steuerkolbens 31 einem ersten freien zweiten Sekundär-Steuerschaft-Ende 44.2; 44.2.1 eines zweiten Sekundär-Steuerschafts 43.2 des zweiten Sekundär-Rückschlagventils 23.2 der zweiten Rückschlagventilanordnung 21.2 in einem zweiten axialen Abstand 45.2 gegenüber, vorzugsweise der gleich groß ist wie der erste axiale Abstand 45; 45.1.

Der erste Steuerkolben-Steuerschaft 38.1 erstreckt sich axial in die erste Verbindungsraum-Kammer 28.1 der Verbindungskammer 28 und der zweite Steuerkolben-Steuerschaft 38.2 erstreckt sich in entgegengesetzter Richtung axial in die zweite Verbindungsraum-Kammer 28.2 der Verbindungskammer 28. In den in Figur 3 gezeigten Schließstellungen der Ventilkörper 52; 52.1, 52.2; 69; 69.1, 69.2 der Rückschlagventile 22.1, 22.2; 23.1, 23.2 erstreckt sich der erste Sekundär-Steuerschaft 43.1 des ersten Sekundär-Rückschlagventils 23.1 mit seinem ersten freien Sekundär-Steuerschaft-Ende 44.1.1 in die erste Verbindungsraum-Kammer 28.1 und erstreckt sich der zweite Sekundär-Steuerschaft 43.2 des zweiten Sekundär-Rückschlagventils 23.2 mit seinem ersten freien Sekundär-Steuerschaft-Ende 44.2.1 in die zweite Verbindungsraum-Kammer 28.2.

In die erste Verbindungsraum-Kammer 28.1 mündet der erste Hydraulikeinlass 26.1 mit einem ersten Hydraulikeinlasskanal 47; 47.1 und in die zweite Verbindungsraum-Kammer 28.2 mündet der zweite Hydraulikeinlass 26.2 mit einem zweiten Hydraulikeinlasskanal 47.2. Der erste Hydraulikeinlasskanal 47.1 und der zweite Hydraulikeinlasskanal 47.2 erstrecken sich quer oder senkrecht zu der Axialrichtung 32 bzw. quer oder senkrecht Verbindungskammer-Längsachse 29 der Verbindungskammer 28.

Der Hydraulikblock 19 umfasst vier separate Einsatzteile 49.1; 49.1.1, 49.1.2; 49.2; 49.2.1, 49.2.2, in denen der jeweilige Ventilköper des jeweiligen Rückschlagventils 22.1, 22.2; 23.1, 23.2 relativ zu dem zugeordneten Einsatzteil 49.1; 49.1.1, 49.1.2; 49.2; 49.2.1, 49.2.2 in der Axialrichtung 32 verschiebbar angeordnet ist. Jedes Einsatzteil 49.1; 49.1.1, 49.1.2; 49.2; 49.2.1, 49.2.2 ist rotationssymmetrisch zu seiner Einsatzteil-Axialachse bzw. -Längsachse gestaltet. Jedes Einsatzteil 49.1; 49.1.1, 49.1.2; 49.2; 49.2.1, 49.2.2 weist eine radial nach außen offene kreisringförmige Nut 97 auf, in der eine torusförmige Dichtung 50 in Form eines als O-Ring ausgebildeten Dichtrings aus einem Elastomer aufgenommen ist. Jedes Einsatzteil 49.1; 49.1.1, 49.1.2; 49.2; 49.2.1, 49.2.2 ist in einer zylindrischen Aufnahme 98 des Hydraulikblocks 19 mit einem geringen radialen Spiel wieder lösbar angeordnet. Jedes Einsatzteil 49.1; 49.1.1, 49.1.2; 49.2; 49.2.1, 49.2.2 ist mittels seiner Dichtung 50 gegenüber der zugeordneten Aufnahme 98 des Hydraulikblocks 19 radial abgedichtet. Die erste Rückschlagventilanordnung 21.1 weist die beiden Einsatzteile 49.1.1 und 49.2.1 der Einsatzteile 49.1; 49.1.1, 49.1.2; 49.2; 49.2.1, 49.2.2 auf. Das Einsatzteil 49.1.1 ist auch mit erstes Primär-Einsatzteil bezeichnet. Das Einsatzteil 49.1.2 ist auch mit erstes Sekundär-Einsatzteil bezeichnet. Das erste Primär-Einsatzteil 49.1.1 umfasst die erste Öffnung 25.1, in welcher der erste Primär-Ventilkörper 69.1 angeordnet ist. Das erste Sekundär-Einsatzteil 49.1.2 umfasst die zweite Öffnung 25.2, in welcher der erste Sekundär-Ventilkörper 52.1 angeordnet ist. Die zweite Rückschlagventilanordnung 21.2 weist die beiden Einsatzteile 49.2.1 und 49.2.1 der Einsatzteile 49.1; 49.1.1, 49.1.2; 49.2; 49.2.1, 49.2.2 auf. Das Einsatzteil 49.2.1 ist auch mit zweites Primär-Einsatzteil bezeichnet. Das Einsatzteil 49.2.2 ist auch mit zweites Sekundär-Einsatzteil bezeichnet. Das zweite Primär-Einsatzteil 49.2.1 umfasst die dritte Öffnung 25.3, in welcher der zweite Primär-Ventilkörper 69.2 angeordnet ist. Das zweite Sekundär-Einsatzteil 49.2.2 umfasst die vierte Öffnung 25.4, in welcher der zweite Sekundär-Ventilkörper 52.2 angeordnet ist.

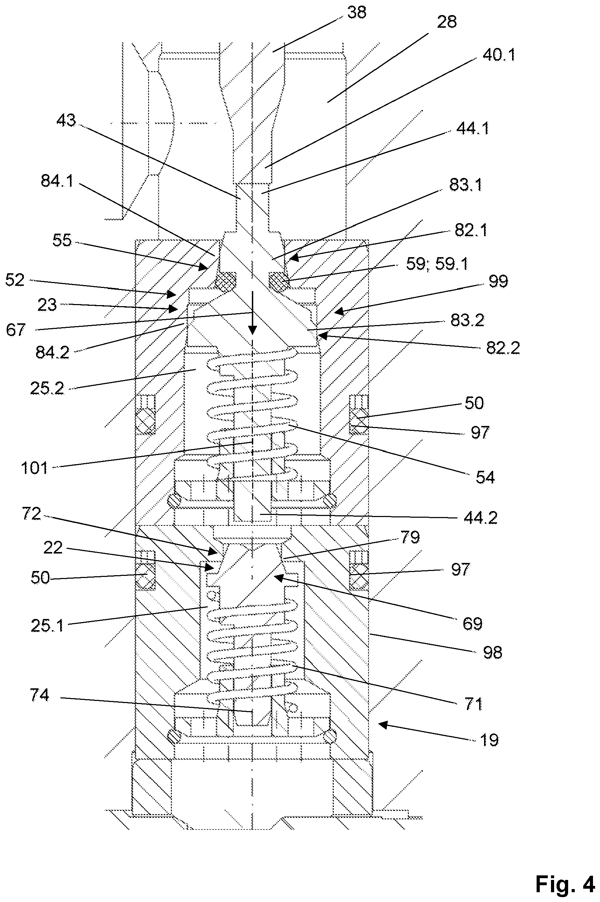

Die beiden Rückschlagventilanordnungen 21.1, 21.2 sind gleich gestaltet, jedoch in entgegengesetzte Fließrichtungen des Antriebsfluids sperrend bzw. öffnend ausgebildet. Aus Vereinfachungsgründen wird deshalb nachfolgend nur die in den Figuren 3 und 4 links dargestellte erste Rückschlagventilanordnung 21.1 beschrieben. Dabei werden für gleiche Bauteile der beiden Rückschlagventilanordnungen 21.1, 21.2 übergeordnete Basis-Bezugszeichen verwendet, also beispielsweise das übergeordnete Bezugszeichen 21 für die Rückschlagventilanordnung. Die nachfolgende Beschreibung gilt entsprechend für die zweite Rückschlagventilanordnung 21.2.

Das Sekundär-Rückschlagventil 23 der Rückschlagventilanordnung 21 weist den zentralen Sekundär-Steuerschaft 43 auf, der in Richtung seiner Sekundär-Steuerschaft-Axialachse bzw. -Längsachse 46 in der Axialrichtung 32 relativ zu dem Hydraulikblock 19 bewegbar ist. Der Sekundär-Steuerschaft 43 kann auch mit Sekundär-Ventilstößel bezeichnet werden. Der Sekundär-Steuerschaft 43 weist einen Sekundär-Führungsschaft 100 auf, der sich, in Richtung seiner Sekundär-Führungsschaft-Axialachse 101 betrachtet, zwischen dem zweiten Drosselkörper 83.2 einerseits und dem freien Sekundär-Steuerschaft-Ende 44.2 des Sekundär-Steuerschafts andererseits, in Richtung seiner Sekundär-Führungsschaft-Axialachse 101 erstreckt. Der Sekundär-Führungsschaft 100 ist in einer Sekundär-Führungsschaft-Aufnahme 102 des Sekundär-Einsatzteils 49.2 des Hydraulikblocks 19 mit geringem Spiel in Richtung seiner Sekundär-Führungsschaft-Längsachse 101 in der Axialrichtung 32 bewegbar geführt.

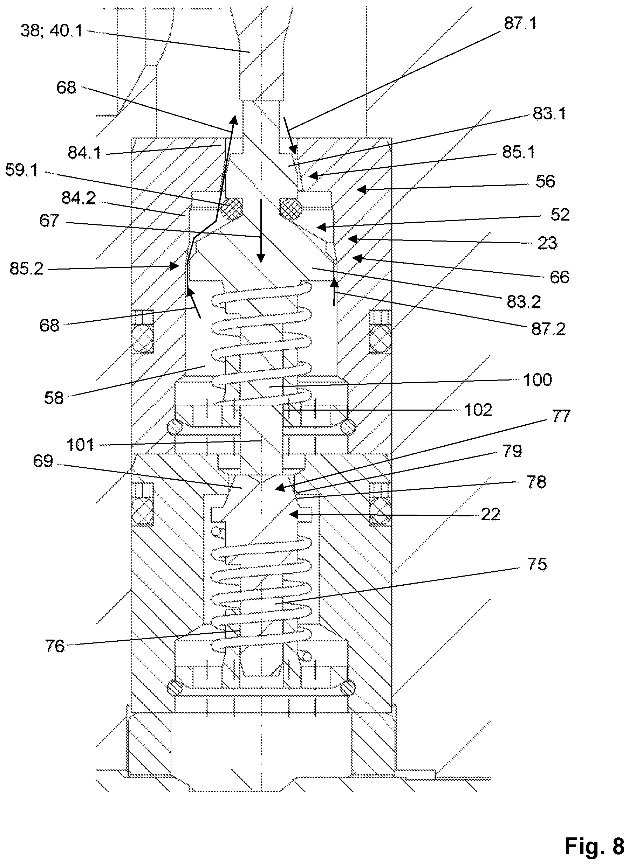

Der Sekundär-Steuerschaft 43 ist rotationssymmetrisch zu seiner Sekundär-Steuerschaft-Axialachse bzw. -Längsachse 46 gestaltet. Der Sekundär-Steuerschaft 43 ist mit dem Sekundär-Ventilkörper 52 versehen. Der Sekundär-Ventilkörper 52 ist, je nach Ansteuerung, direkt mittels des Antriebsfluids oder indirekt mittels des Steuerkolbens 31 von seiner in Figur 3 gezeigten Sekundär-Ventilkörper-Schließstellung 53, in welcher er beaufschlagt durch eine Federkraft einer Sekundär-Feder 62 an einem Sekundär-Ventilsitz 55 des Sekundär- Einsatzteils 49.2 des Hydraulikblocks 19 anliegt, gegen die Federkraft der Sekundär-Feder 54 in der Axialrichtung 32 relativ zu dem Sekundär-Einsatzteil 49. 2 des Hydraulikblock 19 in eine beispielsweise in Figur 8 gezeigte Sekundär-Ventilkörper-Öffnungsstellung 56 bewegbar, in welcher ein Durchfluss des Antriebsfluids durch das Sekundär-Rückschlagventil 23 möglich ist.

Der Sekundär-Ventilkörper 52 ist mit einem starren Sekundär-Ventilkörperteil 57 aus Metall und mit einer torusförmigen, federelastisch komprimierbaren Dichtung 59, vorzugsweise aus einem Elastomer, versehen. Bei dieser Dichtung 59 handelt es sich um einen Dichtring 59.1 in Form eines O-Rings. Die Dichtring 59.1 ist rotationssymmetrisch zu seiner Axialachse gestaltet. Er weist einen Innendurchmesser, einen Außendurchmesser und eine auch als Schnurstärke bezeichnete Dichtring-Dicke auf. Der Dichtring 59.1 ist als ein umlaufender Ring, vorzugsweise aus Vollmaterial, gestaltet, der einen kreisförmigen bzw. runden Querschnitt aufweist. Der Dichtring 59.1 ist in einer radial nach außen offenen ringförmigen Nut 64.1 des Sekundär-Steuerschafts 43 aufgenommen. Die Nut 64.1 weist einen Nutgrund 106.1 auf, der im gezeigten Ausführungsbeispiel von einer kreiszylindrischen Nutgrund-Fläche 110.1 begrenzt ist. Die Nutgrund-Fläche 110.1 erstreckt sich parallel zu der Sekundär-Steuerschaft-Axialachse 46. Der als O-Ring gestaltete Dichtring 59.1 liegt an der Nutgrund-Fläche 110.1 unter Vorspannung an. Dies ist dadurch erreicht, dass der Innendurchmesser des Dichtrings 59.1 kleiner ist als der Außendurchmesser der Nutgrund-Fläche 110.1. Der Dichtring 59.1 kann bevorzugt aus NBR (Acrylnitril-Butadien-Kautschuk; auch mit Nitrilkautschuk bezeichnet) bestehen. Er kann bevorzugt eine Härte von 90 Shore A bzw. eine Shorehärte von 90SH A aufweisen. Der Dichtring 59.1 kann vorteilhaft durch Spritzgießen hergestellt sein.

Der Sekundär-Ventilkörperteil 57 weist eine konische Sekundär-Ventilkörper-Anlagefläche 60 auf. Die Sekundär-Ventilkörper-Anlagefläche 60 erweitert sich, in einer ersten Fließrichtung 61 des Antriebsfluids von dem ersten Hydraulikeinlass 26.1 durch die Schleusenkammer 24 in die erste Arbeitskammer 17 betrachtet, radial nach außen. Die Sekundär-Ventilkörper-Anlagefläche 60 ist, in der ersten Fließrichtung 61 betrachtet, nach der Dichtung 59 angeordnet. Der Sekundär-Ventilkörperteil 57 des Sekundär-Ventilkörpers 52 liegt in der in Figur 3 gezeigten Sekundär-Ventilkörper-Schließstellung 53 mit seiner Sekundär-Ventilkörper-Anlagefläche 60 an einer zugeordneten kreisringförmigen Sekundär-Schulter 62 des Sekundär-Ventilsitzes 55 des Sekundär-Einsatzteils 49.2 des Hydraulikblocks 19 an. Die Sekundär-Schulter 62 des Sekundär-Ventilsitzes 55 besteht aus Metall. In der in Figur 3 gezeigten Sekundär-Ventilkörper-Schließstellung 53 liegt die elastomere Dichtung 59 in einem federelastisch komprimierten Zustand an einer zugeordneten konischen Anlagefläche 63 des Sekundär-Ventilsitzes 55 des Sekundär-Einsatzteils 49.2 des Hydraulikblocks 19 dicht an, so dass das Sekundär-Rückschlagventil 23 gegen einen Durchfluss des Antriebsfluids abgesperrt ist. Die der Dichtung 59 zugeordnete Anlagefläche 63 des Sekundär-Ventilsitzes 55 erweitert sich, in der ersten Fließrichtung 61 betrachtet, radial nach außen.

In der Sekundär-Ventilkörper-Schließstellung 53 des Sekundär-Ventilkörpers 52 befindet sich der Sekundär-Steuerschaft 43 in einer Sekundär-Steuerschaft-Schließstellung 65 (siehe Figur 3). In der Sekundär-Ventilkörper-Öffnungsstellung 56 des Sekundär-Ventilkörpers 52 befindet sich der Sekundär-Steuerschaft 43 in einer Sekundär-Steuerschaft-Öffnungsstellung 66 (siehe z.B. Figur 8).

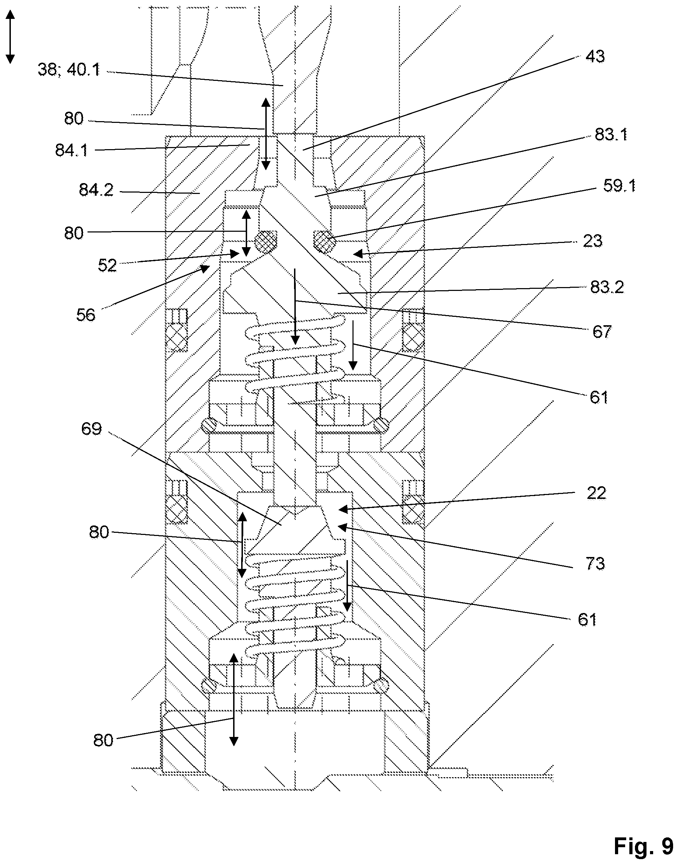

Das Primär-Rückschlagventil 22 weist einen Primär-Ventilkörper 69 auf. Der Primär-Ventilkörper 69 ist von seiner in Figur 3 gezeigten Primär-Ventilkörper-Schließstellung 70, in welcher er beaufschlagt durch eine Federkraft einer Primär-Feder 71 an einem Primär-Ventilsitz 72 des Primär-Einsatzteils 49.1 des Hydraulikblocks 19 anliegt, mittels des Sekundär-Steuerschafts 43 des Sekundär-Rückschlagventils 23 gegen die Federkraft der Primär-Feder 71 relativ zu dem Primär-Einsatzteil 49.1 des Hydraulikblocks 19 in eine Primär-Ventilkörper-Öffnungsstellung 73 bewegbar, in welcher ein Durchfluss des Antriebsfluids durch das Primär-Rückschlagventil 22 möglich ist (siehe beispielsweise Figur 9).

Das Primär-Rückschlagventil 22 weist einen sich in Richtung seiner Primär-Führungsschaft-Axialachse- bzw. -Längsachse 74 erstreckenden Primär-Führungsschaft 75 auf, der mit dem Primär-Ventilkörper 69 versehen ist. Der Primär-Führungsschaft 75 ist rotationssymmetrisch zu seiner Primär-Führungsschaft-Axialachse bzw. -Längsachse 74 gestaltet. Der Primär-Führungsschaft 75 ist in einer Primär-Führungsschaft-Aufnahme 76 des Primär-Einsatzteils 49.1 des Hydraulikblocks 19 mit einem geringen radialen Spiel in Richtung seiner Primär-Führungsschaft-Längsachse 74 bzw. in der Axialrichtung 32 bewegbar geführt.

Der Primär-Ventilkörper 69 weist einen starren Primär-Ventilkörperteil 77 aus Metall auf. Der Primär-Ventilkörper 69 weist eine konische Primär-Ventilkörper-Anlagefläche 78 auf. Die Primär-Ventilkörper-Anlagefläche 78 erweitert sich, in der ersten Fließrichtung 61 betrachtet, radial nach außen. Der Primär-Ventilkörperteil 77 des Primär-Ventilkörpers 69 liegt in der in Figur 3 gezeigten Primär-Ventilkörper-Schließstellung 70 an einer kreisringförmigen starren Primär-Schulter 79 des Hydraulikblocks 19 an. Die Primär-Schulter 79 besteht aus Metall.

In der Primär-Ventilkörper-Öffnungsstellung 73 des Primär-Ventilkörpers 69 des Primär-Rückschlagventils 22 und in der Sekundär-Ventilkörper-Öffnungsstellung 56 des Sekundär-Ventilkörpers 52 des Sekundär-Rückschlagventils 23 ist ein Durchgangsweg 80 für das Antriebsfluid eröffnet, so dass das Antriebsfluid von dem ersten Hydraulikeinlass 26.1 über die Schleusenkammer 24 zu der Arbeitskammer 17 strömen kann, und umgekehrt (siehe Figur 9).

In der Sekundär-Ventilkörper-Schließstellung 53 des Sekundär-Ventilkörpers 52 und in der Primär-Ventilkörper-Schließstellung 70 des Primär-Ventilkörpers 69 ist das dem Primär-Ventilkörper 69 zugewandte zweites freie Sekundär-Steuerschaft-Ende 44.2 des Sekundär-Steuerschafts 43 in einem axialen Abstand 81 zu dem Primär-Ventilkörper 69 angeordnet. Dann befindet sich zwischen dem zweiten freien Sekundär-Steuerschaft-Ende 44.2 des Sekundär-Steuerschafts 43 und dem Primär-Ventilkörper 69 ein Hohlraum bzw. Freiraum, in dem Antriebsfluid enthalten sein kann (siehe Figuren 3, 4, 6) .

Das Sekundär-Rückschlagventil 23 umfasst eine erste Drossel 82.1 und eine zweite Drossel 82.2. Die erste Drossel 82.1 ist, in der ersten Fließrichtung 61 betrachtet, vor der Dichtung 59 ausgebildet. Die erste Drossel 82.1 ist mit einem ersten Drosselkörper 83.1 des Sekundär-Steuerschafts 43 und mit einem ersten Drossel-Gegenkörper 84.1 des Sekundär-Einsatzteils 49.2 des Hydraulikblocks 19 ausgebildet. Die zweite Drossel 82.2 ist, in der ersten Fließrichtung 61 betrachtet, nach der Dichtung 59 ausgebildet. Die zweite Drossel 82.2 ist mit einem zweiten Drosselkörper 83.2 des Sekundär-Steuerschafts 43 und mit einem zweiten Drossel-Gegenkörper 84.2 des Sekundär-Einsatzteile 49.2 des Hydraulikblocks 19 ausgebildet.

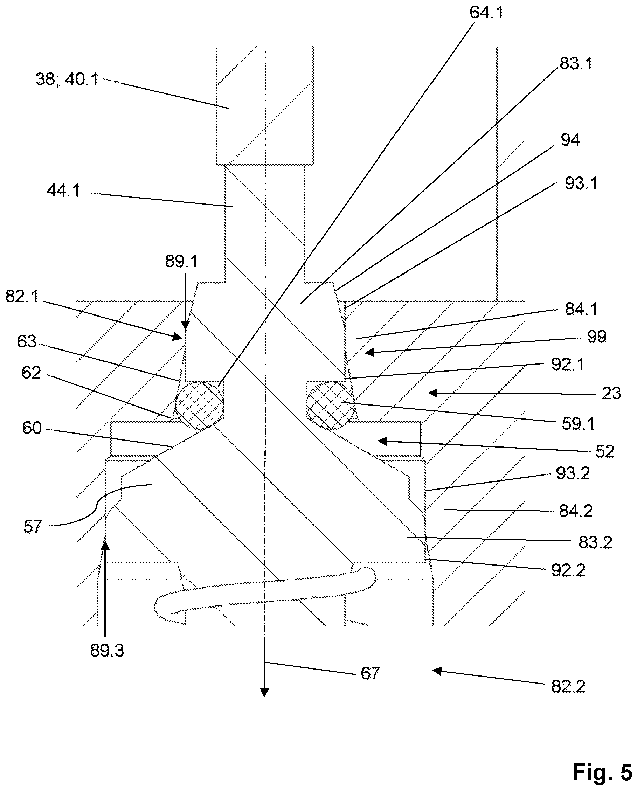

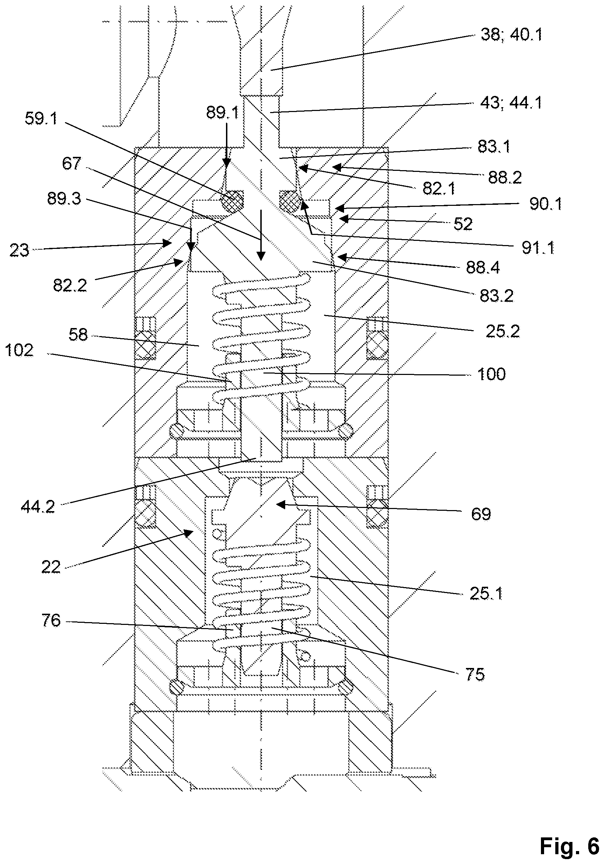

Der Sekundär-Steuerschaft 43 und der Hydraulikblock 19 bzw. dessen Einsatzteile 49.1, 49.2 sind derart aufeinander abgestimmt gestaltet, dass der erste Drosselkörper 83.1 sich in der Sekundär-Steuerschaft-Öffnungsstellung 66 in einer ersten Drosselkörper-Öffnungsstellung 85.1 befindet, in welcher zwischen dem ersten Drosselkörper 83.1 und dem ersten Drossel-Gegenkörper 84.1 ein, vorzugsweise ringförmiger, erster Drossel-Öffnungsspalt 87.1 ausgebildet ist (siehe Figur 8), und dass der zweite Drosselkörper 83.2 sich in der Sekundär-Steuerschaft-Öffnungsstellung 66 in einer zweiten Drosselkörper-Öffnungsstellung 85.2 befindet, in welcher zwischen dem zweiten Drosselkörper 83.2 und dem zweiten Drossel-Gegenkörper 84.2 ein, vorzugsweise ringförmiger, zweiter Drossel-Öffnungsspalt 87.2 ausgebildet ist (siehe Figur 8). Ferner sind der Sekundär-Steuerschaft 43 und der Hydraulikblock 19 bzw. dessen Einsatzteile 49.1, 49.2 derart aufeinander abgestimmt gestaltet, dass der erste Drosselkörper 83.1 sich in der Sekundär-Steuerschaft-Schließstellung 65 des Sekundär-Steuerschafts 43 in einer ersten Drosselkörper-Schließstellung 88.1 befindet (siehe Figur 3), in welcher zwischen dem ersten Drosselkörper 83.1 und dem ersten Drossel-Gegenkörper 84.1 ein, vorzugsweise ringförmiger, erster Drossel-Schließspalt 89.1 ausgebildet ist (siehe auch Figur 5), der sehr viel kleiner ist als der erste Drossel-Öffnungsspalt 87.1 und der hier etwa 0,005 mm bis etwa 0,02 mm beträgt. Dadurch kann im Wesentlichen kein oder nur sehr wenig Antriebsfluid, pro Zeiteinheit, den ersten Drossel-Schließspalt 89.1 passieren. Außerdem sind der Sekundär-Steuerschaft 43 und der Hydraulikblock 19 bzw. dessen Einsatzteile 49.1, 49.2 derart aufeinander abgestimmt gestaltet, dass der zweite Drosselkörper 83.2 sich in der Sekundär-Steuerschaft-Schließstellung 65 des Sekundär-Steuerschafts 43 in einer dritten Drosselkörper-Schließstellung 88.3 befindet (siehe Figur 3), in welcher zwischen dem zweiten Drosselkörper 83.2 und dem zweiten Drossel-Gegenkörper 84.2 ein, vorzugsweise ringförmiger, dritter Drossel-Schließspalt 89.3 ausgebildet ist (siehe auch Figur 5), der ebenfalls sehr viel kleiner ist als der zweite Drossel-Öffnungsspalt 87.2 und der hier ebenfalls etwa 0,005 mm bis etwa 0,02 mm beträgt. Dadurch kann im Wesentlichen kein Antriebsfluid oder nur sehr wenig Antriebsfluid, pro Zeiteinheit, den dritten Drossel-Schließspalt 89.3 passieren. Ferner sind der Sekundär-Steuerschaft 43 und der Hydraulikblock 19 bzw. dessen Einsatzteile 49.1, 49.2 derart aufeinander abgestimmt gestaltet, dass der Sekundär-Steuerschaft 43 von seiner Sekundär-Steuerschaft-Schließstellung 65 in der Axialrichtung 32 in eine erste Sekundär-Steuerschaft-Zwischenstellung 90.1 überführbar ist, und umgekehrt (Figur 6), in welcher der erste Drosselkörper 83.1 sich in einer zweiten Drosselkörper-Schließstellung 88.2 befindet, in welcher nach wie vor zwischen dem ersten Drosselkörper 83.1 und dem ersten Drossel-Gegenkörper 84.1 der, vorzugsweise ringförmige, erste Drossel-Schließspalt 89.1 ausgebildet ist, und in welcher der zweite Drosselkörper 83.2 sich in einer vierten Drosselkörper-Schließstellung 88.4 befindet, in welcher nach wie vor zwischen dem zweiten Drosselkörper 83.2 und dem zweiten Drossel-Gegenkörper 84.2 der, vorzugsweise ringförmige, dritte Drossel-Schließspalt 89.3 ausgebildet ist. Dadurch kann nach wie vor im Wesentlichen kein oder nur sehr wenig Antriebsfluid, pro Zeiteinheit, den ersten Drossel-Schließspalt 89.1 und den dritten Drossel-Schließspalt 89.3 passieren. In dieser ersten Sekundär-Steuerschaft-Zwischenstellung 90.1 ist jedoch der Sekundär-Ventilkörper 52 mit seiner Dichtung 59 von der Anlagefläche 63 des Sekundär-Ventilsitzes 55 unter Ausbildung eines ersten Durchströmspalts 91.1 abgehoben. Außerdem sind der Sekundär-Steuerschaft 43 und der Hydraulikblock 19 bzw. dessen Einsatzteile 49.1, 49.2 derart aufeinander abgestimmt gestaltet, dass der Sekundär-Steuerschaft 43 von seiner ersten Sekundär-Steuerschaft-Zwischenstellung 90.1 in der Axialrichtung 32 in seine Sekundär-Steuerschaft-Öffnungsstellung 66 bewegbar ist, und umgekehrt (siehe Figur 8), in welcher der erste Drosselkörper 83.1 sich in der ersten Drosselkörper-Öffnungsstellung 85.1 befindet, in welcher zwischen dem ersten Drosselkörper 83.1 und dem ersten Drossel-Gegenkörper 84.1 der erste Drossel-Öffnungsspalt 87.1 ausgebildet ist und in welcher der zweite Drosselkörper 83.2 sich in der zweiten Drosselkörper-Öffnungsstellung 85.2 befindet, in welcher zwischen dem zweiten Drosselkörper 83.2 und dem zweiten Drossel-Gegenkörper 84.2 der zweite Drossel-Öffnungsspalt 87.2 ausgebildet ist, und in welcher nun auch der Sekundär-Ventilkörper 52 mit seiner Dichtung 59 von der Anlagefläche 63 des Sekundär-Ventilsitzes 55 unter Ausbildung eines zweiten Durchströmspalts 91.2 abgehoben ist.

In der Sekundär-Steuerschaft-Schließstellung 65 und in der ersten Sekundär-Steuerschaft-Zwischenstellung 90.1 liegt der erste Drossel-Gegenkörper 84.1 dem ersten Drosselkörper 83.1 des Sekundär-Steuerschafts 43 unmittelbar gegenüber und liegt der zweite Drossel-Gegenkörper 84.2 dem zweiten Drosselkörper 83.2 des Sekundär-Steuerschafts 43 unmittelbar gegenüber. In der Sekundär-Steuerschaft-Schließstellung 65 und in der ersten Sekundär-Steuerschaft-Zwischenstellung 90.1 beträgt ein erstes Spiel zwischen dem ersten Drosselkörper 83.1 und dem ersten Drossel-Gegenkörper 84.1 maximal etwa 0,04 mm und beträgt ein zweites Spiel zwischen dem zweiten Drosselkörper 83.2 und dem zweiten Drossel-Gegenkörper 84.2 ebenfalls maximal etwa 0,04 mm. Dadurch ist sichergestellt, dass über eine lange Einsatzzeit beim Öffnen und Schließen des Sekundär-Rückschlagventils 23 eine Strömung des Antriebsfluids entlang der Dichtung 59 verhindert wird, die eine Beschädigung und/oder Verlagerung der Dichtung 59 bewirken könnte. Das erste Spiel und das zweite Spiel betragen jeweils minimal etwa 0,01 mm. Dadurch wird sichergestellt, dass der Sekundär-Steuerschaft 43 des Sekundär-Rückschlagventils 23 ausgehend von einer beliebig möglichen Sekundär-Steuerschaft-Öffnungsstellung des Sekundär-Steuerschaft 43 stets ausschließlich bzw. allein durch die Federkraft der Sekundär-Feder 54 in seine Sekundär-Steuerschaft-Schließstellung 65 überführt wird, in welcher das Sekundär-Rückschlagventil 23 gegen einen Durchfluss des Arbeitsfluids abgesperrt ist.

Der erste Drosselkörper 83.1 weist eine kreiszylindrische erste Drosselfläche 92.1 auf. Der erste Drossel-Gegenkörper 84.1 weist eine kreiszylindrische erste Drossel-Gegenfläche 93.1 auf. Die erste Drosselfläche 92.1 und die erste Drossel-Gegenfläche 93.1 erstrecken sich der Axialrichtung 32. In der Sekundär-Steuerschaft-Schließstellung 65 des Sekundär-Steuerschafts 43 und in der ersten Sekundär-Steuerschaft-Zwischenstellung 90.1 des Sekundär-Steuerschafts 43 liegen sich die erste Drosselfläche 93.1 und die erste Drossel-Gegenfläche 94.1 radial unmittelbar unter Ausbildung einer ersten Spielpassung gegenüber. Das der ersten Spielpassung zugeordnete erste Spiel beträgt, wie bereits vorstehend erwähnt, maximal etwa 0,04 mm.

Der zweite Drosselkörper 83.2 weist eine kreiszylindrische zweite Drosselfläche 92.2 auf. Der zweite Drossel-Gegenkörper 84.2 weist eine kreiszylindrische zweite Drossel-Gegenfläche 93.2 auf. Die zweite Drosselfläche 92.2 und die zweite Drossel-Gegenfläche 93.2 erstrecken sich der Axialrichtung 32. In der Sekundär-Steuerschaft-Schließstellung 65 des Sekundär-Steuerschafts 43 und in der ersten Sekundär-Steuerschaft-Zwischenstellung 90.1 des Sekundär-Steuerschafts 43 liegen sich die zweite Drosselfläche 92.2 und die zweite Drossel-Gegenfläche 93.2 radial unmittelbar unter Ausbildung einer zweiten Spielpassung gegenüber. Das der zweiten Spielpassung zugeordnete zweite Spiel beträgt, wie bereits ebenfalls schon vorstehend erwähnt, maximal etwa 0,04 mm. Die erste Drosselfläche 92.1 des ersten Drosselkörpers 83.1 erstreckt sich parallel zu der Sekundär-Steuerschaft-Längsachse 46 des Sekundär-Steuerschafts 43 und erstreckt sich parallel zu der ersten Drossel-Gegenfläche 93.1 des Hydraulikblocks 19. Die zweite Drosselfläche 92.2 des zweiten Drosselkörpers 83.2 erstreckt sich parallel zu der Sekundär-Steuerschaft-Längsachse 46 des Sekundär-Steuerschafts 43 und erstreckt sich parallel zu der zweiten Drossel-Gegenfläche 93.2 des Hydraulikblocks 19. Demgemäß erstrecken sich die erste Drosselfläche 92.1 des ersten Drosselkörpers 83.1 und die zweite Drosselfläche 92.2 des zweiten Drosselkörpers 83.2 parallel zueinander. Auch die erste Drossel-Gegenfläche 93.1 des ersten Drossel-Gegenkörpers 84.1 und die zweite Drossel-Gegenfläche 93.2 des zweiten Drossel-Gegenkörpers 84.2 erstrecken sich parallel zueinander. Die erste Drosselfläche 92.1 des ersten Drosselkörpers 83.1 begrenzt einen ersten Drosselkörper-Außendurchmesser. Die zweite Drosselfläche 92.2 des zweiten Drosselkörpers 83.2 begrenzt einen zweiten Drosselköper-Außendurchmesser. Vorzugsweise ist der zweite Drosselkörper-Außendurchmesser des zweiten Drosselkörpers 83.2 etwa doppelt so groß wie der erste Drosselkörper-Außendurchmesser des ersten Drosselkörpers 83.1.

Der Sekundär-Steuerschaft 43 weist in einem Axialbereich zwischen dem ersten Drosselkörper 83.1 und seinem ersten freien Sekundär-Steuerschaft-Ende 44.1 eine konische Einführschräge 94 auf. Die Einführschräge 94 verjüngt sich in einer Richtung entgegengesetzt zu der ersten Fließrichtung 61 von dem ersten Drosselkörper 83.1 zu dem ersten freien Sekundär-Steuerschaft-Ende 44.1. Dadurch wird erreicht, dass der erste Drosselkörper 83.1 beim Überführen des Sekundär-Steuerschafts 43 von seiner Sekundär-Steuerschaft-Öffnungsstellung 66 in einer Sekundär-Steuerschaft-Schließrichtung entgegengesetzt zu der Sekundär-Steuerschaft-Öffnungrichtung 67 in seine erste Sekundär-Steuerschaft-Zwischenstellung 90.1 die erste Drosselfläche 92.1 des ersten Drosselkörpers 83.1 und die erste Drossel-Gegenfläche 93.2 des Sekundär-Einsatzteils 49.2 des Hydraulikblocks 19 nicht beschädigt werden.

Wie in den Figuren 3 bis 9 ersichtlich, ist die Sekundär-Ventilkörper-Anlagefläche 60 des Sekundär-Ventilkörperteils 57 zwischen der Dichtung 59 und dem zweiten Drosselkörper 83.2 und folglich, in der ersten Fließrichtung 61 betrachtet, vor dem zweiten Drosselkörper 83.2 angeordnet.

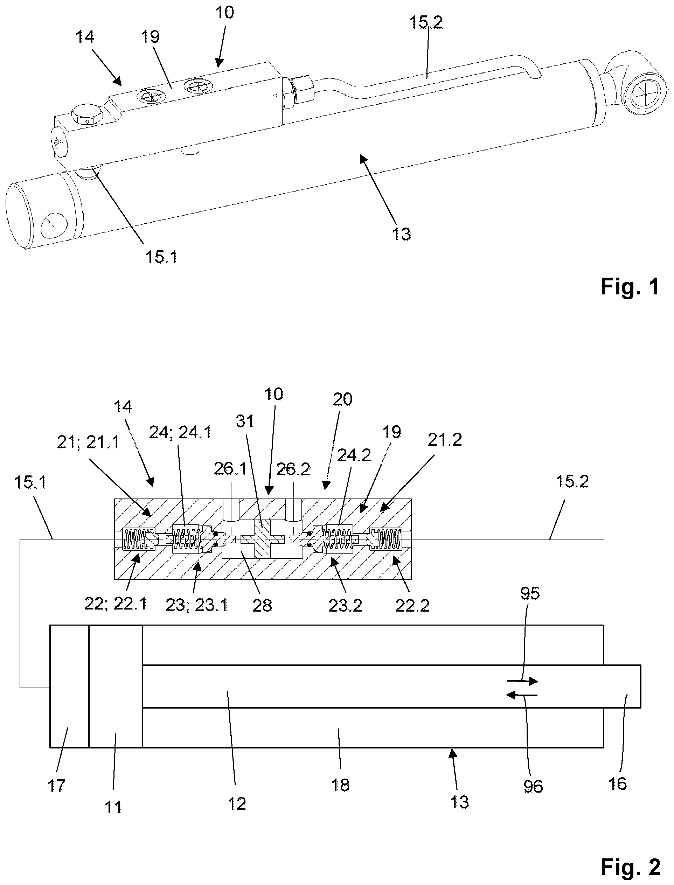

Nachfolgend wird mit Bezug auf die Figur 2 ein erster Verfahrensablauf beschrieben, bei dem erreicht wird, dass der Schaft 12 des Hydraulikzylinders 13 einfährt, sich also in der Pfeilrichtung 95 von rechts nach links bewegt. Zu diesem Zwecke wird der zweite Hydraulikeinlass 47.2 mit dem Antriebsfluid beaufschlagt. Dadurch öffnet zunächst das zweite Sekundär-Rückschlagventil 23.2 und nachfolgend das zweite Primär-Rückschlagventil 22.2 der zweiten Rückschlagventilanordnung 21.2. Zugleich wird durch die Beaufschlagung des zweiten Hydraulikeinlasses 47.2 mit dem Antriebsfluid erreicht, dass der Steuerkolben 31 sich in der Pfeilrichtung 95 von rechts nach links bewegt, wodurch zunächst das erste Sekundär-Rückschlagventil 23.1 und anschließend das erste Primär-Rückschlagventil 22.1 der ersten Rückschlagventilanordnung 21.1 geöffnet wird. Dadurch kann zum einen das Arbeitsfluid von dem zweiten Hydraulikeinlass 47.2 über die geöffneten Rückschlagventile 22.3, 22.2 der zweiten Rückschlagventilanordnung 21.2 in die zweite Arbeitskammer 18 der Hydraulikzylinders 13 strömen und zum anderen kann das von dem Kolben 11 aus der ersten Arbeitskammer 17 verdrängte Arbeitsfluid über die geöffneten Rückschlagventile 22.1, 23.1 der ersten Rückschlagventilanordnung 21.1 durch den dann als ersten Auslass dienenden ersten Hydraulikeinlass 47.1 abfließen.

Nachfolgend wird wiederum mit Bezug auf die Figur 2 ein zweiter Verfahrensablauf beschrieben, bei dem erreicht wird, dass der Schaft 12 des Hydraulikzylinders 13 ausfährt, sich also in der Pfeilrichtung 96 von links nach rechts bewegt. Zu diesem Zwecke wird der erste Hydraulikeinlass 47.1 mit dem Antriebsfluid beaufschlagt. Dadurch öffnet zunächst das erste Sekundär-Rückschlagventil 23.1 und nachfolgend das erste Primär-Rückschlagventil 22.1 der ersten Rückschlagventilanordnung 21.1. Zugleich wird durch die Beaufschlagung des ersten Hydraulikeinlasses 47.1 mit dem Antriebsfluid erreicht, dass der Steuerkolben 31 sich in der Pfeilrichtung 96 von links nach rechts bewegt, wodurch zunächst das zweite Sekundär-Rückschlagventil 23.2 und anschließend das zweite Primär-Rückschlagventil 22.2 der zweiten Rückschlagventilanordnung 21.2 geöffnet wird. Dadurch kann zum einen das Arbeitsfluid von dem ersten Hydraulikeinlass 47.1 über die geöffneten Rückschlagventile 23.1, 22.1 der ersten Rückschlagventilanordnung 21.1 in die erste Arbeitskammer 17 der Hydraulikzylinders 13 strömen und zum anderen kann das von dem Kolben 11 aus der zweiten Arbeitskammer 18 verdrängte Arbeitsfluid über die geöffneten Rückschlagventile 22.2, 23.2 der zweiten Rückschlagventilanordnung 21.2 durch den dann als zweiten Auslass dienenden zweiten Hydraulikeinlass 47.2 abfließen.

Wird nun beispielsweise ausgehend von dem ersten Verfahrensablauf die Beaufschlagung des zweiten Hydraulikeinlasses 47.2 mit Arbeitsfluid gestoppt, um den einfahrenden Schaft 12 in Stellung zu halten, dann schließt zunächst das zweite Primär-Rückschlagventil 22.2 und anschließend das zweite Sekundär-Rückschlagventil 23.2 der zweiten Rückschlagventilanordnung 21.2. Durch den Wegfall des Druckes des Antriebsfluids an dem Steuerkolben 31, wird dieser von der Federkraft der Sekundär-Feder 54 des ersten Sekundär-Rückschlagventils 23.1 mit Hilfe dessen Sekundär-Steuerschafts 43.1 wieder in Richtung seiner Neutralstellung 41 zurückgedrängt. Insbesondere wenn an dem freien Ende 43 des Schafts 12 beispielsweise eine Last angreift, die versucht, den Schaft 12 in der Pfeilrichtung 95 von rechts nach links zu verschieben, dann bewirkt dies ein forciertes Schließen des ersten Primär-Rückschlagventils 22.1 der ersten Rückschlagventilanordnung 21.1, worauf zeitversetzt auch deren erstes Sekundär-Rückschlagventil 23.1 schließt. Dann wird der Kolben 11 unter der Last gesichert durch das geschlossene erste Primär-Rückschlagventil 22.1 der ersten Rückschlagventilanordnung 21.1 in Stellung gehalten, und zwar abgesichert durch das geschlossene erste Sekundär-Rückschlagventil 23.1 der ersten Rückschlagventilanordnung 21.1.

Falls das erste Primär-Rückschlagventil 22 undicht ist oder über der Einsatzzeit undicht wird, beispielsweise aufgrund eines Verschleißes des Primär-Ventilkörpers 69 und/oder des Primär-Ventilsitzes 72, dann sichert das vollkommen dichte Sekundär-Rückschlagventil 23 den unter der Last beanspruchten Schaft 12 weiterhin in seiner Stellung. Eine solche Undichtigkeit des Primär-Rückschlagventils 22 führt jedoch dazu, dass das unter Druck stehende Arbeitsfluid sich in dem Hohlraum 58 der zweiten Öffnung 25.2 vor dem Sekundär-Ventilkörper 52 aufstaut, also dort in komprimierter Form vorliegt. Wird davon ausgehend das Sekundär-Rückschlagventil 23 aufgesteuert, entweder um den Schaft 12 in Pfeilrichtung 96 von links nach rechts auszufahren oder um den Schaft 12 in Pfeilrichtung 95 von rechts nach links weiter einzufahren, führt dies beim Aufsteuern des Sekundär-Rückschlagventils 23 der betroffenen Rückschlagventilanordnung 21 zur Ausbildung einer Dekompressionsströmung entlang der Dichtung 59 des Sekundär-Rückschlagventils 23 dieser Rückschlagventilanordnung 21.

Dies kann bei den aus dem Stand der Technik bekannten Vorrichtungen dazu führen, dass die dort eingesetzten Dichtungen der dort eingesetzten Sekundär-Ventilkörper beschädigt (Verschleiß) und/oder verlagert werden. Dies zu verhindern ist ein Hauptzweck der Erfindung.

Nachfolgend werden ausgehend von der Situation, bei welcher bei der in Figur 3 links gezeigten ersten Rückschlagventilanordnung der erfindungsgemäßen Vorrichtung 10 sowohl das Primär-Rückschlagventil 22 als auch das Sekundär-Rückschlagventil 23 geschlossen sind, die Vorgänge beim Öffnen der beiden Rückschlagventile 22, 23 beschrieben. Dabei werden weiterhin aus Vereinfachungsgründen nur die jeweiligen Basis-Bezugszeichen verwendet:
In dem in Figur 3 gezeigten Längsschnitt der Vorrichtung 10 befindet sich der Primär-Ventilkörper 69 des Primär-Rückschlagventils 22 der Rückschlagventilanordnung 21 beaufschlagt durch die Federkraft der Primär-Feder 71 in seiner Primär-Ventilkörper-Schließstellung 70 und der Sekundär-Ventilkörper 52 des Sekundär-Rückschlagventils 23 befindet sich beaufschlagt durch die Federkraft der Sekundär-Feder 54 in seiner Sekundär-Ventilkörper-Schließstellung 53. Davon ausgehend wird nun zunächst das Sekundär-Rückschlagventil 23 und nachfolgend das Primär-Rückschlagventil 21 geöffnet.

In der Figur 4 ist ein vergrößerter Ausschnitt eines Längsschnitts im Bereich der in Figur 3 unten gezeigten Rückschlagventilanordnung 21 gezeigt. Im Unterschied dazu ist nun der Sekundär-Steuerschaft 43 des Sekundär-Rückschlagventils 23 mittels des Steuerkolbens 31 von seiner Sekundär-Steuerschaft-Schließstellung 65 gegen die Federkraft der Sekundär-Feder 54 in einer Sekundär-Steuerschaft-Öffnungsrichtung 67 (hier von rechts nach links) in eine Übergangsstellung 99 verschoben, in welcher die beiden vor und nach der Dichtung 59 des Sekundär-Ventilkörpers 52 des Sekundär-Rückschlagventils 23 ausgebildeten Drosseln 82.1, 82.2 noch geschlossen sind, sich also deren Drosselkörper 83.1, 83.2 in ihren Drosselkörper-Schließstellungen 88.1, 88. 2 befinden, in denen der erste Drossel-Schließspalt 89.1 und der dritte Drossel-Schließspalt 89.3 ausgebildet sind, und in welcher die Dichtung 59 gerade noch nicht von der ihr zugeordneten Anlagefläche 63 des Sekundär-Ventilsitzes 55 des Sekundär-Rückschlagventils 23 abgehoben ist, und in welcher das Primär-Rückschlagventil 22 noch geschlossen ist.

In Figur 5 ist zur besseren Veranschaulichung dieser Übergangsstellung 99 ein stark vergrößerter Ausschnitt des Längsschnitts gemäß Figur 4 im Bereich des Sekundär-Rückschlagventils 23 gezeigt.

Die Figur 6 zeigt den Längsschnitt gemäß Figur 4. Im Unterschied dazu ist nun der Sekundär-Steuerschaft 43 mittels des Steuerkolbens 31 weiter in seiner Sekundär-Steuerschaft-Öffnungsrichtung 67 gegen die Federkraft der Sekundär-Feder 54 in die erste Sekundär-Steuerschaft-Zwischenstellung 90.1 verschoben, in welcher die beiden vor und nach der Dichtung ausgebildeten Drosseln 82.1, 82.2 nach wie vor geschlossen sind, sich also deren Drosselkörper 83.1, 83.2 in ihren Drosselkörper-Schließstellungen 88.1, 88.2 befinden, in denen nach wie vor der erste Drossel-Schließspalt 89.1 und dritte Drossel-Schließspalt 89.3 ausgebildet sind, in welcher jedoch nun die Dichtung 59 von der ihr zugeordneten Anlagefläche 63 des Sekundär-Ventilsitzes 55 abgehoben ist, wobei das Primär-Rückschlagventil 22 noch immer geschlossen ist.

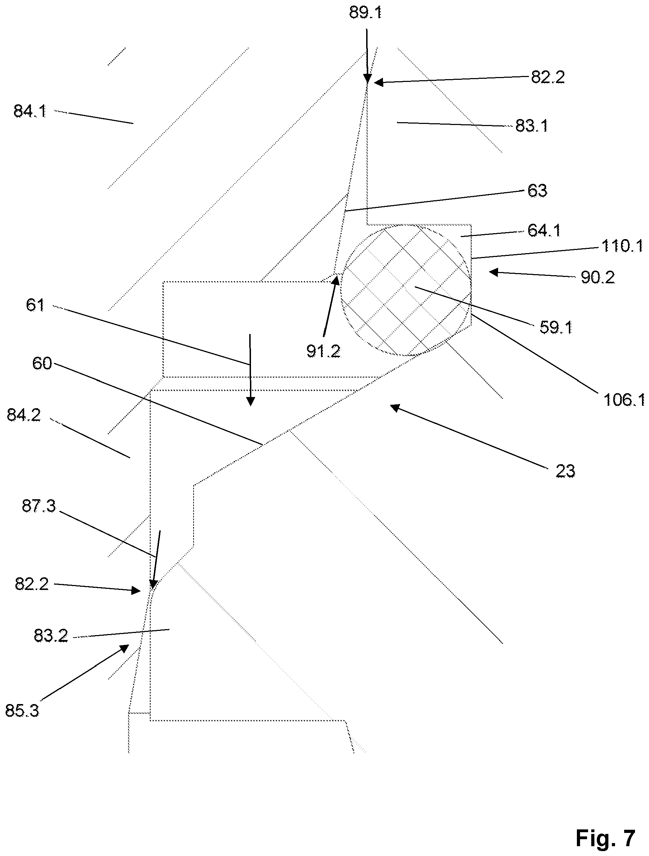

Die Figur 7 zeigt einen stark vergrößerten Ausschnitt des Längsschnitts gemäß Figur 6 im Bereich des Sekundär-Rückschlagventils 23. Im Unterschied dazu ist nun der Sekundär-Steuerschaft 43 mittels des Steuerkolbens 31 etwas weiter in seiner Sekundär-Steuerschaft-Öffnungsrichtung 67 gegen die Federkraft der Sekundär-Feder 54 in eine zweite Sekundär-Steuerschaft-Zwischenstellung 90.2 verschoben, in welcher die nach der Dichtung 59 ausgebildete zweite Drossel 82.2 bereits geöffnet ist, sich also der zweite Drosselkörper 83.2 in einer dritten Drosselkörper-Öffnungsstellung 85.3 befindet, in welcher zwischen dem zweiten Drosselkörper 83.2 und dem zweiten Drossel-Gegenkörper 84.2 ein dritter Drossel-Öffnungsspalt 87.3 ausgebildet ist, vorzugsweise der kleiner ist als der zweite Drossel-Öffnungsspalt, jedoch die vor der Dichtung 59 ausgebildete erste Drossel 82.1 bzw. der dritte Drossel-Schließspalt 89.3 gerade noch geschlossen ist, sich also der erste Drosselkörper 83.1 nach wie vor in einer Drosselkörper-Schließstellung befindet, in welcher noch immer der erste Drossel-Schließspalt 89.1 ausgebildet sind,

In dieser zweiten Sekundär-Steuerschaft-Zwischenstellung 90.2 ist die Dichtung 59 weiterhin von der ihr zugeordneten Anlagefläche 63 des Sekundär-Ventilsitzes 55 abgehoben. Außerdem ist das hier nicht gezeigte Primär-Rückschlagventil 22 noch immer geschlossen.

Die Figur 8 zeigt den Längsschnitt gemäß Figur 6. Im Unterschied dazu ist nun der Sekundär-Steuerschaft 43 in seiner Sekundär-Steuerschaft-Öffnungsrichtung 67 mittels des Steuerkolbens 31 gegen die Federkraft der Sekundär-Feder 54 weiter in die Sekundär-Steuerschaft-Öffnungsstellung 66 verschoben, in welcher nun auch die vor der Dichtung 59 ausgebildete erste Drossel 82.1 bzw. der erste Drossel-Schließspalt 89.1 geöffnet ist, also nun auch der erste Drosselkörper 83.1 sich in einer oder der Drosselkörper-Öffnungsstellung 85.1 befindet, in welcher ein oder der erster Drossel-Öffnungsspalt 87.1 ausgebildet ist, und in welcher nach wie vor die nach der Dichtung ausgebildete zweite Drossel 82.2 bzw. der zweite Drossel-Schließspalt 89.2 geöffnet ist, wobei der zweite Drosselkörper 83.2 sich in seiner zweiten Drosselkörper-Öffnungsstellung befindet, in welcher der zweite Drossel-Öffnungsspalt 87.2 ausgebildet ist, und in welcher die Dichtung 59 weiterhin von der ihr zugeordneten Anlagefläche 63 des Sekundär-Ventilsitzes 55 abgehoben ist. Dadurch ist nun ein Durchgangsweg für das Arbeitsfluid durch das Sekundär-Rückschlagventil 23 freigegeben, der in Figur 8 mit einer Pfeilfolge 68 schematisch veranschaulicht ist. Der Sekundär-Steuerschaft 43 ist in Figur 8 in einer Stellung gezeigt, in welcher das dem Primär-Ventilkörper 22 gegenüberliegende zweite freie Sekundär-Steuerschaft-Ende 44.2 Sekundär-Steuerschafts 43 gerade an dem sich in seiner Primär-Ventilkörper-Schließstellung 70 befindlichen Primär-Ventilkörper 69 des gerade noch geschlossenen Primär-Rückschlagventils 21 anliegt.

Die Figur 9 zeigt den Längsschnitt gemäß Figur 8. Im Unterscheid dazu ist nun der Sekundär-Steuerschaft 43 mittels des Steuerkolbens 31 weiter in seiner Sekundär-Steuerschaft-Öffnungsrichtung 67 gegen die Federkraft der Sekundär-Feder 54 verschoben, wodurch zugleich der Primär-Ventilkörper 69 gegen die Federkraft der Primär-Feder 71 des Primär-Rückschlagventils 22 in die Primär-Ventilkörper-Öffnungsstellung 73 verschoben ist, so dass nun ein Durchgangsweg 80 für das Arbeitsfluid sowohl durch das Sekundär-Rückschlagventil 23 als auch durch das Primär-Rückschlagventil 22 freigegeben ist.

Aufgrund der in der Sekundär-Steuerschaft-Schließstellung 65 des Sekundär-Steuerschafts 43 (Sekundär-Ventilstössel) des Sekundär-Rückschlagventils 23 ausgebildeten beiden Drossel-Schließspalte 89.1, 89.2 ist auf jeden Fall sichergestellt, dass beim Schließen des Sekundär-Rückschlagventils 83 die Ausbildung einer Strömung des Antriebsfluids aus der betroffenen Arbeitskammer 17, 18 des Hydraulikzylinders entlang der elastomeren Dichtung 59 des Sekundär-Ventilkörpers 52, die zu einem Verschleiß oder einer Verlagerung der elastomeren Dichtung 59 führen könnte, ausgeschlossen ist, weil zuerst die beiden Drosseln 82.1, 82.2 bzw. deren Drossel-Öffnungsspalte 87.1, 87.2 geschlossen, also die Drossel-Schließspalte 89.1, 89.2 ausgebildet werden, bevor die elastomere Dichtung 59 in Eingriff gelangt, also zur Anlage an der Anlagefläche 63 des Sekundär-Ventilsitzes 55 kommt. Analog kommt beim Öffnen des Sekundär-Rückschlagventils 23 zuerst die elastomere Dichtung 59 außer Eingriff, bevor auch nur einer der beiden Drossel-Schließspalte 89.1, 89.2 bzw. eine der beiden Drosseln 82.1, 82.2 geöffnet wird. Dadurch wird verhindert, dass eine etwaige Dekompressionsströmung des Antriebsfluids zu einem Verschleiß und/oder zu einer Verlagerung der Dichtung 59 führen könnte.

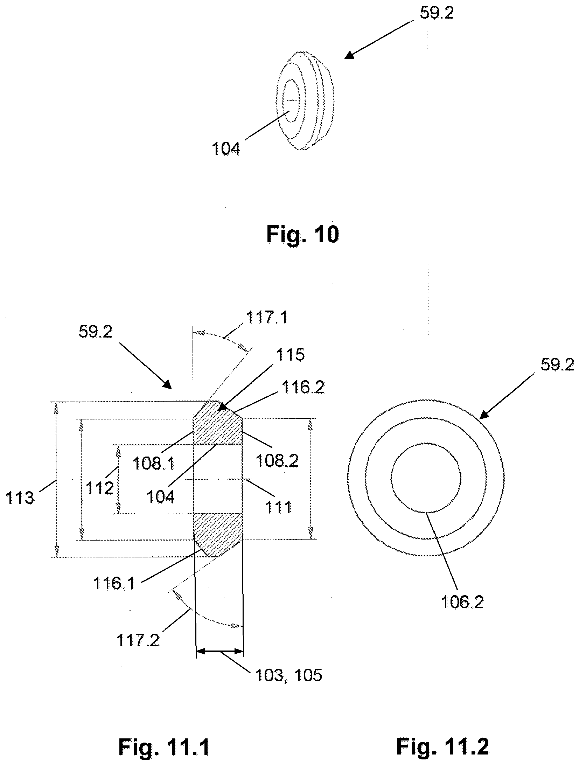

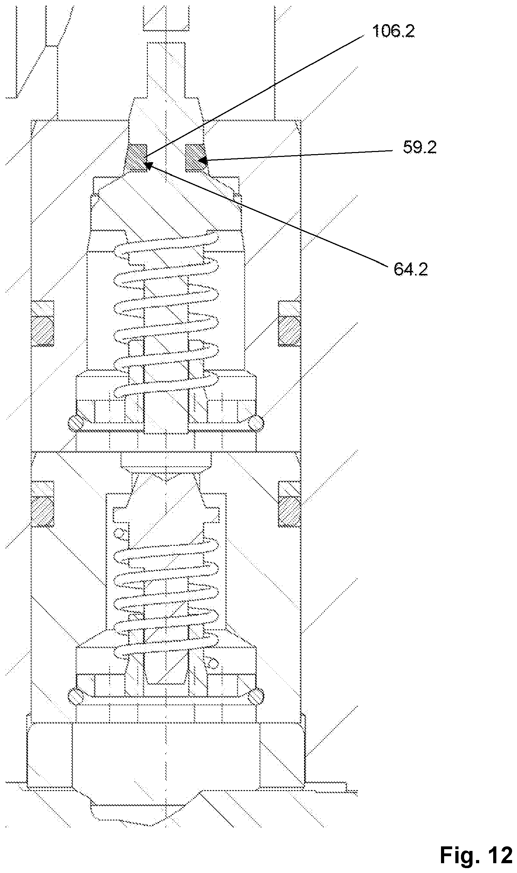

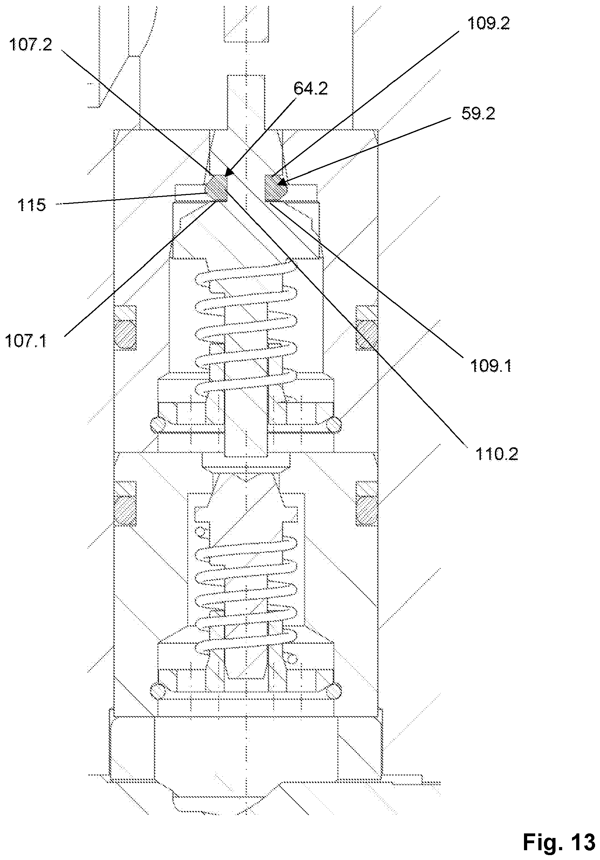

Im Unterschied zu den Figuren 2 bis 9, in denen als Dichtung 59 des Sekundär-Ventilkörpers 52 jeweils ein als O-Ring ausgebildeter Dichtring 59.1 gezeigt ist, ist in den Figuren 10 bis 13 eine alternative, bevorzugte, Dichtung 59 in Form eines speziellen Dichtrings 59.2 gezeigt. In den Figuren 10, 11.1 und 11.2 ist der separate Dichtring 59.2 in nicht eingebauten, unbelasteten Zustand gezeigt. In Figur 12 ist ein Ausschnitt des in Figur 3 gezeigten Längsschnitts des Hydraulikblocks gezeigt, wobei anstelle des als O-Ring ausgebildeten Dichtring 59.1 der Dichtring 59.2 gemäß Figur 10 eingesetzt ist. Die Figur 13 zeigt einen stark vergrößerten Ausschnitt des Längsschnitts gemäß Figur 7, wobei anstelle des als O-Ring ausgebildeten Dichtrings 59.1 der Dichtring 59.2 gemäß Figur 10 eingesetzt ist. Der Dichtring 59.2 ist ebenfalls federelastisch komprimierbar. Auch der Dichtring 59.2 ist rotationssymmetrisch zu seiner Axialachse gestaltet. Er weist einen Innendurchmesser 112 und einen Außendurchmesser 113 auf. Auch der Dichtring 59.2 ist als ein umlaufender Ring, vorzugsweise aus Vollmaterial, gestaltet. Der Dichtring 59.2 weist jedoch einen trapezförmigen Querschnitt auf. Der Dichtring 59.2 weist eine den Innendurchmesser 111 aufspannende, kreiszylindrische Dichtring-Innenfläche 104 auf. Der Dichtring 59.2 weist, in der Axialrichtung 32 betrachtet, eine maximale Dichtring-Breite 103 auf. Die kreiszylindrische Dichtring-Innenfläche 104 erstreckt sich, in der Axialrichtung 32 betrachtet, über eine Axiallänge 105. Die Axiallänge 105 entspricht der maximalen Dichtring-Breite 103. Die Axiallänge 105 ist also gleich groß wie die maximale Dichtring-Breite 103. Der Dichtring 59.2 ist in einer radial nach außen offenen, ringförmigen Nut 64.2 des Sekundär-Steuerschafts 43 aufgenommen. Die Nut 64.2 weist einen Nutgrund 106.2 auf, der von einer kreiszylindrischen Nutgrund-Fläche 110.2 begrenzt ist. Die Nutgrund-Fläche 110.2 erstreckt sich parallel zu der Sekundär-Steuerschaft-Axialachse 46. Der Dichtring 59.2 liegt über seine zylindrische Dichtring-Innenfläche 104 an einem kreiszylindrischen Nutgrund 106.2 der Nut 64.2 unter Vorspannung an. Dies ist dadurch erreicht, dass der Innendurchmesser 112 der Dichtring-Innenfläche 104 des Dichtrings 59.2 kleiner ist als der Außendurchmesser der Nutgrund-Fläche 110.2 des Nutgrunds 106.2 der Nut 64.2. Der Dichtring 59.2 weist auf seiner der Sekundär-Ventilkörper-Anlagefläche 60 zugewandten ersten Dichtringseite 107.1 eine planebene erste Dichtring-Anlagefläche 108.1 auf. Die erste Dichtring-Anlagefläche 108.1 ist senkrecht zu der Dichtring-Innenfläche 104 ausgebildet. Der Dichtring 59.2 ist mit seiner ersten Dichtring-Anlagefläche 108.1 an einer dieser gegenüberliegenden planebenen ersten Seitenfläche 109.1 der Nut 64.2 abstützbar. Die erste Seitenfläche 109.1 der Nut 64.2 erstreckt sich senkrecht zu der Sekundär-Steuerschaft-Axialachse 46 des Sekundär-Steuerschafts 43. Der Dichtring 59.2 weist auf seiner dem ersten Drosselkörper 83.1 zugewandten zweiten Dichtringseite 107.2, die von dem zweiten Drosselkörper 83.2 abgewandt ist, eine planebene zweite Dichtring-Anlagefläche 108.2 auf. Die zweite Dichtring-Anlagefläche 108.2 ist senkrecht zu der Dichtring-Innenfläche 104 ausgebildet. Die zweite Dichtring-Anlagefläche 108.2 ist also parallel zu der ersten Dichtring-Anlagefläche 108.1 ausgebildet. Der Dichtring 59.2 ist mit seiner zweiten Dichtring-Anlagefläche 108.2 an einer dieser gegenüberliegenden planebenen zweiten Seitenfläche 109.2 der Nut 64 abgestützt. Die zweite Seitenfläche 109.2 der Nut 64.2 erstreckt sich senkrecht zu der Sekundär-Steuerschaft-Axialachse 46 des Sekundär-Steuerschafts 43. Der Dichtring 59.2 weist einen dem Sekundär-Ventilsitz 55 zugeordneten Dichtringteil 115 auf, der sich von der Dichtring-Innenfläche 104 radial nach außen erstreckt und der sich einerseits, in der Axialrichtung 32 betrachtet, zu dem Sekundär-Ventilkörper 52 hin konisch verjüngt und der sich andererseits, ebenfalls in der Axialrichtung 32 betrachtet, von dem Sekundär-Ventilkörper 52 weg konisch verjüngt. In dem in Figur 11 gezeigten Axialquerschnitt ist ersichtlich, dass der Dichtringteil 115 eine erste Dichtringteil-Fläche 116.1. aufweist, die mit der ersten Dichtring-Anlagefläche 108.1 einen ersten Winkel 117.1 einschließt und ferner eine zweite Dichtringteil-Fläche 116.2 aufweist, die mit der zweiten Dichtring-Anlagefläche 108.2 einen zweiten Winkel 117.2 einschließt. Der erste Winkel 117.1 ist kleiner als der zweite Winkel 117.2. Der erste Winkel 117.1 beträgt beispielsweise 40 Grad. Der zweite Winkel 117.2 beträgt beispielsweise 55 Grad. Es versteht sich jedoch, dass auch andere Winkelwerte vorgesehen sein können. Beispielsweise kann auch vorgesehen sein, dass der erste Winkel und der zweite Winkel gleich groß sind. Der Dichtring 59.2 kann bevorzugt aus PUR (Polyurethan), insbesondere aus einem PUR-Elastomeren, bestehen. Er kann bevorzugt eine Härte von 95 Shore A bzw. eine Shorehärte von 95SH A aufweisen. Der Dichtring 59.2 kann vorteilhaft durch Zerspanen bzw. durch Spanen, beispielsweise durch Drehen, hergestellt sein. Er kann aber auch anders hergestellt sein, beispielsweise durch Spritzgießen.

In den Figuren 12 und 13 sind, mit Ausnahme der Dichtrings 59.2 und der Nut 64.2, alle anderen Bauteile gleich gestaltet, wie in den Figuren 3 bis 9. Mit anderen Worten gesagt, unterscheiden sich die in den Figuren 12 und 13 gezeigten Bauteile von den in den Figuren 3 bis 9 gezeigten Bauteile ausschließlich dadurch, dass in den Figuren 12 und 13 der Dichtring 59.2 und die Nut 64.2 vorgesehen sind, während in den Figuren 3 bis 9 der Dichtring 59.1 und die Nut 64.1 vorgesehen sind. Deshalb und zur besseren Veranschaulichung der Unterschiede sind in den Figuren 12 und 17 die schon in den Figuren 3 bis 9 eingezeichneten anderen Bezugszeichen nicht noch einmal eingezeichnet. Die vorstehend im Zusammenhang mit den Figuren 1 bis 9 beschriebenen Funktionen, Abläufe und Verfahren gelten entsprechend auch für das in den Figuren 12 und 13 gezeigte Ausführungsbeispiel.

Wesentliche Merkmale der Erfindung können auch wie folgt zusammengefasst werden:
- das Doppel-Rückschlagventil 20 ist geeignet für einen doppeltwirkenden Zylinder zur Absicherung der Kolbenseite und der Stangenseite;
- es kann auch nur als ein einfaches Rückschlagventil in der redundanten Ausführung eingesetzt bzw. ausgeführt werden, also in Form einer Rückschlagventilanordnung mit einem Primär-Rückschlagventil und einem Sekundär-Rückschlagventil;
- das Primär-Rückschlagventil 22 und das Sekundär-Rückschlagventil 23 sind in Reihe (seriell) angeordnet;
- dadurch sind sie redundant in der Absicherung;
- das Primär-Rückschlagventil 22 sorgt für eine abgeschlossene Kammer und somit für ein kleines Dekompressionsvolumen am Sekundärventil 23;
- das Sekundär-Rückschlagventil 23 hat zusätzlich zur metallischen Abdichtung (Sekundär-Ventilkörperteil 57 vs. Sekundär-Schulter 62) eine Dichtung 59 aus einem Elastomer (Elastomerabdichtung);
- der Steuerkolben 31 öffnet zuerst das Sekundärventil 23. An diesem Ventilstößel (Steuerkolben-Steuerschaft 38) ist ein Pin vorhanden der nach einem gewissen Weg das Primär-Rückschlagventil 22 aufsteuert;
- zum Aufsteuern des Sekundär-Rückschlagventils 23 bleibt das Primär-Rückschlagventil 22 noch geschlossen;
- die Reihenfolge des Öffnens ist somit durch eine geometrische Ausbildung gewährleistet;
- zuerst öffnet das Sekundär-Rückschlagventil 23; das Primärventil 22 wird erst danach aufgesteuert;
- beim Schließen ist zuerst das Primärventil 22 geschlossen, bevor das Sekundär-Rückschlagventil 23 schließt;
- die elastomere Dichtung 59 (Elastomerabdichtung) des Sekundär-Rückschlagventils 23 wird vor einem Verschleiß infolge einer Dekompressionsströmung des Antriebsfluids und/oder infolge einer dynamischen Druckströmung des Antriebsfluids durch die Ausbildung eines ersten Drossel-Schließspalts 89.1 vor der Dichtung 59 und durch die Ausbildung eines zweiten Drossel-Schließspalts 89.2 nach der Dichtung 59 geschützt, indem die Drosseln 82.1, 82.2 den Durchfluss des Antriebsfluids erst freigegeben, wenn die Dichtung 59 nicht mehr im Eingriff ist.

### BEZUGSZEICHENLISTE

- 10: Vorrichtung
- 11: Kolben
- 12: Schaft
- 13: Hydraulikzylinder
- 14: Trennanordnung
- 15.1: erster Versorgungszweig
- 15.2: zweiter Versorgungszweig
- 16: freies Ende von 12
- 17: (erste) Arbeitskammer
- 18: (zweite) Arbeitskammer
- 19: Hydraulikblock
- 20: Doppel-Rückschlagventil
- 21: Rückschlagventilanordnung
- 21.1: (erste) Rückschlagventilanordnung/(erstes) Rückschlagventil
- 21.2: (zweite) Rückschlagventilanordnung/(zweites) Rückschlagventil
- 22: Primär-Rückschlagventil
- 22.1: erstes Primär-Rückschlagventil
- 22.2: zweites Primär-Rückschlagventil
- 23: Sekundär-Rückschlagventil
- 23.1: erstes Sekundär-Rückschlagventil
- 23.2: zweites Sekundär-Rückschlagventil
- 24: Schleusenkammer
- 24.1: erste Schleusenkammer
- 24.2: zweite Schleusenkammer
- 25.1: erste Öffnung von 24.1
- 25.2: zweite Öffnung von 24.1
- 25.3: dritte Öffnung von 24.2
- 25.4: vierte Öffnung von 24.2
- 26.1: erster Hydraulikeinlass (erster Auslass)
- 26.2: zweiter Hydraulikeinlass (zweiter Auslass)
- 28: Verbindungskammer
- 28.1: erste Verbindungsraum-Kammer
- 28.2: zweite Verbindungsraum-Kammer
- 29: Verbindungskammer-Längsachse
- 30.1: (erste) Schleusenkammer-Längsachse von 24.1
- 30.2: (zweite) Schleusenkammer-Längsachse von 24.2
- 31: Steuerkolben/Entsperrmittel
- 32: Axialrichtung
- 33: Nut (im Steuerkolben)
- 34: Steuerkolben-Dichtung
- 35: Steuerkolben-Führungsteil
- 36.1: Führungsfläche
- 36.2: Führungsfläche
- 37: Gegen-Führungsfläche von 28
- 38: Steuerkolben-Steuerschaft
- 38.1: erster Steuerkolben-Steuerschaft
- 38.2: zweiter Steuerkolben-Steuerschaft
- 39: Steuerkolben-Längsachse
- 40.1: erstes Steuerkolben-Steuerschaft-Ende
- 40.2: zweites Steuerkolben-Steuerschaft-Ende
- 41: Neutralstellung (von 35)
- 43: Sekundär-Steuerschaft
- 43.1: erster Sekundär-Steuerschaft
- 43.2: zweiter Sekundär-Steuerschaft
- 44.1: erstes (freies) Sekundär-Steuerschaft-Ende von 43
- 44.1.1: erstes (freies) Sekundär-Steuerschaft-Ende von 43.1
- 44.1.2: zweites (freies) Sekundär-Steuerschaft-Ende von 43.1
- 44.2: zweites (freies) Sekundär-Steuerschaft-Ende von 43
- 44.2.1: erstes (freies) Sekundär-Steuerschaft-Ende von 43.2
- 44.2.2: zweites (freies) Sekundär-Steuerschaft-Ende von 43.2
- 45.1: (erster axialer) Abstand
- 45.2: (zweiter axialer) Abstand
- 46: Sekundär-Steuerschaft-Axialachse (-Längsachse)
- 47.1: erster Hydraulik-Einlasskanal
- 47.2: zweiter Hydraulik-Einlasskanal
- 49.1: Primär-Einsatzteil
- 49.1.1: Primär-Einsatzteil
- 49.1.2: Primär-Einsatzteil
- 49.2: Sekundär-Einsatzteil
- 49.2.1: Sekundär-Einsatzteil
- 49.2.2: Sekundär-Einsatzteil
- 50: Dichtung
- 52: Sekundär-Ventilkörper
- 52.1: erster Sekundär-Ventilkörper
- 52.2: zweiter Sekundär-Ventilkörper
- 53: Sekundär-Ventilkörper-Schließstellung
- 54: Sekundär-Feder
- 55: Sekundär-Ventilsitz
- 56: Sekundär-Ventilkörper-Öffnungsstellung
- 57: Sekundär-Ventilkörperteil
- 58: Hohlraum von 30.2
- 59: Dichtung von 52
- 59.1: Dichtring
- 59.2: Dichtring
- 60: Sekundär-Ventilkörper(teil)-Anlagefläche von 57
- 61: erste Fließrichtung
- 62: Sekundär-Schulter
- 63: (konische) Anlagefläche von 55
- 64.1: Nut
- 64.2: Nut
- 65: Sekundär-Steuerschaft-Schließstellung
- 66: Sekundär-Steuerschaft-Öffnungsstellung
- 67: Sekundär-Steuerschaft-Öffnungsrichtung
- 68: Durchgangsweg (Pfeilfolge)
- 69: Primär-Ventilkörper
- 69.1: erster Primär-Ventilkörper
- 69.2: zweiter Primär-Ventilkörper
- 70: Primär-Ventilkörper-Schließstellung
- 71: Primär-Feder
- 72: Primär-Ventilsitz
- 73: Primär-Ventilkörper-Öffnungsstellung
- 74: Primär-Führungsschaft-Axialachse/-Längsachse
- 75: Primär-Führungsschaft
- 76: Primär-Führungsschaft-Aufnahme
- 77: Primär-Ventilkörperteil
- 78: (konische) Primär-Ventilkörper-Anlagefläche
- 79: Primär-Schulter
- 80: Durchgangsweg
- 81: axialer Abstand
- 82.1: erste Drossel
- 82.2: zweite Drossel
- 83.1: erster Drosselkörper
- 83.2: zweiter Drosselkörper
- 84.1: erster Drossel-Gegenkörper
- 84.2: zweiter Drossel-Gegenkörper
- 85.1: erste Drosselkörper-Öffnungsstellung
- 85.2: zweite Drosselkörper-Öffnungsstellung
- 85.3: dritte Drosselkörper-Öffnungsstellung
- 87.1: erster Drossel-Öffnungsspalt (von 82.1)
- 87.2: zweiter Drossel-Öffnungsspalt (von 82.2)
- 87.3: dritter Drossel-Öffnungsspalt (von 82.2)
- 88.1: erste Drosselkörper-Schließstellung (von 83.1)
- 88.2: zweite Drosselkörper-Schließstellung (von 83.1)
- 88.3: dritte Drosselkörper-Schließstellung (von 83.2)
- 88.4: vierte Drosselkörper-Schließstellung (von 83.2)
- 89.1: erster Drossel-Schließspalt
- 89.3: dritter Drossel-Schließspalt
- 90.1: (erste) Sekundär-Steuerschaft-Zwischenstellung
- 90.2: (zweite) Sekundär-Steuerschaft-Zwischenstellung
- 91.1: erster Durchströmspalt (in 90.1, Dichtung abgehoben)
- 91.2: zweiter Durchströmspalt (in 90.2, Dichtung abgehoben)
- 92.1: erste Drosselfläche von 83.1
- 92.2: zweite Drosselfläche von 83.2
- 93.1: erste Drossel-Gegenfläche von 84.1
- 93.2: zweite Drossel-Gegenfläche von 84.2
- 94: (konische) Einführschräge
- 95: (Pfeil)Richtung
- 96: (Pfeil)Richtung
- 97: Nut
- 98: Aufnahme
- 99: Übergangsstellung
- 100: Sekundär-Führungsschaft
- 101: Sekundär-Führungsschaft-Axialachse/-Längsachse
- 102: Sekundär-Führungsschaft-Aufnahme
- 103: (maximale) Dichtring-Breite von 59.2
- 104: Dichtring-Innenfläche von 59.2
- 105: Axiallänge von 104
- 106.1: Nutgrund von 64.1
- 106.2: Nutgrund von 64.2
- 107.1: (erste) Dichtringseite von 59.2
- 107.2: (zweite) Dichtringseite von 59.2
- 108.1: (erste) Dichtring-Anlagefläche von 59.2
- 108.2: (zweite) Dichtring-Anlagefläche von 59.2
- 109.1: (erste) Seitenfläche von 64.2
- 109.2: (zweite) Seitenfläche von 64.2
- 110.1: Nutgrundfläche von 64.1
- 110.2: Nutgrundfläche von 64.2
- 111: Axialachse von 59.2
- 112: Innendurchmesser von 59.2
- 113: Außendurchmesser von 59.2
- 115: Dichtringteil
- 116.1: (erste) Dichtringteil-Fläche
- 116.2: (zweite) Dichtringteil-Fläche
- 117.1: (erster) Winkel
- 117.2: (zweiter) Winkel

## Patentansprüche

1. Vorrichtung (10) zum Halten eines mit einem Kolben (11) versehenen Schafts (12) eines zumindest einfach wirkenden Hydraulikzylinders (13) in Stellung, der Arbeitskammern (17, 18) für das Antriebsfluid aufweist, die durch den Kolben (11) voneinander abgetrennt sind, wobei der Schaft (12) zusammen mit dem Kolben (11) längs des Hydraulikzylinders (13) bewegbar ist,
umfassend einen Hydraulikblock (19), der eine Schleusenkammer (24) umschließt, die eine erste Öffnung (25.1) und eine zweite Öffnung (25.2) aufweist, wobei die erste Öffnung (25.1) mit einem Primär-Rückschlagventil (22) versehen ist und in hydraulischer Verbindung mit einer Arbeitskammer (17) der Arbeitskammern (17, 18) steht, und wobei die zweite Öffnung (25.2) mit einem Sekundär-Rückschlagventil (23) versehen ist und in hydraulischer Verbindung mit einem Hydraulikeinlass (26.1) zur Versorgung der Arbeitskammer (17) mit dem Antriebsfluid steht, und wobei das Primär-Rückschlagventil (22) und das Sekundär-Rückschlagventil (23) in Reihe geschaltet angeordnet sind,
und wobei das Sekundär-Rückschlagventil (23) einen Sekundär-Steuerschaft (43) aufweist, der in einer Axialrichtung (32) relativ zu dem Hydraulikblock (19) bewegbar ist und der mit einem Sekundär-Ventilkörper (52) versehen ist, der mittels eines Entsperrmittels (31) von seiner Sekundär-Ventilkörper-Schließstellung (53), in welcher er beaufschlagt durch eine Federkraft einer Sekundär-Feder (54) an einem Sekundär-Ventilsitz (55) des Hydraulikblocks (19) anliegt, gegen die Federkraft der Sekundär-Feder (54) in der Axialrichtung relativ zu dem Hydraulikblock (19) in eine Sekundär-Ventilkörper-Öffnungsstellung (56) bewegbar ist, in welcher ein Durchfluss des Antriebsfluids durch das Sekundär-Rückschlagventil (23) möglich ist,
und wobei der Sekundär-Ventilkörper (52) mit einer Dichtung (59) versehen ist, die in der Sekundär-Ventilkörper-Schließstellung (53) des Sekundär-Ventilkörpers (52) an einer Anlagefläche (63) des Sekundär-Ventilsitzes (55) des Hydraulikblocks (19) dicht anliegt, so dass das Sekundär-Rückschlagventil (23) gegen einen Durchfluss des Antriebsfluids abgesperrt ist,
und wobei der Sekundär-Steuerschaft (43) sich in der Sekundär-Ventilkörper-Schließstellung (53) des Sekundär-Ventilkörpers (52) in einer Sekundär-Steuerschaft-Schließstellung (65) befindet und sich in der Sekundär-Ventilkörper-Öffnungsstellung (56) des Sekundär-Ventilkörpers (52) in einer Sekundär-Steuerschaft-Öffnungsstellung (66) befindet,
und wobei das Primär-Rückschlagventil (22) einen Primär-Ventilkörper (69) aufweist, der von seiner Primär-Ventilkörper-Schließstellung (70), in welcher er beaufschlagt durch eine Federkraft einer Primär-Feder (71) an einem Primär-Ventilsitz (72) des Hydraulikblocks (19) anliegt, mittels des Sekundär-Steuerschafts (43) des Sekundär-Rückschlagventils (23) gegen die Federkraft der Primär-Feder (71) relativ zu dem Hydraulikblock (19) in eine Primär-Ventilkörper-Öffnungsstellung (73) bewegbar ist, in welcher ein Durchfluss des Antriebsfluids durch das Primär-Rückschlagventil (22) möglich ist,
und wobei in der Primär-Ventilkörper-Öffnungsstellung (73) des Primär-Ventilkörpers (69) und in der Sekundär-Ventilkörper-Öffnungsstellung (56) des Sekundär-Ventilkörpers (52) ein Durchgangsweg (80) für das Antriebsfluid eröffnet ist, so dass das Antriebsfluid von dem ersten Hydraulikeinlass (26.1) über die Schleusenkammer (24) zu der Arbeitskammer (17) strömen kann, und umgekehrt,
und wobei ein dem Primär-Ventilkörper (69) zugewandtes freies Sekundär-Steuerschaft-Ende (44.2) des Sekundär-Steuerschafts (43) in der Sekundär-Ventilkörper-Schließstellung (53) des Sekundär-Ventilkörpers (52) und in der Primär-Ventilkörper-Schließstellung (70) des Primär-Ventilkörpers (69) in einem axialen Abstand (81) zu dem Primär-Ventilkörper angeordnet ist,
**dadurch gekennzeichnet,**
**dass** das Sekundär-Rückschlagventil (23) eine erste Drossel (82.1) umfasst, die, in einer ersten Fließrichtung (61) des Antriebsfluids von dem Hydraulikeinlass (26.1) durch die Schleusenkammer (24) in die Arbeitskammer (17) betrachtet, vor der Dichtung (59) ausgebildet ist und die mit einem ersten Drosselkörper (83.1) des Sekundär-Steuerschafts (43) und mit einem ersten Drossel-Gegenkörper (84.1) des Hydraulikblocks (19) ausgebildet ist,
und **dass** der Sekundär-Steuerschaft (43) und der Hydraulikblock (19), derart aufeinander abgestimmt gestaltet sind,
**dass** der erste Drosselkörper (83.1) sich in der Sekundär-Steuerschaft-Öffnungsstellung (66) in einer ersten Drosselkörper-Öffnungsstellung (85.1) befindet, in welcher zwischen dem ersten Drosselkörper (83.1) und dem ersten Drossel-Gegenkörper (84.1) ein erster Drossel-Öffnungsspalt (87.1) ausgebildet ist,
und **dass** der erste Drosselkörper (83.1) in der Sekundär-Steuerschaft-Schließstellung (65) des Sekundär-Steuerschafts (43) dem ersten Drossel-Gegenkörper (84.1) des Hydraulikblocks (19) unmittelbar gegenüber liegt und sich in einer ersten Drosselkörper-Schließstellung (88.1) befindet, in welcher zwischen dem ersten Drosselkörper (83.1) und dem ersten Drossel-Gegenkörper (84.1) ein erster Drossel-Schließspalt (89.1) ausgebildet ist, der sehr viel kleiner ist als der erste Drossel-Öffnungsspalt (87.1),
und **dass** der Sekundär-Steuerschaft (43) von seiner Sekundär-Steuerschaft-Schließstellung (65) in der Axialrichtung (32) in eine Sekundär-Steuerschaft-Zwischenstellung (90.1) überführbar ist, und umgekehrt, in welcher der erste Drosselkörper (83.1) sich in einer zweiten Drosselkörper-Schließstellung (88.2) befindet, in welcher zwischen dem ersten Drosselkörper (83.1) und dem ersten Drossel-Gegenkörper (84.1) der erste Drossel-Schließspalt (89.1) oder ein zweiter Drossel-Schließspalt ausgebildet ist, der sehr viel kleiner ist als der erste Drossel-Öffnungsspalt (87.1), und in welcher der Sekundär-Ventilkörper (52) mit seiner Dichtung (59) von der Anlagefläche (63) des Sekundär-Ventilsitzes (55) abgehoben ist,
und **dass** der Sekundär-Steuerschaft (43) von seiner Sekundär-Steuerschaft-Zwischenstellung (90.1) in der Axialrichtung (32) in seine Sekundär-Steuerschaft-Öffnungsstellung (66) bewegbar ist, und umgekehrt, in welcher der erste Drosselkörper (83.1) sich in der ersten Drosselkörper-Öffnungsstellung (85.1) befindet, in welcher zwischen dem ersten Drosselkörper (83.1) und dem ersten Drossel-Gegenkörper (84.1) der erste Drossel-Öffnungsspalt (87.1) ausgebildet ist und in welcher der Sekundär-Ventilkörper (52) mit seiner Dichtung (59) von der Anlagefläche (63) des Sekundär-Ventilsitzes (55) abgehoben bleibt
und/oder
**dass** das Sekundär-Rückschlagventil (23) eine zweite Drossel (82.2) umfasst, die, in einer ersten Fließrichtung (61) des Antriebsfluids von dem Hydraulikeinlass (26.1) durch die Schleusenkammer (24) in die Arbeitskammer (17) betrachtet, nach der Dichtung (59) ausgebildet ist und die mit einem zweiten Drosselkörper (83.2) des Sekundär-Steuerschafts (43) und mit einem zweiten Drossel-Gegenkörper (84.2) des Hydraulikblocks (19) ausgebildet ist,
und **dass** der Sekundär-Steuerschaft (43) und der Hydraulikblock (19) derart aufeinander abgestimmt gestaltet sind,
**dass** der zweite Drosselkörper (83.2) sich in der Sekundär-Steuerschaft-Öffnungsstellung (66) in einer zweiten Drosselkörper-Öffnungsstellung (85.2) befindet, in welcher zwischen dem zweiten Drosselkörper (83.2) und dem zweiten Drossel-Gegenkörper (84.2) ein zweiter Drossel-Öffnungsspalt (87.2) ausgebildet ist,
und **dass** der zweite Drosselkörper (83.2) in der Sekundär-Steuerschaft-Schließstellung (65) des Sekundär-Steuerschafts (43) dem zweiten Drossel-Gegenkörper (84.2) des Hydraulikblocks (19) unmittelbar gegenüber liegt und sich in einer dritten Drosselkörper-Schließstellung (88.3) befindet, in welcher zwischen dem zweiten Drosselkörper (83.2) und dem zweiten Drossel-Gegenkörper (84.2) ein dritter Drossel-Schließspalt (89.3) ausgebildet ist, der sehr viel kleiner ist als der zweite Drossel-Öffnungsspalt (87.2),
und **dass** der Sekundär-Steuerschaft (43) von seiner Sekundär-Steuerschaft-Schließstellung (65) in der Axialrichtung (32) in eine Sekundär-Steuerschaft-Zwischenstellung (90.1) überführbar ist, und umgekehrt, in welcher der zweite Drosselkörper (83.2) sich in einer vierten Drosselkörper-Schließstellung (88.4) befindet, in welcher zwischen dem zweiten Drosselkörper (83.2) und dem zweiten Drossel-Gegenkörper (84.2) der dritte Drossel-Schließspalt (89.3) oder ein vierter Drossel-Schließspalt ausgebildet ist, der sehr viel kleiner ist als der zweite Drossel-Öffnungsspalt (87.2), und in welcher der Sekundär-Ventilkörper (52) mit seiner Dichtung (59) von der Anlagefläche (63) des Sekundär-Ventilsitzes (55) abgehoben ist,
und **dass** der Sekundär-Steuerschaft (43) von seiner Sekundär-Steuerschaft-Zwischenstellung (90.1) in der Axialrichtung (32) in seine Sekundär-Steuerschaft-Öffnungsstellung (66) bewegbar ist, und umgekehrt, in welcher der zweite Drosselkörper (83. 2) sich in der zweiten Drosselkörper-Öffnungsstellung (85.2) befindet, in welcher zwischen dem zweiten Drosselkörper (83.2) und dem zweiten Drossel-Gegenkörper (84.2) der zweite Drossel-Öffnungsspalt (87.2) ausgebildet ist und in welcher der Sekundär-Ventilkörper (52) mit seiner Dichtung (59) von der Anlagefläche 63 des Sekundär-Ventilsitzes (55) abgehoben bleibt.

2. Vorrichtung nach Anspruch 1, **dadurch gekennzeichnet, dass** der erste Drosselkörper (83.1) eine zylindrische erste Drosselfläche (92.1) aufweist und dass der erste Drossel-Gegenkörper (84.1) eine zylindrische erste Drossel-Gegenfläche (93.1) aufweist, die sich in der Axialrichtung (32) erstrecken und die in der Sekundär-Steuerschaft-Schließstellung (65) des Sekundär-Steuerschafts (43) unmittelbar gegenüber liegen und/oder
dass der zweite Drosselkörper (83.2) eine zylindrische zweite Drosselfläche (92.2) aufweist und dass der zweite Drossel-Gegenkörper (84.2) eine zylindrische zweite Drossel-Gegenfläche (93.2) aufweist, die sich in der Axialrichtung (32) erstrecken und die in der Sekundär-Steuerschaft-Schließstellung (65) des Sekundär-Steuerschafts (43) unmittelbar gegenüber liegen.

3. Vorrichtung nach einem der vorstehenden Ansprüche, **dadurch gekennzeichnet, dass** der erste Drosselkörper (83.1) eine zylindrische erste Drosselfläche (92.1) aufweist und dass der erste Drossel-Gegenkörper (84.1) eine zylindrische erste Drossel-Gegenfläche (93.1) aufweist, die sich in der Axialrichtung (32) erstrecken und die in der Sekundär-Steuerschaft-Zwischenstellung (90.1) des Sekundär-Steuerschafts (43) unmittelbar gegenüber liegen
und/oder
dass der zweite Drosselkörper (83.2) eine zylindrische zweite Drosselfläche (92.2) aufweist und dass der zweite Drossel-Gegenkörper (84.2) eine zylindrische zweite Drossel-Gegenfläche (93.2) aufweist, die sich in der Axialrichtung (32) erstrecken und die in der Sekundär-Steuerschaft- Zwischenstellung (90.1) des Sekundär-Steuerschafts (43) unmittelbar gegenüber liegen.

4. Vorrichtung nach einem der Ansprüche 2 oder 3, **dadurch gekennzeichnet, dass** die erste Drosselfläche (92.1) des ersten Drosselkörpers (83.1) sich parallel zu einer Sekundär-Steuerschaft-Axialachse (46) des Sekundär-Steuerschafts (43) und sich zumindest in der Sekundär-Steuerschaft-Schließstellung (65) parallel zu der ersten Drossel-Gegenfläche (93.1) des Hydraulikblocks (19) erstreckt
und/oder
dass die zweite Drosselfläche (92.2) des zweiten Drosselkörpers (83.2) sich parallel zu einer Sekundär-Steuerschaft-Axialachse (46) des Sekundär-Steuerschafts (43) und sich zumindest in der Sekundär-Steuerschaft-Schließstellung (65) parallel zu der zweiten Drossel-Gegenfläche (93.2) des Hydraulikblocks (19) erstreckt.

5. Vorrichtung nach einem der Ansprüche 2 bis 4, **dadurch gekennzeichnet, dass** die erste Drosselfläche (92.1) des ersten Drosselkörpers (83.1) und die zweite Drosselfläche (92.2) des zweiten Drosselkörpers (83.2) sich parallel zueinander strecken und dass die erste Drossel-Gegenfläche (93.1) des ersten Drossel-Gegenkörpers (84.1) und die zweite Drossel-Gegenfläche (93.2) des zweiten Drossel-Gegenkörpers (84.2) sich parallel zueinander erstrecken.

6. Vorrichtung nach einem der vorstehenden Ansprüche, **dadurch gekennzeichnet, dass** der Sekundär-Ventilkörper (52) einen Sekundär-Ventilkörperteil (57) aufweist, der eine konische, konkave, ballige oder teilkugelförmige, in der ersten Fließrichtung (61) betrachtet, sich nach außen erweiternde Sekundär-Ventilkörper-Anlagefläche (60) aufweist, mit welcher der Sekundär-Ventilkörperteil (57) des Sekundär-Ventilkörpers (52) in der Sekundär-Ventilkörper-Schließstellung (53) an einer Sekundär-Schulter (62) des Hydraulikblocks (19) anliegt.

7. Vorrichtung nach einem der vorstehenden Ansprüche, **dadurch gekennzeichnet, dass** es sich bei der Dichtung (59) um einen Dichtring (59.1, 59.2) handelt, der in einer nachaußen offenen Nut (64; 64.1, 64.2) des Sekundär-Steuerschafts (43) aufgenommen ist.

8. Vorrichtung nach Anspruch 7, **dadurch gekennzeichnet, dass** der Dichtring (59.2) eine zylindrische Dichtring-Innenfläche (104) aufweist, über die der Dichtring (59.2) an einem zylindrischen Nutgrund (106.2) der Nut (64.2) anliegt.

9. Vorrichtung nach Anspruch 8, **dadurch gekennzeichnet, dass** der Dichtring (59.2), in der Axialrichtung (32) betrachtet, eine maximale Dichtring-Breite (103) aufweist, und dass die zylindrische Dichtring-Innenfläche (104) sich, in der Axialrichtung (32) betrachtet, über eine Axiallänge (105) erstreckt, die wenigstens einem Drittel der maximalen Dichtring-Breite (103) entspricht oder die wenigstens der Hälfte der maximalen Dichtring-Breite (103) entspricht oder die wenigstens zwei Drittel der maximalen Dichtring-Breite (103) entspricht oder die der maximalen Dichtring-Breite (103) entspricht.

10. Vorrichtung nach Anspruch 8 oder 9, **dadurch gekennzeichnet, dass** der Dichtring (59.2) auf seiner der Sekundär-Ventilkörper-Anlagefläche (60) zugewandten ersten Dichtringseite (107.1) eine ebene, erste Dichtring-Anlagefläche (108.1) aufweist, mit welcher der Dichtring (59.2) an einer der ersten Dichtring-Anlagefläche (108.1) gegenüberliegenden, ebenen, ersten Seitenfläche (109.1) der Nut (64.2) abstützbar ist oder abgestützt ist.

11. Vorrichtung nach einem der Ansprüche 8 bis 10, **dadurch gekennzeichnet, dass** der Dichtring (59.2) auf seiner dem ersten Drosselkörper (83.1) zugewandten zweiten Dichtringseite (107.2) und/oder auf seiner von dem zweiten Drosselkörper (83.2) abgewandten zweiten Dichtringseite (107.2) eine ebene, zweite Dichtring-Anlagefläche (108.2) aufweist, mit welcher der Dichtring (59.2) an einer der zweiten Dichtring-Anlagefläche (108.2) gegenüberliegenden, ebenen, zweiten Seitenfläche (109.2) der Nut (64.2) abstützbar ist oder abgestützt ist.

12. Verfahren zum Entsperren des Sekundär-Rückschlagventils (23) der Vorrichtung (10) nach einem der vorstehenden Ansprüche,
**dadurch gekennzeichnet,**
**dass** ausgehend von der Sekundär-Ventilkörper-Schließsstellung (53), in der sich der Sekundär-Steuerschaft (43) in seiner Sekundär-Steuerschaft-Schließstellung 65 befindet und in der sich der erste Drosselkörper (83.1) des Sekundär-Steuerschafts (43) in seiner ersten Drosselkörper-Schließstellung (88.1) befindet und in welcher der Sekundär-Ventilkörper (52) mit seiner Dichtung (59) an der Anlagefläche 63 des Sekundär-Ventilsitzes (55) des Hydraulikblocks (19) dicht anliegt, so dass das Sekundär-Rückschlagventil (23) gegen einen Durchfluss des Antriebsfluids abgesperrt ist,
der Sekundär-Steuerschaft (43) in der Axialrichtung (32) in einer Sekundär-Steuerschaft-Öffnungsrichtung (67) in seine Sekundär-Steuerschaft-Zwischenstellung (90.1) überführt wird, in welcher der erste Drosselkörper (83.1) sich in seiner zweiten Drosselkörper-Schließstellung (88.2) befindet, in welcher zwischen dem ersten Drosselkörper (83.1) und dem ersten Drossel-Gegenkörper (84.1) der erste Drossel-Schließspalt (89.1) oder der zweite Drossel-Schließspalt ausgebildet ist, und in welcher der Sekundär-Ventilkörper (52) mit seiner Dichtung (59) von der Anlagefläche (63) des Sekundär-Ventilsitzes (55) des Hydraulikblocks (19) abgehoben ist,
worauf der Sekundär-Steuerschaft (43) weiter in der Sekundär-Steuerschaft-Öffnungsrichtung (67) in seine Sekundär-Steuerschaft-Öffnungsstellung (66) überführt wird, in welcher der erste Drosselkörper (83.1) sich in seiner ersten Drosselkörper-Öffnungsstellung (85.1) befindet, in welcher zwischen dem ersten Drosselkörper (83.1) und dem ersten Drossel-Gegenkörper (84.1) der erste Drossel-Öffnungsspalt (87.1) ausgebildet ist und in welcher der Sekundär-Ventilkörper (52) mit seiner Dichtung (59) von der Anlagefläche (63) des Sekundär-Ventilsitzes (55) des Hydraulikblocks (19) abgehoben bleibt
und/oder
**dass** ausgehend von der Sekundär-Ventilkörper-Schließstellung (53), in der sich der Sekundär-Steuerschaft (43) in seiner Sekundär-Steuerschaft-Schließstellung (65) befindet und in der sich der zweite Drosselkörper (83.2) des Sekundär-Steuerschafts (43) in seiner dritten Drosselkörper-Schließstellung (88.3) befindet und in welcher der Sekundär-Ventilkörper (52) mit seiner Dichtung (59) an der Anlagefläche (63) des Sekundär-Ventilsitzes (55) des Hydraulikblocks (19) dicht anliegt, so dass das Sekundär-Rückschlagventil (23) gegen einen Durchfluss des Antriebsfluids abgesperrt ist,
der Sekundär-Steuerschaft (43) in der Axialrichtung (32) in einer oder der Sekundär-Steuerschaft-Öffnungsrichtung (67) in die Sekundär-Steuerschaft-Zwischenstellung (90.1) überführt wird, in welcher der zweite Drosselkörper (83.2) sich in seiner vierten Drosselkörper-Schließstellung (88.4) befindet, in welcher zwischen dem zweiten Drosselkörper (83.2) und dem zweiten Drossel-Gegenkörper (84.2) der dritte Drossel-Schließspalt (89.3) oder der vierte Drossel-Schließspalt ausgebildet ist, und in welcher der Sekundär-Ventilkörper (52) mit seiner Dichtung (59) von der Anlagefläche (63) des Sekundär-Ventilsitzes (55) des Hydraulikblocks (19) abgehoben ist,
worauf der Sekundär-Steuerschaft (43) weiter in der Sekundär-Steuerschaft-Öffnungsrichtung (67) in seine Sekundär-Steuerschaft-Öffnungsstellung (66) überführt wird, in welcher der zweite Drosselkörper (83.2) sich in seiner zweiten Drosselkörper-Öffnungsstellung (85.2) befindet, in welcher zwischen dem zweiten Drosselkörper (83.2) und dem zweiten Drossel-Gegenkörper (84.2) der zweite Drossel-Öffnungsspalt (87.2) ausgebildet ist und in welcher der Sekundär-Ventilkörper (52) mit seiner Dichtung (59) von der Anlagefläche (63) des Sekundär-Ventilsitzes (55) des Hydraulikblocks (19) abgehoben bleibt.

13. Verfahren nach Anspruch 12, **dadurch gekennzeichnet, dass** beim Überführen des Sekundär-Steuerschafts (43) von seiner Sekundär-Steuerschaft-Zwischenstellung (90.1) in der Sekundär-Steuerschaft-Öffnungsrichtung (67) in seine Sekundär-Steuerschaft-Öffnungsstellung (66) zunächst die zweite Drossel (82.2), aber noch nicht die erste Drossel (88.1), geöffnet wird, wofür zunächst der zweite Drosselkörper (83.2) von seiner zweiten Drosselkörper-Schließstellung (88.2) in der Sekundär-Steuerschaft-Öffnungsrichtung (67) in eine dritte Drosselkörper-Öffnungsstellung (85.3) überführt wird, in welcher zwischen dem zweiten Drosselkörper (83.2) und dem zweiten Drossel-Gegenkörper (84.2) der zweite Drossel-Öffnungsspalt oder ein dritter Drossel-Öffnungsspalt (87.3) ausgebildet ist, der größer ist als der dritte Drossel-Schließspalt (89.3) oder der vierte Drossel-Schließspalt, und erst anschließend die erste Drossel (82.1) geöffnet wird, wofür der erste Drosselkörper (83.1) in der Sekundär-Steuerschaft-Öffnungsrichtung (67) weiter in seine erste Drosselkörper-Öffnungsstellung (85.1) überführt wird, in welcher zwischen dem ersten Drosselkörper (83.1) und dem ersten Drossel-Gegenkörper (84.1) der erste Drossel-Öffnungsspalt (87.1) ausgebildet ist.

14. Verfahren zum Absperren des Sekundär-Rückschlagventils (23) der Vorrichtung (10) nach einem der Ansprüche 1 bis 11,
**dadurch gekennzeichnet,**
**dass** der Sekundär-Steuerschaft (43) von seiner Sekundär-Steuerschaft-Öffnungsstellung (66), in welcher der erste Drosselkörper (83.1) sich in der ersten Drosselkörper-Öffnungsstellung (85.1) befindet, in welcher zwischen dem ersten Drosselkörper (83.1) und dem ersten Drossel-Gegenkörper (84.1) der erste Drossel-Öffnungsspalt (87.1) ausgebildet ist und in welcher der Sekundär-Ventilkörper (52) mit seiner Dichtung (59) von der Anlagefläche (63) des Sekundär-Ventilsitzes (55) abgehoben ist, in der Axialrichtung (32) in einer Sekundär-Steuerschaft-Schließrichtung in seine Sekundär-Steuerschaft-Zwischenstellung (90.1) überführt wird, in welcher der erste Drosselkörper (83.1) sich in der zweiten Drosselkörper-Schließstellung (88.2) befindet, in welcher zwischen dem ersten Drosselkörper (83.1) und dem ersten Drossel-Gegenkörper (84.1) der erste Drossel-Schließspalt (89.1) oder der zweite Drossel-Schließspalt ausgebildet ist, und in welcher der Sekundär-Ventilkörper (52) mit seiner Dichtung (59) von der Anlagefläche (63) des Sekundär-Ventilsitzes (55) des Hydraulikblocks (19) abgehoben bleibt,
worauf der Sekundär-Steuerschaft (43) weiter in der Sekundär-Steuerschaft-Schließrichtung in seine Sekundär-Steuerschaft-Schließstellung (65) überführt wird, in welcher der erste Drosselkörper (83.1) des Sekundär-Steuerschafts (43) sich in seiner ersten Drosselkörper-Schließstellung (88.1) befindet, in der zwischen dem ersten Drosselkörper (83.1) und dem ersten Drossel-Gegenkörper (84.1) der erste Drossel-Schließspalt (89.1) ausgebildet ist, und in welcher der Sekundär-Ventilkörper (52) mit seiner Dichtung (59) an der Anlagefläche (63) des Sekundär-Ventilsitzes (55) des Hydraulikblocks (19) dicht anliegt, so dass das Sekundär-Rückschlagventil (23) gegen einen Durchfluss des Antriebsfluids abgesperrt ist,
und/oder
**dass** der Sekundär-Steuerschaft (43) von seiner Sekundär-Steuerschaft-Öffnungsstellung (66), in welcher der zweite Drosselkörper (83.2) sich in der zweiten Drosselkörper-Öffnungsstellung (85.2) befindet, in welcher zwischen dem zweiten Drosselkörper (83.2) und dem zweiten Drossel-Gegenkörper (84.2) der zweite Drossel-Öffnungsspalt (87.2) ausgebildet ist und in welcher der Sekundär-Ventilkörper (52) mit seiner Dichtung (59) von der Anlagefläche (63) des Sekundär-Ventilsitzes (55) abgehoben ist, in der Axialrichtung (32) in einer oder der Sekundär-Steuerschaft-Schließrichtung in seine Sekundär-Steuerschaft-Zwischenstellung (90.1) überführt wird, in welcher der zweite Drosselkörper (83.2) sich in der vierten Drosselkörper-Schließstellung (88.4) befindet, in welcher zwischen dem zweiten Drosselkörper (83.2) und dem zweiten Drossel-Gegenkörper (84.2) der dritte Drossel-Schließspalt (89.3) oder der vierte Drossel-Schließspalt ausgebildet ist, und in welcher der Sekundär-Ventilkörper (52) mit seiner Dichtung (59) von der Anlagefläche (63) des Sekundär-Ventilsitzes (55) des Hydraulikblocks (19) abgehoben bleibt,
worauf der Sekundär-Steuerschaft (43) weiter in der Sekundär-Steuerschaft-Schließrichtung in seine Sekundär-Steuerschaft-Schließstellung (65) überführt wird, in welcher der zweite Drosselkörper (83.2) des Sekundär-Steuerschafts (43) sich in seiner zweiten Drosselkörper-Schließstellung (88.2) befindet, in der zwischen dem zweiten Drosselkörper (83.2) und dem zweiten Drossel-Gegenkörper (84.2) der dritte Drossel-Schließspalt (89.3) ausgebildet ist, und in welcher der Sekundär-Ventilkörper (43) mit seiner Dichtung (59) an der Anlagefläche (63) des Sekundär-Ventilsitzes (55) des Hydraulikblocks (19) dicht anliegt, so dass das Sekundär-Rückschlagventil (23) gegen einen Durchfluss des Antriebsfluids abgesperrt ist.

15. Verfahren nach Anspruch 14, **dadurch gekennzeichnet, dass** beim Überführen des Sekundär-Steuerschafts (43) von seiner Sekundär-Steuerschaft-Öffnungstellung (66) in der Sekundär-Steuerschaft-Schließrichtung in seine Sekundär-Steuerschaft-Zwischenstellung (90.1) zunächst die erste Drossel (82.1) aber noch nicht die zweite Drossel (82.2) geschlossen wird, wofür zunächst der erste Drosselkörper (83.1) von seiner ersten Drosselkörper-Öffnungsstellung (85.1) in der Sekundär-Steuerschaft-Schließrichtung in seine zweite Drosselkörper-Schließstellung (88.2) überführt wird, in welcher zwischen dem ersten Drosselkörper (83.2) und dem ersten Drossel-Gegenkörper (84.2) der erste Drossel-Schließspalt (89.1) oder der zweite Drossel-Schließspalt ausgebildet ist, und erst anschließend die zweite Drossel (82.2) geschlossen wird, wofür der zweite Drosselkörper (83.2) weiter in der Sekundär-Steuerschaft-Schließrichtung in seine vierte Drosselkörper-Schließstellung (88.4) überführt wird, in welcher zwischen dem zweiten Drosselkörper (83.2) und dem zweiten Drossel-Gegenkörper (84.2) der dritte Drossel-Schließspalt (89.3) oder der vierte Drossel-Schließspalt ausgebildet ist.

## Claims

1. Device (10) for holding a shaft (12), which is provided with a piston (11), of an at least single-acting hydraulic cylinder (13) in its setting, the cylinder having work chambers (17, 18), which are separated from one another by the piston (11), for the drive fluid, wherein the shaft (12) together with the piston (11) is movable along the hydraulic cylinder (13),
comprising a hydraulic block (19) which encloses a lock chamber (24) having a first opening (25.1) and a second opening (25.2), wherein the first opening (25.1) is provided with a primary check valve (22) and is in hydraulic connection with one work chamber (17) of the work chambers (17, 18) and wherein the second opening (25.2) is provided with a secondary check valve (23) and is in hydraulic connection with a hydraulic inlet (26.1) for supply of the work chamber (17) with the drive fluid, and wherein the primary check valve (22) and the secondary check valve (23) are arranged in series connection,
and wherein the secondary check valve (23) comprises a secondary control stem (43) which is movable in an axial direction (32) relative to the hydraulic block (19) and is provided with a secondary valve body (52), the secondary valve body being movable in the axial direction relative to the hydraulic block (19) by way of unblocking means (31) from its secondary valve body closed setting (53), in which it bears against a secondary valve seat (55) of the hydraulic block (19) under loading by a spring force of a secondary spring (54), against the spring force of the secondary spring (54) into a secondary valve body open setting (56) in which throughflow of the drive fluid through the secondary check valve (23) is possible,
and wherein the secondary valve body (52) is provided with a seal (59) which in the secondary valve body closed setting (53) of the secondary valve body (52) bears tightly against a contact surface (63) of the secondary valve seat (55) of the hydraulic block (19) so that the secondary check valve (23) is blocked against throughflow of the drive fluid,
and wherein the secondary control stem (43) in the secondary valve body closed setting (53) of the secondary valve body (52) is in a secondary control stem closed setting (65) and in the secondary valve body open setting (56) of the secondary valve body (52) is in a secondary control stem open setting (66),
and wherein the primary check valve (22) comprises a primary valve body (69) which is movable relative to the hydraulic block (19) from its primary valve body closed setting (70), in which it bears against a primary valve seat (71) of the hydraulic block (19) under loading by a spring force of a primary spring (71), by means of the second control stem (43) of the secondary check valve (23) against the spring force of the primary spring (71) into a primary valve body open setting (73) in which throughflow of the drive fluid through the primary check valve (22) is possible,
and wherein in the primary valve body open setting (73) of the primary valve body (69) and in the second valve body open setting (56) of the secondary valve body (52) a through passage (80) for the drive fluid is opened up so that the drive fluid can flow from the first hydraulic inlet (26.1) via the lock chamber (24) to the work chamber (17) and conversely,
and wherein a free secondary control stem end (44.2), which faces the primary valve body (69), of the secondary control stem (43) in the secondary valve body closed setting (53) of the secondary valve body (52) and in the primary valve body closed setting (70) of the primary valve body (69) is arranged at an axial spacing (81) from the primary valve body,
**characterised in that**
the secondary check valve (23) has a first throttle (82.1) which is formed in front of the seal (59) as considered in a first flow direction (61) of the drive fluid from the hydraulic inlet (26.1) through the lock chamber (24) to the work chamber (17) and which is formed by a first throttle body (83.1) of the secondary control stem (43) and by a first throttle counter-body (84.1) of the hydraulic block (19),
and the secondary control stem (43) and the hydraulic block (19) are adapted to one another in such a way
that the first throttle body (83.1) in the secondary control stem open setting (66) is in a first throttle body open setting (85.1) in which a first a throttle opening gap (87.1) is formed between the first throttle body (83.1) and the first throttle counter-body (84.1),
and that the first throttle body (83.1) in the secondary control stem closed setting (65) of the secondary control stem (43) is directly opposite the first throttle counter-body (84.1) of the hydraulic block (19) and is in a first throttle body closed setting (88.1) in which a first throttle closing gap (89.1) which is very much smaller than the first throttle opening gap (87.1) is formed between the first throttle body (83.1) and the first throttle counter-body (84.1),
and that the secondary control stem (43) is transferrable in the axial direction (32) from its secondary control stem closed setting (65) into a secondary control stem intermediate setting (90.1) and conversely, in which the first throttle body (83.1) is in a second throttle body closed setting (88.2) in which the first throttle closing gap (89.1) or a second throttle closing gap which is very much smaller than the first throttle opening gap (87.1) is formed between the first throttle body (83.1) and the first throttle counter-body (84.1) and in which the secondary valve body (52) is lifted by its seal (59) from the contact surface (63) of the secondary valve seat (55),
and that the secondary control stem (43) is movable in the axial direction (32) from its secondary control stem intermediate setting (90.1) into its secondary control stem open setting (66) and conversely, in which the first throttle body (83.1) is in the first throttle body open setting (85.1) in which the first throttle opening gap (87.1) is formed between the first throttle body (83.1) and the first throttle counter-body (84.1) and in which the secondary valve body (52) remains lifted by its seal (59) from the contact surface (63) of the secondary valve seat (55)
and/or
the secondary check valve (23) has a second throttle (82.2) which is formed after the seal (59) as considered in a first flow direction (61) of the drive fluid from the hydraulic inlet (26.1) through the lock chamber (24) to the work chamber (17) and which is formed by a second throttle body (83.2) of the secondary control stem (43) and by a second throttle counter-body (84.2) of the hydraulic block (19),
and the secondary control stem (43) and the hydraulic block (19) are adapted to one another in such a way
that the second throttle body (83.2) in the secondary control stem open setting (66) is in a second throttle body open setting (85.2) in which a second throttle opening gap (87.2) is formed between the second throttle body (83.2) and the second throttle counter-body (84.2), and that the second throttle body (83.2) in the secondary control stem closed setting (65) of the secondary control stem (43) is directly opposite the second throttle counter-body (84.2) of the hydraulic block (19) and is in a third throttle body closed setting (88.3) in which a third throttle closing gap (89.3) which is very much smaller than the second throttle opening gap (87.2) is formed between the second throttle body (83.2) and the second throttle counter-body (84.2),
and that the secondary control stem (43) is transferrable in the axial direction (32) from its secondary control stem closed setting (65) to a secondary control stem intermediate setting (90.1) and conversely, in which the second throttle body (83.2) is in a fourth throttle body closed setting (88.4) in which the third throttle closing gap (89.3) or a fourth throttle closing gap which is very much smaller than the second throttle opening gap (87.2) is formed between the second throttle body (83.2) and the second throttle counter-body (84.2) and in which the secondary valve body (52) is lifted by its seal (59) from the contact surface (63) of the secondary valve seat (55)
and that the secondary control stem (43) is movable in the axial direction (32) from its secondary control stem intermediate setting (90.1) into its secondary control stem open setting (66) and conversely, in which the second throttle body (83.2) is in the second throttle body open setting (85.2) in which the second throttle opening gap (87.2) is formed between the second throttle body (83.2) and the second throttle counter-body (84.2) and in which the secondary valve body (52) remains lifted by its seal (59) from the contact surface (63) of the secondary valve seat (55).

2. Device according to claim 1, **characterised in that** the first throttle body (83.1) has a cylindrical first throttle surface (92.1) and the first throttle counter-body (84.1) has a cylindrical first throttle counter-surface (93.1), which extend in the axial direction (32) and which lie directly opposite in the secondary control stem closed setting (65) of the secondary control stem (43)
and/or
the second throttle body (83.2) has a cylindrical second throttle surface (92.2) and the second throttle counter-body (84.2) has a cylindrical second throttle counter-surface (93.2), which extend in the axial direction (32) and are directly opposite in the secondary control stem closed setting (65) of the secondary control stem (43).

3. Device according to one of the preceding claims, **characterised in that** the first throttle body (83.1) has a cylindrical first throttle surface (92.1) and the first throttle counter-body (84.1) has a cylindrical first throttle counter-surface (93.1), which extend in the axial direction (32) and are directly opposite in the secondary control stem intermediate setting (90.1) of the secondary control stem (43)
and/or
the second throttle body (83.2) has a cylindrical second throttle surface (92.2) and the second throttle counter-body (84.2) has a cylindrical second throttle counter-surface (93.2), which extend in the axial direction (32) and are directly opposite in the secondary control stem intermediate setting (90.1) of the secondary control stem (43).

4. Device according to one of claims 2 and 3, **characterised in that** the first throttle surface (92.1) of the first throttle body (83.1) extends parallel to a secondary control stem axial axis (46) of the secondary control stem (43) and at least in the secondary control stem closed setting (54) extends parallel to the first throttle counter-surface (93.1) of the hydraulic block (19)
and/or
the second throttle surface (92.2) of the second throttle body (83.2) extends parallel to a secondary control stem axial axis (46) of the secondary control stem (43) and at least in the secondary control stem closed setting (65) extends parallel to the second throttle counter-surface (93.2) of the hydraulic block (19).

5. Device according to any one of claims 2 to 4, **characterised in that** the first throttle surface (92.1) of the first throttle body (83.1) and the second throttle surface (92.2) of the second throttle body (83.2) extend parallel to one another and that the first throttle counter-surface (93.1) of the first throttle counter-body (84.1) and the second throttle counter-surface (93.2) of the second throttle counter-body (84.2) extend parallel to one another.

6. Device according to any one of the preceding claims, **characterised in that** the secondary valve body (52) has a secondary valve body part (57) which has a conical, concave, spherical or part-spherical secondary valve body contact surface (60) which widens outwardly as considered in the first flow direction (61) and by which the secondary valve body part (57) of the second valve body (52) in the secondary valve body closed setting (53) bears against a secondary shoulder (62) of the hydraulic block (19).

7. Device according to any one of the preceding claims, **characterised in that** the seal (59) is a sealing ring (59.1, 59.2) which is received in an outwardly open groove (64; 64.1, 64.2) of the secondary control stem (43).

8. Device according to claim 7, **characterised in that** the sealing ring (59.2) has a cylindrical sealing ring inner surface (104) by way of which the sealing ring (59.2) bears against a cylindrical groove base (106.2) of the groove (64.2).

9. Device according to claim 8, **characterised in that** the sealing ring (59.2) has a maximum sealing ring width (103) as considered in the axial direction (32) and that the cylindrical sealing ring inner surface (104) as considered in the axial direction (32) extends over an axial length (105) corresponding with at least a third of the maximum sealing ring width (103) or with at least half the maximum sealing ring width (103) or with at least two-thirds of the maximum sealing ring width (103) or with the maximum sealing ring width (103).

10. Device according to claim 8 or 9, **characterised in that** the sealing ring (59.2) has on its first sealing ring side (107.1) facing the secondary valve body contact surface (60) a planar first sealing ring contact surface (108.1) by which the sealing ring (59.2) is supportable or supported on a planar first side surface (109.1), which is opposite the first sealing ring contact surface (108.1), of the groove (64.2).

11. Device according to any one of claims 8 to 10, **characterised in that** the sealing ring (59.2) has on its second sealing ring side (107.2) facing the first throttle body (83.1) and/or on its second sealing ring side (107.2) remote from the second throttle body (83.2) a planar second sealing ring contact surface (108.2) by which the sealing ring (59.2) is supportable on supported on a planar second side surface (109.2), which is opposite the second sealing ring contact surface (108.2), of the groove (64.2).

12. Method of unblocking the secondary check valve (23) of the device (10) according to any one of the preceding claims,
**characterised in that**
starting from the secondary valve body closed setting (53) in which the secondary control stem (43) is in its secondary control stem closed setting (65) and in which the first throttle body (83.1) of the secondary control stem (43) is in its first throttle body closed setting (88.1) and in which the secondary valve body (52) tightly bears by its seal (59) against the contact surface (63) of the secondary valve seat (55) of the hydraulic block (19) so that the secondary check valve (23) is blocked against throughflow of the drive fluid
the secondary control stem (43) is transferred in the axial direction (32) in a secondary control stem opening direction (67) to its secondary control stem intermediate setting (90.1) in which the first throttle body (83.1) is in its second throttle body closed setting (88.2) in which the first throttle closing gap (89.1) or the second throttle closing gap is formed between the first throttle body (83.1) and the first throttle counter-body (84.1) and in which the secondary valve body (52) is lifted by its seal (59) from the contact surface (63) of the secondary valve seat (55) of the hydraulic block (19),
whereupon the secondary control stem (43) is further transferred in the secondary control stem opening direction (67) to its secondary control stem open setting (66) in which the first throttle body (83.1) is in its first throttle body open setting (85.1) in which the first throttle opening gap (87.1) is formed between the first throttle body (83.1) and the first throttle counter-body (84.1) and in which the secondary valve body (52) remains lifted by its seal (59) from the contact surface (63) of the secondary valve seat (55) of the hydraulic block (19)
and/or
starting from the secondary valve body closed setting (53) in which the secondary control stem (43) is in its secondary control stem closed setting (65) and in which the second throttle body (83.2) of the secondary control stem (43) is in its third throttle body closed setting (88.3) and in which the secondary valve body (52) tightly bears by its seal (59) against the contact surface (63) of the secondary valve seat (55) of the hydraulic block (19) so that the secondary check valve (23) is blocked against throughflow of the drive fluid
the secondary control stem (43) is transferred in the axial direction (32) in a or the secondary control stem opening direction (67) to the secondary control stem intermediate setting (90.1) in which the second throttle body (83.2) is in its fourth throttle body closed setting (88.4) in which the third throttle closing gap (89.3) or the fourth throttle closing gap is formed between the second throttle body (83.2) and the second throttle counter-body (84.2) and in which the secondary valve body (52) is lifted by its seal (59) from the contact surface (63) of the secondary valve seat (55) of the hydraulic block (19),
whereupon the secondary control stem (43) is further transferred in the secondary control stem opening direction (67) to its secondary control stem open setting (66) in which the second throttle body (83.2) is in its second throttle body open setting (85.2) in which the second throttle opening gap (87.2) is formed between the second throttle body (83.2) and the second throttle counter-body (84.2) and in which the secondary valve body (52) remains lifted by its seal (59) from the contact surface (63) of the secondary valve seat (55) of the hydraulic block (19).

13. Method according to claim 12, **characterised in that** during transfer of the secondary control stem (43) from its secondary control stem intermediate setting (90.1) in the secondary control stem opening direction (67) to its secondary control stem open setting (66) initially the second throttle (82.2), but still not the first throttle (88.1), is opened, for which purpose initially the second throttle body (83.2) is transferred in the secondary control stem opening direction (67) from its second throttle body closed setting (88.2) to a third throttle body open setting (85.3) in which the second throttle opening gap or a third throttle opening gap (87.3) which is larger than the third throttle closing gap (89.3) or the fourth throttle closing gap is formed between the second throttle body (83.2) and the second throttle counter-body (84.2) and the first throttle (82.1) is opened only subsequently, for which purpose the first throttle body (83.1) is further transferred in the secondary control stem opening direction (67) to its first throttle body open setting (85.1) in which the first throttle opening gap (87.1) is formed between the first throttle body (83.1) and the first throttle counter-body (84.1).

14. Method of blocking the secondary check valve (23) of the device (10) according to any one of claims 1 to 11,
**characterised in that**
the secondary control stem (43) is transferred in the axial direction (32) in a secondary control stem closing direction from its secondary control stem open setting (66), in which the first throttle body (83.1) is in the first throttle body open setting (85.1) in which the first throttle opening gap (87.1) is formed between the first throttle body (83.1) and the first throttle counter-body (84.1) and in which the secondary valve body (52) is lifted by its seal (59) from the contact surface (63) of the secondary valve seat (55), to its secondary control stem intermediate setting (90.1) in which the first throttle body (83.1) is in the second throttle body closed setting (88.2) in which the first throttle closing gap (89.1) or the second throttle closing gap is formed between the first throttle body (83.1) and the first throttle counter-body (84.1) and in which the secondary valve body (52) remains lifted by its seal (59) from the contact surface (63) of the secondary valve seat (55) of the hydraulic block (19),
whereupon the secondary control stem (43) is further transferred in the secondary control stem closing direction to its secondary control stem closed setting (65) in which the first throttle body (83.1) of the secondary control stem (43) is in its first throttle body closed setting (88.1) in which the first throttle closing gap (89.1) is formed between the first throttle body (83.1) and the first throttle counter-body (84.1) and in which the secondary valve body (52) tightly bears by its seal (59) against the contact surface (63) of the secondary valve seat (55) of the hydraulic block (19) so that the secondary check valve (23) is blocked against throughflow of the drive fluid
and/or
the secondary control stem (43) is transferred in the axial direction (32) in a or the secondary control stem closing direction from its secondary control stem open setting (66), in which the second throttle body (83.2) is in the second throttle body open setting (85.2) in which the second throttle opening gap (87.2) is formed between the second throttle body (83.2) and the second throttle counter-body (84.2) and in which the secondary valve body (52) is lifted by its seal (59) from the contact surface (63) of the secondary valve seat (55), to its secondary control stem intermediate setting (90.1) in which the second throttle body (83.2) is in the fourth throttle body closed setting (88.4) in which the third throttle closing gap (89.3) or the fourth throttle closing gap is formed between the second throttle body (83.2) and the second throttle counter-body (84.2) and in which the secondary valve body (52) remains lifted by its seal (59) from the contact surface (63) of the secondary valve seat (55) of the hydraulic block (19),
whereupon the secondary control stem (43) is further transferred in the secondary control stem closing direction to its secondary control stem closed setting (65), in which the second throttle body (83.2) of the secondary control stem (43) is in its second throttle body closed setting (88.2) in which the third throttle closing gap (89.3) is formed between the second throttle body (83.2) and the second throttle counter-body (84.2) and in which the secondary valve body (53) tightly bears by its seal (59) against the contact surface (63) of the secondary valve seat (55) of the hydraulic block (19) so that the secondary check valve (23) is blocked against throughflow of the drive fluid.

15. Method according to claim 14, **characterised in that** during transfer of the secondary control stem (43) in the secondary control stem closing direction from its secondary control stem open setting (66) to its secondary control stem intermediate setting (90.1) initially the first throttle (82.1), but still not the second throttle (82.2), is closed, for which purpose initially the first throttle body (83.1) is transferred in the secondary control stem closing direction from its first throttle body open setting (85.1) to its second throttle body closed setting (88.2) in which the first throttle closing gap (89.1) or the second throttle closing gap is formed between the first throttle body (83.2) and the first throttle counter-body (84.2), and the second throttle (82.2) is closed only subsequently, for which purpose the second throttle body (83.2) is further transferred in the secondary control stem closing direction to its fourth throttle body closed setting (88.4) in which the third throttle closing gap (89.3) or the fourth throttle closing gap is formed between the second throttle body (83.2) and the second throttle counter-body (84.2).

## Revendications

1. Dispositif (10) de retenue d'une tige (12) pourvue d'un piston (11) d'un vérin hydraulique au moins à effet simple (13) en position qui présente des chambres fonctionnelles (17,18) pour le fluide d'entraînement, qui sont séparées les unes des autres par le piston (11), la tige (12) étant mobile avec le piston (11) le long du vérin hydraulique (13),
comprenant un bloc hydraulique (19) qui circonscrit une chambre à sas (24) qui présente une première ouverture (25.1) et une seconde ouverture (25.2), la première ouverture (25.1) étant pourvue d'une soupape antiretour primaire (22) et étant en connexion hydraulique avec une chambre fonctionnelle (17) parmi les chambres fonctionnelles (17,18), et la seconde ouverture (25.2) étant pourvue d'une soupape antiretour secondaire (23) et étant en connexion hydraulique avec une entrée hydraulique (26.1) pour alimenter la chambre fonctionnelle (17) en fluide d'entraînement, et la soupape antiretour primaire (22) et la soupape antiretour secondaire (23) étant disposées branchées en série,
et la soupape antiretour secondaire (23) présentant un arbre de commande secondaire (43) qui est mobile dans un sens axial (32) par rapport au bloc hydraulique (19) et qui est pourvu d'un corps de soupape secondaire (52) qui est mobile au moyen d'un moyen de déblocage (31) depuis sa position de fermeture de corps de soupape secondaire (53) dans laquelle il repose, en étant sollicité par une force de ressort d'un ressort secondaire (54), au niveau d'un siège de soupape secondaire (55) du bloc hydraulique (19), à l'encontre de la force de ressort du ressort secondaire (54), dans le sens axial par rapport au bloc hydraulique (19), vers une position d'ouverture de corps de soupape secondaire (56) dans laquelle un écoulement du fluide d'entraînement à travers la soupape antiretour secondaire (23) est possible,
et le corps de soupape secondaire (52) est pourvu d'un joint (59) qui, dans la position de fermeture de corps de soupape secondaire (53) du corps de soupape secondaire (52), repose étroitement sur une surface d'appui (63) du siège de soupape secondaire (55) de bloc hydraulique (19), de sorte que la soupape antiretour secondaire (23) est isolée contre un écoulement du fluide d'entraînement,
et l'arbre de commande secondaire (43) se trouvant, dans la position de fermeture de corps de soupape secondaire (53) du corps de soupape secondaire (52), dans une position de fermeture d'arbre de commande secondaire (65) et la position d'ouverture de corps de soupape secondaire (56) du corps de soupape secondaire (52) se trouvant dans une position d'ouverture d'arbre de commande secondaire (66),
et la soupape antiretour primaire (22) présentant un corps de soupape primaire (69) qui est mobile depuis sa position de fermeture de corps de soupape secondaire (70) dans laquelle il repose, en étant sollicité par une force de ressort d'un ressort primaire (71), au niveau d'un siège de soupape primaire (72) du bloc hydraulique (19), au moyen de l'arbre de commande secondaire (43) de la soupape antiretour secondaire (23) à l'encontre de la force de ressort du ressort primaire (71) par rapport au bloc hydraulique (19), vers une position d'ouverture de corps de soupape primaire (73) dans laquelle un écoulement du fluide d'entraînement à travers la soupape antiretour primaire (22) est possible,
et, dans la position d'ouverture de corps de soupape primaire (73) du corps de soupape primaire (69) et dans la position d'ouverture de corps de soupape secondaire (56) du corps de soupape secondaire (52), une voie de passage (80) pour le fluide d'entraînement est ouverte, de sorte que le fluide d'entraînement peut s'écouler depuis la première entrée hydraulique (26.1) en passant par la chambre à sas (24) vers la chambre fonctionnelle (17) et inversement,
et une extrémité libre d'arbre de commande secondaire (44.2) tournée vers le corps de soupape primaire (69) de l'arbre de commande secondaire (43) étant disposée, dans la position de fermeture de corps de soupape secondaire (53) du corps de soupape secondaire (52) et dans la position de fermeture de corps de soupape primaire (70) du corps de soupape primaire (69), à distance axiale (81) du corps de soupape primaire, **caractérisé en ce que**
la soupape antiretour secondaire (23) comprend un premier étrangleur (82.1) qui, vu dans un premier sens d'écoulement (61) du fluide hydraulique depuis l'entrée hydraulique (26.1) à travers la chambre à sas (24) dans la chambre fonctionnelle (17), est constitué en amont du joint (59) et qui est réalisé avec un premier corps d'étranglement (83.1) de l'arbre de commande secondaire (43) et avec un premier contre-corps d'étranglement (84.1) du bloc hydraulique (19),
et que l'arbre de commande secondaire (43) et le bloc hydraulique (19) sont conçus en harmonie l'un avec l'autre de manière à ce que le premier corps d'étranglement (83.1) se trouve, dans la position d'ouverture d'arbre de commande secondaire (66), dans une première position d'ouverture de corps d'étranglement (85.1) dans laquelle, entre le premier corps d'étranglement (83.1) et le premier contre-corps d'étranglement (84.1), un premier intervalle d'ouverture d'étranglement (87.1) est constitué,
et que le premier corps d'étranglement (83.1), dans la position de fermeture d'arbre de commande secondaire (65) de l'arbre de commande secondaire (43), se trouve directement en face du premier contre-corps d'étranglement (84.1) du bloc hydraulique (19) et se trouve dans une première position de fermeture de corps d'étranglement (88.1) dans laquelle, entre le premier corps d'étranglement (83.1) et le premier contre-corps d'étranglement (84.1), est constitué un premier intervalle de fermeture d'étranglement (89.1) qui est bien plus réduit que le premier intervalle d'ouverture d'étranglement (87.1), et
et que l'arbre de commande secondaire (43) peut être passé de sa position de fermeture d'arbre de commande secondaire (65) dans le sens axial (32) dans une position intermédiaire d'arbre de commande secondaire (90.1) et inversement, dans laquelle le premier corps d'étranglement (83.1) se trouve dans une deuxième position d'ouverture de corps d'étranglement (88.2) dans laquelle, entre le premier corps d'étranglement (83.1) et le premier contre-corps d'étranglement (84.1), est constitué le premier intervalle de fermeture d'étranglement (89.1) ou un deuxième intervalle de fermeture d'étranglement qui est bien plus réduit le premier intervalle d'ouverture d'étranglement (87.1), et dans laquelle le corps de soupape secondaire (52) est soulevé avec son joint (59) de la surface d'appui (63) du siège de soupape secondaire (55),
et que l'arbre de commande secondaire (43) est mobile depuis sa position intermédiaire d'arbre de commande secondaire (90.1), dans le sens axial (32), vers sa position d'ouverture d'arbre de commande secondaire (66) et inversement, dans laquelle le premier corps d'étranglement (83.1) se trouve dans la première position d'ouverture de corps d'étranglement (85.1) dans laquelle, entre le premier corps d'étranglement (83.1) et le premier contre-corps d'étranglement (84.1), le premier intervalle d'ouverture d'étranglement (87.1) est constitué et dans laquelle le corps de soupape secondaire (52) reste soulevé avec son joint (59) de la surface d'appui (63) du siège de soupape secondaire (55)
et/ou
que la soupape antiretour secondaire (23) présente un second étrangleur (82.2) qui, vu dans un premier sens d'écoulement (61) du fluide hydraulique depuis l'entrée hydraulique (26.1) à travers la chambre à sas (24) dans la chambre fonctionnelle (17), est constitué en aval du joint (59) et qui est constitué avec un second corps d'étranglement (83.2) de l'arbre de commande secondaire (43) et avec un second contre-corps d'étranglement (84.2) du bloc hydraulique (19),
et que l'arbre de commande secondaire (43) et le bloc hydraulique (19) sont réalisés en harmonie l'un avec l'autre de manière à ce que
le second corps d'étranglement (83.2) se trouve, dans la position d'ouverture d'arbre de commande secondaire (66), dans une deuxième position d'ouverture de corps d'étranglement (85.2) dans laquelle, entre le second corps d'étranglement (83.2) et le second contre-corps d'étranglement (84.2), un deuxième intervalle d'ouverture d'étranglement (87.2) soit constitué,
et que le second corps d'étranglement (83.2), dans la position de fermeture d'arbre de commande secondaire (65) de l'arbre de commande secondaire (43), se trouve directement en face du second contre-corps d'étranglement (84.2) du bloc hydraulique (19) et se trouve, dans une troisième position de fermeture de corps d'étranglement (88.3) dans laquelle, entre le second corps d'étranglement (83.2) et le second contre-étranglement (84.2), se trouve un troisième intervalle de fermeture d'étranglement (89.3) qui est bien plus réduit que le deuxième intervalle d'ouverture d'étranglement (87.2),
et que l'arbre de commande secondaire (43) peut être passé de sa position de fermeture d'arbre de commande secondaire (65), dans le sens axial (32), dans une position intermédiaire d'arbre de commande secondaire (90.1) et inversement, dans laquelle le second corps d'étranglement (83.2) se trouve dans une quatrième position de fermeture de corps d'étranglement (88.4) dans laquelle, entre le second corps d'étranglement (83.2) et le second contre-corps d'étranglement (84.2), est constitué le troisième intervalle de fermeture d'étranglement (89.3) ou un quatrième intervalle de fermeture d'étranglement qui est bien plus réduit que le deuxième intervalle d'ouverture d'étranglement (87.2), et dans laquelle le corps de soupape secondaire (52) est soulevé avec son joint (59) de la surface d'appui (63) du corps de soupape secondaire (55),
et que l'arbre de commande secondaire (43) est mobile de sa position intermédiaire d'arbre de commande secondaire (90.1), dans le sens axial (32), vers sa position d'ouverture d'arbre de commande secondaire (66) et inversement dans laquelle le second corps d'étranglement (83.2) se trouve dans la deuxième position d'ouverture de corps d'étranglement (85.2) dans laquelle, entre le second corps d'étranglement (83.2) et le second contre-corps d'étranglement (84.2), le deuxième intervalle d'ouverture d'étranglement (87.2) est constitué et dans laquelle le corps de soupape secondaire (52) reste soulevé avec son joint (59) de la surface d'appui (63) du corps de soupape secondaire (55).

2. Dispositif selon la revendication 1, **caractérisé en ce que** le premier corps d'étranglement (83.1) présente une première surface d'étranglement cylindrique (92.1) et que le premier contre-corps d'étranglement (84.1) présente une première contre-surface d'étranglement cylindrique (93.1) qui s'étendent dans le sens axial (32) et, dans la position de fermeture d'arbre de commande secondaire (65) de l'arbre de commande secondaire (43), se font face directement
et/ou
le second corps d'étranglement (83.2) présente une seconde surface d'étranglement cylindrique (92.2) et que le second contre-corps d'étranglement (84.2) présente une seconde contre-surface d'étranglement (93.2) qui s'étendent dans le sens axial (32) et qui se font face directement dans la position de fermeture d'arbre de commande secondaire (65) de l'arbre de commande secondaire (43).

3. Dispositif selon une des revendications précédentes, **caractérisé en ce que** le premier corps d'étranglement (83.1) présente une première surface d'étranglement cylindrique (92.1) et que le premier contre-corps d'étranglement (84.1) présente une première contre-surface d'étranglement cylindrique (93.1) qui s'étendent dans le sens axial (32) et qui, dans la position intermédiaire d'arbre de commande secondaire (90.1) de l'arbre de commande secondaire (43), se font face directement
et/ou
**que** le second corps d'étranglement (83.2) présente une seconde surface d'étranglement cylindrique (92.2) et que le second contre-corps d'étranglement (84.2) présente une seconde contre-surface d'étranglement cylindrique (93.2) qui s'étendent dans le sens axial (32) et qui, dans la position intermédiaire d'arbre de commande secondaire (90.1) de l'arbre de commande secondaire (43), se font face directement.

4. Dispositif selon une des revendications 2 ou 3, **caractérisé en ce que** la première surface d'étranglement (92.1) du premier corps d'étranglement (83.1) s'étend parallèlement à un axe axial d'arbre de commande secondaire (46) de l'arbre de commande secondaire (43) et s'étend, du moins dans la position de fermeture d'arbre de commande secondaire (65), parallèlement à la première contre-surface d'étranglement (93.1) du bloc hydraulique (19)
et/ou
**que** la seconde surface d'étranglement (92.2) du second corps d'étranglement (83.2) s'étend parallèlement à un axe axial d'arbre de commande secondaire (46) de l'arbre de commande secondaire (43) et, du moins dans la position de fermeture d'arbre de commande secondaire (65), parallèlement à la seconde contre-surface d'étranglement (93.2) du bloc hydraulique (19).

5. Dispositif selon une des revendications 2 à 4, **caractérisé en ce que** la première surface d'étranglement (92.1) du premier corps d'étranglement (83.1) et la seconde surface d'étranglement (92.2) du second corps d'étranglement (83.2) s'étendent parallèlement l'une à l'autre et que la première contre-surface d'étranglement (93.1) du premier contre-corps d'étranglement (84.1) et la seconde contre-surface d'étranglement (93.2) du second contre-corps d'étranglement (84.2) s'étendent parallèlement l'une à l'autre.

6. Dispositif selon une des revendications précédentes, **caractérisé en ce que** le corps de soupape secondaire (52) présente un élément de corps de soupape secondaire (57) qui présente une surface d'appui de corps de soupape secondaire (60) conique, concave, bombée ou en forme de partie de sphère s'élargissant vers l'extérieur, vue dans le premier sens d'écoulement (61), et par laquelle l'élément de corps de soupape secondaire (57) du corps de soupape secondaire (52), dans la position de fermeture de corps de soupape secondaire (53), repose sur un épaulement secondaire (62) du bloc hydraulique (19).

7. Dispositif selon une des revendications précédentes, **caractérisé en ce que** le joint (59) est une bague d'étanchéité (59.1, 59.2) qui est reçue dans une rainure ouverte vers l'extérieur (64 ; 64.1, 64.2) de l'arbre de commande secondaire (43).

8. Dispositif selon la revendication 7, **caractérisé en ce que** la bague d'étanchéité (59.2) présente une surface intérieure cylindrique de bague d'étanchéité (104) par laquelle la bague d'étanchéité (59.2) repose au niveau d'une base de rainure cylindrique (106.2) de la rainure (64.2).

9. Dispositif selon la revendication 8, **caractérisé en ce que** la bague d'étanchéité (59.2), vue dans le sens axial (32), présente une largeur maximale de bague d'étanchéité (103), et que la surface intérieure cylindrique de bague d'étanchéité (104), vue dans le sens axial (32), s'étend sur une longueur axiale (105) qui représente au moins un tiers de la largeur maximale de bague d'étanchéité (103) ou qui représente au moins la moitié de la largeur maximale de bague d'étanchéité (103) ou qui représente au moins deux tiers de la largeur maximale de bague d'étanchéité (103) ou qui représente la largeur maximale de bague d'étanchéité (103).

10. Dispositif selon la revendication 8 ou 9, **caractérisé en ce que** la bague d'étanchéité (59.2) présente, sur sa première face de bague d'étanchéité (107.1) tournée vers la surface d'appui de corps de soupape secondaire (60), une première surface d'appui plane de bague d'étanchéité (108.1) grâce à laquelle la bague d'étanchéité (59.2) peut s'appuyer ou s'appuie au niveau d'une première surface latérale plane (109.1) opposée à la première surface d'appui de bague d'étanchéité (108.1) de la rainure (64.2).

11. Dispositif selon une des revendications 8 à 10, **caractérisé en ce que** la bague d'étanchéité (59.2) présente, sur sa seconde face de bague d'étanchéité (107.2) tournée vers le premier corps d'étranglement (83.1) et/ou sur sa seconde face de bague d'étanchéité (107.2) détournée du second corps d'étranglement (83.2), une seconde surface d'appui plane de bague d'étanchéité (108.2) entre laquelle la bague d'étanchéité (59.2) s'appuie ou peut s'appuyer au niveau d'une seconde surface latérale plane (109.2) opposée à la seconde surface d'appui de bague d'étanchéité (108.2) de la rainure (64.2).

12. Procédé de déblocage de la soupape antiretour secondaire (23) du dispositif (10) selon une des revendications précédentes,
**caractérisé en ce que**,
en partant de la position de fermeture de corps de soupape secondaire (53) dans laquelle l'arbre de commande secondaire (43) se trouve dans sa position de fermeture d'arbre de commande secondaire (65) et dans laquelle le premier corps d'étranglement (83.1) de l'arbre de commande secondaire (43) se trouve dans sa première position de fermeture de corps d'étranglement (88.1) et dans laquelle le corps de soupape secondaire (52) repose étroitement avec son joint (59) au niveau de la surface d'appui (63) du siège de soupape secondaire (55) du bloc hydraulique (19), de sorte que la soupape antiretour secondaire (23) est isolée contre un écoulement du fluide d'entraînement,
l'arbre de commande secondaire (43), dans le sens axial (32), dans un sens d'ouverture d'arbre de commande secondaire (67), passe dans sa position intermédiaire d'arbre de commande secondaire (90.1) dans laquelle le premier corps d'étranglement (83.1) se trouve dans sa seconde position de fermeture de corps d'étranglement (88.2) dans laquelle, entre le premier corps d'étranglement (83.1) et le premier contre-corps d'étranglement (84.1), le premier intervalle de fermeture d'étranglement (89.1) pour le deuxième intervalle de fermeture d'étranglement est constitué, et dans laquelle le corps de soupape secondaire (52) est soulevé avec son joint (59) de la surface d'appui (63) du siège de soupape secondaire (55) du bloc hydraulique (19),
sur quoi l'arbre de commande secondaire (43), dans le sens d'ouverture d'arbre de commande secondaire (67), est également passé dans sa position d'ouverture d'arbre de commande secondaire (66), dans laquelle le premier corps d'étranglement (83.1) se trouve dans sa première position d'ouverture de corps d'étranglement (85.1) dans laquelle, entre le premier corps d'étranglement (83.1) et le premier contre-corps d'étranglement (84.1), le premier intervalle d'ouverture d'étranglement (87.1) est constitué et dans laquelle le corps de soupape secondaire (52) est soulevé avec son joint (59) de la surface d'appui (63) du siège de soupape secondaire (55) du bloc hydraulique (19), et/ou
que, en partant de la position de fermeture de corps de soupape secondaire (53), dans laquelle l'arbre de commande secondaire (43) se trouve dans sa position de fermeture d'arbre de commande secondaire (65) et le second corps d'étranglement (83.2) de l'arbre de commande secondaire (43) se trouve dans sa troisième position de fermeture de corps d'étranglement (88.3) et dans laquelle le corps de soupape secondaire (52) repose avec son joint (59) au niveau de la surface d'appui (63) du siège de soupape secondaire (55) du bloc hydraulique (19), de sorte que la soupape antiretour secondaire (23) est isolée contre un écoulement du fluide d'entraînement,
l'arbre de commande secondaire (43), dans le sens axial (32), dans un ou dans le sens d'ouverture d'arbre de commande secondaire (67), est passé dans la position intermédiaire arbre de commande secondaire (90.1) dans laquelle le second corps d'étranglement (83.2) se trouve dans sa quatrième position de fermeture de corps d'étranglement (88.4) dans laquelle, entre le second corps d'étranglement (83.2) et le second contre-corps d'étranglement (84.2), le troisième intervalle de fermeture d'étranglement (89.3) ou le quatrième intervalle de fermeture d'étranglement est constitué, et dans laquelle le corps de soupape secondaire (52) est soulevé avec son joint (59) de la surface d'appui (63) du siège de soupape secondaire (55) du bloc hydraulique (19),
sur quoi l'arbre de commande secondaire (43), dans le sens d'ouverture d'arbre de commande secondaire (67), est également passé dans sa position d'ouverture d'arbre de commande secondaire (66), dans laquelle le second corps d'étranglement (83.2) se trouve dans sa seconde position d'ouverture de corps d'étranglement (85.2) dans laquelle, entre le second corps d'étranglement (83.2) et le second contre-corps d'étranglement (84.2), le deuxième intervalle d'ouverture d'étranglement (87.2) est constitué et dans laquelle le corps de soupape secondaire (52) reste soulevé avec son joint (59) de la surface d'appui (63) du siège de soupape secondaire (55) du bloc hydraulique (19).

13. Procédé selon la revendication 12, **caractérisé en ce que**, lors du passage de l'arbre de commande secondaire (43) de sa position intermédiaire d'arbre de commande secondaire (90.1), dans le sens d'ouverture d'arbre de commande secondaire (67), vers sa position d'ouverture d'arbre de commande secondaire (66), d'abord le second étrangleur (82.2) mais pas encore le premier étrangleur (88.1) est ouvert, dans lequel cas le second corps d'étranglement (83.2) est passé de sa seconde position de fermeture de corps d'étranglement (88.2), dans le sens d'ouverture d'arbre de commande secondaire (67), le dans une troisième position d'ouverture de corps d'étranglement (85.3) dans laquelle, entre second corps d'étranglement (83.2) et le second contre-corps d'étranglement (84.2), est constitué le deuxième intervalle d'ouverture d'étranglement ou un troisième intervalle d'ouverture d'étranglement (87.3) qui est supérieur au troisième intervalle de fermeture d'étranglement (89.3) ou au quatrième intervalle de fermeture d'étranglement, et ensuite seulement le premier étrangleur (82.1) est ouvert, dans lequel cas le premier corps d'étranglement (83.1), dans le sens d'ouverture d'arbre de commande secondaire (67), est également passé dans sa première position d'ouverture de corps d'étranglement (85.1) dans laquelle, entre le premier corps d'étranglement (83.1) et le premier contre-corps d'étranglement (84.1), le premier intervalle d'ouverture d'étranglement (87.1) est constitué.

14. Procédé de blocage de la soupape antiretour secondaire (23) du dispositif (10) selon une des revendications 1 à 11,
**caractérisé en ce que**
l'arbre de commande secondaire (43) est passé de sa position d'ouverture d'arbre de commande secondaire (66), dans laquelle le premier corps d'étranglement (83.1) se trouve dans la première position d'ouverture de corps d'étranglement (85.1) dans laquelle, entre le premier corps d'étranglement (83.1) et le premier contre-corps d'étranglement (84.1), le premier intervalle d'ouverture d'étranglement (87.1) est constitué et dans laquelle le corps de soupape secondaire (52) est soulevé avec son joint (59) de la surface d'appui (63) du siège de soupape secondaire (55), dans le sens axial (32), dans une position de fermeture d'arbre de commande secondaire, vers sa position intermédiaire d'arbre de commande secondaire (90.1) dans laquelle le premier corps d'étranglement (83.1) se trouve dans la deuxième position de fermeture de corps d'étranglement (88.2) dans laquelle, entre le premier corps d'étranglement (83.1) et le premier contre-corps d'étranglement (84.1), le premier intervalle de fermeture d'étranglement (89.1) ou le deuxième intervalle de fermeture d'étranglement est constitué, et dans laquelle le corps de soupape secondaire (52) reste soulevé avec son joint (59) de la surface d'appui (63) du siège de soupape secondaire (55) du bloc hydraulique (19),
sur quoi l'arbre de commande secondaire (43), dans la position de fermeture d'arbre de commande secondaire, est également passé dans sa position de fermeture d'arbre de commande secondaire (65) dans laquelle le premier corps d'étranglement (83.1) de l'arbre de commande secondaire (43) se trouve dans sa première position de fermeture de corps d'étranglement (88.1) dans laquelle, entre le premier corps d'étranglement (83.1) et le premier contre-corps d'étranglement (84.1), le premier intervalle de fermeture d'étranglement (89.1) est constitué, et dans laquelle le corps de soupape secondaire (52) repose étroitement avec son joint (59) au niveau de la surface d'appui (63) du siège de soupape secondaire (55) du bloc hydraulique (19), de sorte que la soupape antiretour secondaire (23) est isolée contre un écoulement du fluide d'entraînement,
et/ou
que l'arbre de commande secondaire (43) est passé de sa position d'ouverture d'arbre de commande secondaire (66) dans laquelle le second corps d'étranglement (83.2) se trouve dans la deuxième position d'ouverture de corps d'étranglement (85.2) dans laquelle, entre le second corps d'étranglement (83.2) et le second contre-corps d'étranglement (84.2), le deuxième intervalle d'ouverture d'étranglement (87.2) est constitué et dans laquelle le corps de soupape secondaire (52) est soulevé avec son joint (59) de la surface d'appui (63) du siège de soupape secondaire (55), dans le sens axial (32), dans une ou la position de fermeture d'arbre de commande secondaire, vers sa position intermédiaire d'arbre de commande secondaire (90.1) dans laquelle le second corps d'étranglement (83.2) se trouve dans la quatrième position de fermeture de corps d'étranglement (88.4) dans laquelle, entre le second corps d'étranglement (83.2) et le second contre-corps d'étranglement (84.2), le troisième intervalle de fermeture d'étranglement (89.3) ou le quatrième intervalle de fermeture d'étranglement est constitué, et dans laquelle le corps de soupape secondaire (52) reste soulevé avec son joint (59) de la surface d'appui (63) du siège de soupape secondaire (55) du bloc hydraulique (19),
sur quoi l'arbre de commande secondaire (43), dans la position de fermeture d'arbre de commande secondaire, est également passé de sa position de fermeture d'arbre de commande secondaire (65), dans laquelle le second corps d'étranglement (83.2) de l'arbre de commande secondaire (43) se trouve dans sa deuxième position de fermeture de corps d'étranglement (88.2) dans laquelle, entre le second corps d'étranglement (83.2) et le second contre-corps d'étranglement (84.2), le troisième intervalle de fermeture d'étranglement (89.3) est constitué, et dans laquelle le corps de soupape secondaire (43) repose étroitement avec son joint (59) au niveau de la surface d'appui (63) du siège de soupape secondaire (55) du bloc hydraulique (19), de sorte que la soupape antiretour secondaire (23) est isolée contre un écoulement du fluide d'entraînement.

15. Procédé selon la revendication 14, **caractérisé en ce que**, lors du passage de la de commande secondaire (43) de sa position d'ouverture d'arbre de commande secondaire (66), dans la position de fermeture d'arbre de commande secondaire, vers sa position intermédiaire d'arbre de commande secondaire (90.1), d'abord le premier étrangleur (82.1) mais pas encore le second étrangleur (82.2) est fermé, sur quoi le premier corps d'étranglement (83.1) est d'abord passé de sa première position d'ouverture de corps d'étranglement (85.1), dans la position de fermeture d'arbre de commande secondaire, dans sa seconde position de fermeture de corps d'étranglement (88.2) dans laquelle, entre le premier corps d'étranglement (83.2) et le premier contre-corps d'étranglement (84.2), le premier intervalle de fermeture d'étranglement (89.1) ou le second intervalle de fermeture d'étranglement est constitué, et ensuite seulement le second étrangleur (82.2) est fermé, dans lequel cas le second corps d'étranglement (83.2) est également passé, dans la position de fermeture d'arbre de commande secondaire, dans sa quatrième position de fermeture de corps d'étranglement (88.4) dans laquelle, entre le second corps d'étranglement (83.2) et le second contre-corps d'étranglement (84.2), le troisième intervalle de fermeture d'étranglement (89.3) ou le quatrième intervalle de fermeture d'étranglement est constitué.
